(19) Europäisches Patentamt
European Patent Office
Office européen des brevets

(11) **EP 4 772 480 A1**

(12) **EUROPEAN PATENT APPLICATION**
published in accordance with Art. 153(4) EPC

(43) Date of publication:
**08.07.2026   Bulletin 2026/28**

(21) Application number: **24858793.3**

(22) Date of filing: **19.09.2024**

(51) International Patent Classification (IPC):
**C02F 1/00** (2023.01)        **B01D 36/00** (2006.01)

(52) Cooperative Patent Classification (CPC):
**B01D 36/00; C02F 1/00**

(86) International application number:
**PCT/CN2024/119672**

(87) International publication number:
**WO 2025/045266 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023   CN 202322356914 U
20.09.2023   CN 202311216005
20.09.2023   CN 202311216117
20.09.2023   CN 202322556286 U**

(71) Applicants:
• **Jiangsu Kingclean Intelligent Appliance Co., Ltd.
Suzhou, Jiangsu 215129 (CN)**
• **Kingclean Electric Green
Technology (Suzhou) Co., Ltd.
Suzhou, Jiangsu 215000 (CN)**

• **KingClean Electric Co., Ltd.
Suzhou New District
Suzhou
Jiangsu 215163 (CN)**

(72) Inventors:
• **ZHANG, Lei
Suzhou, Jiangsu 215129 (CN)**
• **WANG, Xueyu
Suzhou, Jiangsu 215129 (CN)**
• **ZHOU, Yu
Suzhou, Jiangsu 215129 (CN)**

(74) Representative: **Wang, Bo
Panovision IP
Ebersberger Straße 3
85570 Markt Schwaben (DE)**

(54) **WATER PURIFIER AND UV STERILISATION MODULE**

(57)      The present disclosure provides a water purifier and a UV sterilization module. The water purifier includes a housing. The water purifier includes a purified water tank detachably disposed on an outer side of the housing. The purified water tank is provided with a purified water tank communication port and a first mounting groove. The purified water tank communication port is configured to communicate with a purified water supply interface of the water purifier, and a bottom wall of the first mounting groove is provided with a first mounting port. The water purifier includes a sterilization unit including a lamp cover, a lamp cover locating assembly, and a sterilization lamp. The lamp cover locating assembly includes a first locating member, which is annular in shape, one or more first sealing rings, and one or more second sealing rings. The lamp cover is located in the first mounting groove, and a head of the lamp cover is exposed into the purified water tank through the first mounting port. The first locating member sleeves an outer peripheral side of the lamp cover. The one or more first sealing rings are sealingly disposed between the first locating member and a side groove wall of the first mounting groove. The one or more second sealing rings are sealingly disposed between the first locating member and the outer peripheral side of the lamp cover. The sterilization lamp is disposed on an outer wall of the housing and is configured to be capable of extending into an inner side of the lamp cover. According to the water purifier of the present disclosure, the sealing reliability of the sterilization assembly is high.

EP 4 772 480 A1

**FIG. 18**

## Description

### CROSS-REFERENCE TO RELATED APPLICATIONS

This application claims priority to Chinese Patent Application No. CN202311216005.3, filed on September 20, 2023, Chinese Patent Application No. CN202311216117.9, filed on September 20, 2023, Chinese Patent Application No. CN202322356914.9, filed on September 20, 2023, and Chinese Patent Application No. CN202322556286.9, filed on September 20, 2023, the contents of which are hereby incorporated by reference.

### TECHNICAL FIELD

The present disclosure generally relates to the field of water purification technology, in particular to a water purifier and a UV sterilization module.

### BACKGROUND

With the improvement of people's living standards, an increasing number of people are pursuing a high-quality lifestyle, and water purifiers are undoubtedly among the top choices. In the water purifiers with external purified water tanks available in the relevant technologies, sterilization components are mostly mounted on the tanks to sterilize the stored water inside. To facilitate the power supply for these sterilization components, they are usually installed through the tank walls, with their sterilizing light exit ends located inside the tanks and their terminals exposed outside the tanks. Although sealing elements such as gaskets are generally installed between the sterilization components and the tank walls for sealing purposes, these sealing elements tend to age over time, which may lead to water leakage at the installation positions of the sterilization components.

A purified water tank is generally arranged inside a water purifier or a water purifying dispenser, which is used for storing purified water processed through purification. The purified water tank is not of a fully sealed structure; a tank cover is usually mounted on its top. Consequently, it is difficult to completely isolate the purified water inside the tank from the air. Bacteria tend to breed in the purified water tank during long-term use, posing a threat to water consumption safety. For sterilization purposes, the conventional method is to suspend a UV lamp module into the purified water tank from the tank cover via a tube or a rope to sterilize the water. This method has the following drawbacks: the tube or rope used to suspend the module into the tank may obstruct the tank cover, resulting in an incomplete seal; besides, excessive and lengthy tubes or wires appear messy and unsightly. In this context, the applicant is committed to developing a split-type UV sterilization module, which can avoid affecting the closure of the tank cover on the purified water tank while maintaining the aesthetic appearance of the tank.

In the water purifiers with an external purified water tank available in the relevant art, a float chamber connected to the purified water tank is usually provided, and a float sensor is disposed inside the float chamber. The water level inside the purified water tank is reflected by the water level inside the float chamber, and the water production process can be initiated when the water level drops below a preset value. However, most water purifiers in the relevant art fail to maintain real-time consistency between the water levels of the purified water tank and the float chamber. Typically, water accumulates or flows back in either the float chamber or the purified water tank, meaning that the water level in the float chamber cannot accurately reflect the water level in the purified water tank, which results in repeated water production of the water purifier, or in a situation where the water production process cannot be activated even when the water level in the purified water tank is low.

The water purifier in the relevant art includes a filter, a communicating vessel, a liquid level box, a purified water tank, a heater, a water pump and other components. During water production, the water filtered by the filter is distributed to the liquid level box and the purified water tank through the communicating vessel. When a user fetches water, the water pump draws water from the liquid level box and the purified water tank to the heater through the communicating vessel, and then the heated water is supplied to the user through the heater. However, during water production, air inside the communicating vessel, the filter and other components can enter subsequent water paths including the heater, causing air to be mixed in the water discharged from the water outlet of the water purifier. When cold water is dispensed, the water flow is unstable and the discharge rate is low; when hot water is dispensed, air mixed in the hot water causes steam sputtering, resulting in poor reliability of water discharge.

### SUMMARY

Accordingly, it is desirable to provide a water purifier including a sterilization assembly with high sealing reliability. The embodiments of the present disclosure provide a water purifier. The water purifier includes a housing. The water purifier includes a purified water tank detachably disposed on an outer side of the housing. The purified water tank is provided with a purified water tank communication port and a first mounting groove. The purified water tank communication port is configured to communicate with a purified water supply interface of the water purifier. A bottom wall of the first mounting groove is provided with a first mounting port. The water purifier includes a sterilization unit. The sterilization unit includes a lamp cover, a lamp cover locating assembly, and a sterilization lamp. The lamp cover locating assembly includes a first locating member, which is annular in shape, one or more first sealing rings, and one or more second sealing rings. The lamp cover is located in the first mounting groove, and a head of the lamp cover is exposed into the purified water tank through the first mounting port. The first locating member sleeves an outer peripheral side of the lamp cover. The one or more first sealing rings are sealingly disposed between the first locating member and a side groove wall of the first mounting groove. The one or more second sealing rings are sealingly disposed between the first locating member and the outer peripheral side of the lamp cover. The sterilization lamp is disposed on an outer wall of the housing, and the sterilization lamp is configured to be capable of extending into an inner side of the lamp cover.

In one or more embodiments, a hardness of the first locating member is greater than a hardness of the one or more first sealing rings and a hardness of the one or more second sealing rings.

In one or more embodiments, the lamp cover locating assembly further includes a sealing member. The sealing member is connected to an end portion of the first locating member facing the purified water tank and abuts against a side of the one or more second sealing rings facing the purified water tank.

In one or more embodiments, the sealing member is provided with a clamping arm, the first locating member is provided with a clamping slot, and the clamping arm and the clamping slot are engaged with each other.

In one or more embodiments, an end portion of the sealing member along an axial direction of the first locating member is provided with a first abutting portion and a second abutting portion, which are annular in shape. The first abutting portion is configured to abut against the one or more second sealing rings. The second abutting portion is configured to abut against an end portion of the lamp cover facing the purified water tank.

In one or more embodiments, a count of the one or more first sealing rings is at least two, and the at least two first sealing rings are arranged along the axial direction of the first locating member; and/or a count of the one or more second sealing rings is at least two, and the at least two second sealing rings are arranged along the axial direction of the first locating member.

In one or more embodiments, an outer peripheral surface of the first locating member is provided with at least one second mounting groove, which are annular in shape, and each of the first sealing rings is disposed in the at least one second mounting groove.

In one or more embodiments, an inner peripheral surface of the first locating member is provided with at least one annular stop portion. The at least one annular stop portion and an inner peripheral side of the first locating member define a mounting space, which is annular and semi-open. The second sealing rings are disposed in the mounting space.

In one or more embodiments, the sterilization lamp includes a sterilization lamp mounting bracket and a lamp body. The sterilization lamp mounting bracket is disposed at a position on the outer wall of the housing corresponding to the first mounting port. The lamp body is disposed at an end portion of the sterilization lamp mounting bracket facing the purified water tank.

In one or more embodiments, the housing is provided with a second mounting port, and the sterilization lamp mounting bracket penetrates through the second mounting port and extends out of the housing.

In one or more embodiments, both the first mounting port and the purified water tank communication port are located between a top and a bottom of the purified water tank, and a setting position of the first mounting port is higher than a setting position of the purified water tank communication port.

In one or more embodiments, the water purifier further includes a filter, an exhaust member, a communicating vessel, and a liquid level box. The exhaust member is provided with a first chamber in communication with atmosphere, and the first chamber communicates with a filter liquid outlet of the filter. The purified water tank and the liquid level box communicate with the atmosphere, and the liquid level box is internally provided with a water level sensor for detecting a water level. The communicating vessel is provided with a communicating vessel inner cavity, and the communicating vessel inner cavity communicates with the purified water tank, the liquid level box, and the first chamber, respectively. Water filtered by the filter is capable of being input into the exhaust member and the communicating vessel in sequence, and flowing into the liquid level box and the purified water tank through the communicating vessel inner cavity.

In one or more embodiments, the exhaust member is disposed on an outer side wall of the liquid level box, and opposing side walls of the exhaust member and the liquid level box are both provided with communication ports that communicate with each other to allow the first chamber to communicate with a liquid level box inner cavity.

In one or more embodiments, the water level sensor is configured as a float sensor, and the water level sensor includes a first float and a second float. In a height direction of the liquid level box inside the liquid level box, a first upper baffle, a first lower baffle, a second upper baffle, and a second lower baffle are provided in sequence. The first float is located between the first upper baffle and the first lower baffle, and the second float is located between the second upper baffle and the second lower baffle. The water level sensor is configured to be capable of detecting a liquid level in the liquid level box. When the first float abuts against the first upper baffle, the liquid level is determined to be at a high liquid level. When the second float abuts against the second lower baffle, the liquid level is determined to be at a low liquid level.

In one or more embodiments, the filter includes a filter housing and a filter body. The filter housing is provided with a filter inner cavity with an open end, and the filter body is disposed in the filter inner cavity. The liquid level box communicates with the filter inner cavity of the filter through a third pipeline.

In one or more embodiments, the liquid level box is provided with a liquid level box communication port. A volume of a purified water tank inner cavity of the purified water tank is greater than a volume of the liquid level box inner cavity of the liquid level box. A minimum cross-sectional area of a first communication channel for communicating the purified water tank communication port with the communicating vessel inner cavity is greater than a minimum cross-sectional area of a second communication channel for communicating the liquid level box communication port with the communicating vessel inner cavity.

In one or more embodiments, a cross-sectional area S1 of the purified water tank inner cavity along a height direction of the water purifier, a minimum cross-sectional area S2 of the first communication channel, a cross-sectional area S3 of the liquid level box inner cavity along the height direction of the water purifier, and a minimum cross-sectional area S4 of the second communication channel satisfy: $S3/S4=K*S1/S2$, where K is a drag coefficient of fluid in the liquid level box communication port. A cross-section of the purified water tank inner cavity and a cross-section of the liquid level box inner cavity remain unchanged along the height direction of the water purifier.

In one or more embodiments, the cross-sectional area S1 of the purified water tank inner cavity along the height direction of the water purifier and the cross-sectional area S3 of the liquid level box inner cavity along the height direction of the water purifier satisfy: $S1 > S3$. A bottom wall of the purified water tank inner cavity is configured to be flush with a bottom wall of the liquid level box inner cavity.

In one or more embodiments, the water purifier further includes a communicating vessel. The communicating vessel is disposed in the housing and provided with a communicating vessel inner cavity communicating with the purified water supply interface in the water purifier. The communicating vessel is provided with a communicating vessel connection tube that communicates with the communicating vessel inner cavity. An inner wall of the communicating vessel connection tube is provided with a sealing ring. Two axial ends of the sealing ring abut against the inner wall of the communicating vessel connection tube. A first sealing section between the two axial ends of the sealing ring and the inner wall of the communicating vessel connection tube define a water storage chamber together. The purified water tank is provided with a purified water tank connection tube. The purified water tank connection tube communicates with the purified water tank inner cavity of the purified water tank and is disposed at a position corresponding to the purified water tank communication port. The purified water tank connection tube is configured to be capable of being inserted into the communicating vessel connection tube to enable communication between the communicating vessel inner cavity and the purified water tank inner cavity; and cause the first sealing section to elastically deform toward a radial outer side of the first sealing section to squeeze water in the water storage chamber into the communicating vessel connection tube; and when disengaging from the communicating vessel connection tube, cause the first sealing section to elastically reset toward a radial inner side of the first sealing section to adsorb water in the communicating vessel connection tube into the water storage chamber.

In one or more embodiments, an inner peripheral surface of the first sealing section is convexly provided with at least two interference fit portions, which are annular in shape. The at least two interference fit portions are arranged at intervals along an axial direction of the sealing rings. The at least two interference fit portions are configured to be in interference fit with the purified water tank connection tube.

In one or more embodiments, a count of the at least two interference fit portions is two, and a support protrusion is provided between regions on an outer peripheral surface of the sealing rings corresponding to the two interference fit portions.

In one or more embodiments, the outer wall of the housing is provided with a supporting member, and the purified water tank is detachably disposed on the supporting member.

Accordingly, it is desirable to provide a water purifier with high water production reliability. The embodiments of the present disclosure provide a water purifier. The water purifier includes a liquid level box configured to be communicated with the atmosphere and provided with a liquid level box communication port. The liquid level box is internally provided with a water level sensor for detecting a water level. The water purifier includes a purified water tank configured to be communicated with the atmosphere and provided with a purified water tank communication port. A volume of a purified water tank inner cavity of the purified water tank is greater than a volume of a liquid level box inner cavity of the liquid level box. The water purifier includes a communicating vessel provided with a communicating vessel inner cavity, the communicating vessel inner cavity communicates with the purified water tank communication port and the liquid level box communication port, respectively, and the communicating vessel is detachably connected to the purified water tank. The water purifier includes a filter configured to be connected to a water source to be purified and communicate with the communicating vessel inner cavity, water filtered by the filter is capable of flowing into the liquid level box and the purified water tank through the communicating vessel inner cavity. The water purifier includes a minimum cross-sectional area of a first communication channel for communicating the purified water tank communication port with the communicating vessel inner cavity is greater than a minimum cross-sectional area of a second communication channel for communicating the liquid level box communication port with the communicating vessel inner cavity.

In one or more embodiments, a cross-sectional area S1 of the purified water tank inner cavity along a height direction of the water purifier, a minimum cross-sectional area S2 of the first communication channel, a cross-sectional area S3 of the liquid level box inner cavity along the height direction of the water purifier, and a minimum cross-sectional area S4 of the second communication channel satisfy: S3/S4=K*S1/S2, where K is a drag coefficient of fluid in the liquid level box communication port. A cross-section of the purified water tank inner cavity and a cross-section of the liquid level box inner cavity remain unchanged along the height direction of the water purifier.

In one or more embodiments, the communicating vessel is provided with a second communication port and a first communication port. The second communication port is connected to the liquid level box communication port. The first communication port is connected to the purified water tank communication port. The first communication port and the purified water tank communication port are respectively provided with a communicating vessel check valve and a purified water tank check valve. A cross-sectional area of a valve core of the communicating vessel check valve is less than or equal to a cross-sectional area of a valve core of the purified water tank check valve.

In one or more embodiments, a cross-sectional area of the first communication port is greater than a cross-sectional area of the second communication port.

In one or more embodiments, the communicating vessel is provided with a communicating vessel connection tube that communicates with the communicating vessel inner cavity, and the communicating vessel connection tube corresponds to a setting position of the first communication port. The purified water tank is provided with a purified water tank connection tube, the purified water tank connection tube corresponds to a setting position of the purified water tank communication port. The purified water tank connection tube communicates with a purified water tank inner cavity of the purified water tank. The purified water tank connection tube is configured to be partially inserted into the communicating vessel connection tube to enable communication between the communicating vessel inner cavity and the purified water tank inner cavity when supported on a supporting member. A partial tube section of the communicating vessel connection tube not inserted by the purified water tank connection tube and the purified water tank connection tube define the first communication channel together. A position with the minimum cross-sectional area of the first communication channel is located on the partial tube section of the communicating vessel connection tube not inserted by the purified water tank connection tube.

In one or more embodiments, the communicating vessel is provided with a communicating vessel insertion tube that communicates with the communicating vessel inner cavity. The communicating vessel insertion tube corresponds to a setting position of the second communication port. The liquid level box is provided with a liquid level box insertion tube. The liquid level box insertion tube communicates with the liquid level box inner cavity. The liquid level box insertion tube is inserted into the communicating vessel insertion tube. A partial tube section of the communicating vessel insertion tube not inserted by the liquid level box insertion tube and the liquid level box insertion tube define the second communication channel together, and a position with the minimum cross-sectional area of the second communication channel is located inside the liquid level box insertion tube.

In one or more embodiments, the communicating vessel is provided with a communicating vessel liquid inlet that communicates with the communicating vessel inner cavity. The communicating vessel liquid inlet communicates with a filter liquid outlet of the filter. A diameter of the communicating vessel liquid inlet is greater than 6 mm.

In one or more embodiments, a cross-sectional area of the liquid level box communication port is greater than or equal to 4.5 mm$^2$; and/or a cross-sectional area of the purified water tank communication port is greater than 40 mm$^2$.

In one or more embodiments, a cross-sectional area S1 of the purified water tank inner cavity along a height direction of the water purifier and a cross-sectional area S3 of the liquid level box inner cavity along the height direction of the water purifier satisfy: S1 > S3. A bottom wall of the purified water tank inner cavity is configured to be flush with a bottom wall of the liquid level box inner cavity.

In one or more embodiments, the purified water tank includes a purified water tank body and a water tank cover that is openably and closably covered on the purified water tank body. A gap is provided between the purified water tank body and the water tank cover to allow the purified water tank to communicate with the atmosphere.

In one or more embodiments, a top of the liquid level box is provided with an air outlet to allow the liquid level box to communicate with the atmosphere.

In one or more embodiments, the filter includes a filter housing and a filter body, the filter housing is provided with a filter inner cavity with an open end, and the filter body is disposed in the filter inner cavity. The air outlet of the liquid level box communicates with the filter inner cavity of the filter through a third pipeline.

In one or more embodiments, the water purifier further includes a water pump, a heater, and a water vapor separator. The water pump communicates with the communicating vessel and the heater, respectively, and is used for pumping water from the liquid level box and the purified water tank to the heater through the communicating vessel. The water vapor separator communicates with the heater, and is used for performing water vapor separation on water heated by the heater.

In one or more embodiments, the water vapor separator includes a water vapor separator air outlet and a water vapor separator water outlet, the water vapor separator air outlet communicates with the third pipeline through a fourth pipeline. The water vapor separator water outlet forms a water taking port of the water purifier.

In one or more embodiments, the water purifier further includes a water collecting box and a housing, and the filter, the communicating vessel, the liquid level box, the water pump, and the heater are all disposed in the housing. The water collecting box is detachably disposed on an outer side of the housing, a top wall of the water collecting box is provided with a water collecting opening communicating to an interior of the water collecting box, and the purified water tank is supported on the top wall of the water collecting box.

In one or more embodiments, the water vapor separator includes a water vapor separator water outlet, and the water vapor separator water outlet forms the water taking port of the water purifier. A portion of the water vapor separator penetrates through the housing and extends to an outer side of the housing, and the water vapor separator water outlet is located on the portion of the water vapor separator that extends to the outer side of the housing.

In one or more embodiments, the water purifier further includes a booster pump, and the booster pump is configured to pump water to be purified into the filter body.

In one or more embodiments, the water purifier further includes an exhaust member, the exhaust member is provided with a first chamber communicating with the atmosphere, the first chamber communicates with the filter liquid outlet of the filter, and the first chamber further communicates with the communicating vessel inner cavity to allow the filter to communicate with the communicating vessel inner cavity.

In one or more embodiments, the exhaust member is disposed on an outer side wall of the liquid level box, and opposing side walls of the exhaust member and the liquid level box are provided with communication ports that communicate with each other to allow the first chamber to communicate with the liquid level box inner cavity.

In one or more embodiments, the exhaust member is provided with an exhaust member liquid inlet and an exhaust member liquid outlet. The communicating vessel is provided with a communicating vessel liquid inlet that communicates with the communicating vessel inner cavity, the exhaust member liquid inlet communicates with the filter liquid outlet through a first pipeline. The exhaust member liquid outlet communicates with the communicating vessel liquid inlet of the communicating vessel through a second pipeline. Setting heights of the communication ports on the exhaust member and the liquid level box relative to a bottom wall of the liquid level box are higher than a setting height of the exhaust member liquid inlet.

In one or more embodiments, the communicating vessel is provided with an exhaust port that communicates with the communicating vessel inner cavity.

In one or more embodiments, the water level sensor is configured as a float sensor, and the water level sensor includes a first float and a second float. In a height direction of the liquid level box inside the liquid level box, a first upper baffle, a first lower baffle, a second upper baffle, and a second lower baffle are provided in sequence, the first float is located between the first upper baffle and the first lower baffle, and the second float is located between the second upper baffle and the second lower baffle. The water level sensor is configured to be capable of detecting a liquid level inside the liquid level box. When the first float abuts against the first upper baffle, it is determined that the liquid level is at a high liquid level, and when the second float abuts against the second lower baffle, it is determined that the liquid level is at a low liquid level.

In one or more embodiments, the water purifier further includes a controller, a booster pump, a water pump, and a heater. The booster pump is configured to pump water to be purified into the filter, and the water pump is configured to pump water from the liquid level box and the purified water tank to the heater through the communicating vessel. The controller is electrically connected to the water level sensor and the booster pump, the controller is configured to control the booster pump to stop operating when the liquid level inside the liquid level box is at the high liquid level, and control the booster pump to start operating when the liquid level inside the liquid level box is lower than the high liquid level. The controller is further configured to control the water pump to stop operating when the liquid level inside the liquid level box is at the low liquid level to stop water output.

In one or more embodiments, the water purifier further includes a housing and a sterilization unit. The housing is hollow inside and an outer wall of the housing is provided with a supporting member. The purified water tank is detachably disposed on the supporting member, the purified water tank is further provided with a first mounting groove, and a bottom wall of the first mounting groove is provided with a first mounting port.

The sterilization unit includes a lamp cover, a lamp cover locating assembly, and a sterilization lamp. The lamp cover locating assembly includes a first locating member, which is annular in shape, one or more first sealing rings, and one or more second sealing rings. The lamp cover is located in the first mounting groove, a head of the lamp cover is exposed into the purified water tank through the first mounting port, the first locating member sleeves an outer peripheral side of the lamp cover, the one or more first sealing ring are sealingly disposed between the first locating member and a side groove wall of the first mounting groove, and the one or more second sealing rings are sealingly disposed between the first locating member and the outer peripheral side of the lamp cover. The sterilization lamp is disposed on the outer wall of the housing, and when the purified water tank is supported on the supporting member, the sterilization lamp extends into an inner side of the lamp cover.

In one or more embodiments, the lamp cover locating assembly further includes a sealing member, the sealing member is connected to an end portion of the first locating member facing the purified water tank, and abuts against a side of the one or more second sealing rings facing the purified water tank.

In one or more embodiments, a count of the one or more first sealing rings is at least two, and the at least two first sealing rings are arranged along an axial direction of the first locating member; and/or a count of the one or more second sealing rings is at least two, and the at least two second sealing rings are arranged along the axial direction of the first locating member.

In one or more embodiments, the communicating vessel is disposed on the housing, the communicating vessel is provided with a communicating vessel connection tube that communicates with the communicating vessel inner cavity. An inner wall of the communicating vessel connection tube is provided with a sealing ring, two axial ends of the sealing ring abut against the inner wall of the communicating vessel connection tube, and a first sealing section between the two axial ends of the sealing ring and the inner wall of the communicating vessel connection tube define a water storage chamber together. The purified water tank is provided with a purified water tank connection tube, the purified water tank connection tube corresponds to a setting position of the purified water tank communication port, and the purified water tank connection tube communicates with the purified water tank inner cavity of the purified water tank. The purified water tank connection tube is configured to be inserted into the communicating vessel connection tube when supported on the supporting member to enable communication between the communicating vessel inner cavity and the purified water tank inner cavity; and cause the first sealing section to elastically deform toward an outer side in a radial direction of the first sealing section to squeeze water in the water storage chamber into the communicating vessel connection tube; and when disengaged from the communicating vessel connection tube, cause the first sealing section to elastically reset toward an inner side in the radial direction of the first sealing section to adsorb water in the communicating vessel connection tube into the water storage chamber.

In one or more embodiments, an inner peripheral surface of the first sealing section is convexly provided with at least two interference fit portions, which are annular in shape. The at least two interference fit portions are arranged along an axial direction of the sealing ring at intervals, and the at least two interference fit portions are used for interference fit with the purified water tank connection tube.

In one or more embodiments, a count of the at least two interference fit portions is two, and an outer peripheral surface of the sealing ring is provided with a support protrusion between regions corresponding to the two interference fit portions.

Accordingly, it is desirable to provide a water purifier with high water output reliability. The embodiments of the present disclosure provide a water purifier. The water purifier includes a filter, an exhaust member, a communicating vessel, a purified water tank, and a liquid level box. The exhaust member is provided with a first chamber communicating with the atmosphere, and the first chamber communicates with a filter liquid outlet of the filter. The purified water tank and the liquid level box are both in communication with the atmosphere, and a water level sensor configured to detect a water level is disposed in the liquid level box. The communicating vessel is provided with a communicating vessel inner cavity, and the communicating vessel inner cavity is in communication with the purified water tank, the liquid level box, and the first chamber, respectively.

In one or more embodiments, water filtered by the filter is capable of being input into the exhaust member and the communicating vessel in sequence, and flowing into the liquid level box and the purified water tank through the communicating vessel inner cavity.

In one or more embodiments, an air outlet in communication with the atmosphere is provided on the liquid level box. The exhaust member is disposed on the liquid level box, and the first chamber is in communication with a liquid level box inner cavity of the liquid level box, so as to be in communication with the atmosphere through the air outlet.

In one or more embodiments, the exhaust member is disposed on an outer side wall of the liquid level box, and opposing side walls of the exhaust member and the liquid level box facing each other are provided with communication ports that are in communication with each other, so that the first chamber is in communication with the liquid level box inner cavity.

In one or more embodiments, an exhaust member liquid inlet and an exhaust member liquid outlet are provided on the exhaust member. The communicating vessel is provided with a communicating vessel liquid inlet in communication with the communicating vessel inner cavity. The exhaust member liquid inlet is in communication with a filter liquid outlet through a first pipeline, and the exhaust member liquid outlet is in communication with the communicating vessel liquid inlet of the communicating vessel through a second pipeline. Setting heights of the communication ports on the exhaust member and the liquid level box relative to a bottom wall of the liquid level box are higher than a setting height of the exhaust member liquid inlet.

In one or more embodiments, a diameter of the communicating vessel liquid inlet is greater than 6 mm, and/or an inner diameter of the second pipeline is greater than 6 mm.

In one or more embodiments, a liquid level box communication port is provided on the liquid level box, and a water tank communication port is provided on the purified water tank. The communicating vessel is further provided with a second communication port and a first communication port. The second communication port is connected to the liquid level box communication port, and the first communication port is connected to the purified water tank communication port.

In one or more embodiments, the communicating vessel is further provided with a communicating vessel liquid outlet, and the communicating vessel liquid outlet is in communication with a water taking port of the water purifier. A setting height of the liquid level box communication port relative to a bottom of the water purifier is higher than a setting height of the communicating vessel liquid outlet.

In one or more embodiments, an extension tube is provided on the communicating vessel, and the extension tube penetrates through a wall portion of the communicating vessel from an outer side of the communicating vessel and extends to a bottom position of the communicating vessel inner cavity.

In one or more embodiments, a setting height of the communicating vessel liquid inlet relative to the bottom of the water purifier is higher than setting heights of the liquid level box communication port, the purified water tank communication port, and the communicating vessel liquid outlet.

In one or more embodiments, a minimum cross-sectional area of a first communication channel for communicating the purified water tank communication port with the communicating vessel inner cavity is greater than a minimum cross-sectional area of a second communication channel for communicating the liquid level box communication port with the communicating vessel inner cavity.

In one or more embodiments, a cross-sectional area of the first communication port is greater than a cross-sectional area of the second communication port.

In one or more embodiments, a cross-sectional area of the liquid level box communication port is greater than or equal to 4.5 mm$^2$; and/or a cross-sectional area of the purified water tank communication port is greater than 40 mm$^2$.

In one or more embodiments, the water level sensor is configured as a float sensor, and the water level sensor includes a first float and a second float. In a height direction of the liquid level box inside the liquid level box, a first upper baffle, a first lower baffle, a second upper baffle, and a second lower baffle are provided in sequence, the first float is located between the first upper baffle and the first lower baffle, and the second float is located between the second upper baffle and the second lower baffle. The water level sensor is configured to be capable of detecting a liquid level in the liquid level box. When the first float abuts the first upper baffle, it is determined that the liquid level is at a high liquid level. When the second float abuts the second lower baffle, it is determined that the liquid level is at a low liquid level.

In one or more embodiments, the water purifier further includes a controller, a booster pump, a water pump, and a heater. The booster pump is configured to pump water to be purified into the filter, and the water pump is configured to pump water from the liquid level box and the purified water tank to the heater through the communicating vessel. The controller is electrically connected to the water level sensor and the booster pump. The controller is configured to control the booster pump to stop operating when the liquid level in the liquid level box is at the high liquid level, and control the booster pump to start operating when the liquid level in the liquid level box is below the high liquid level. The controller is further configured to control the water pump to stop operating when the liquid level in the liquid level box is at the low liquid level to stop water output.

In one or more embodiments, the filter includes a filter housing and a filter body, the filter housing is provided with a filter inner cavity with an open end, and the filter body is disposed in the filter inner cavity. The liquid level box is in communication with the filter inner cavity of the filter through a third pipeline.

In one or more embodiments, an air outlet in communication with the atmosphere is provided on the liquid level box, and a filter housing air inlet in communication with the filter inner cavity is provided on the filter housing. Two ends of the third pipeline are respectively connected to the air outlet and the filter housing air inlet.

In one or more embodiments, the water purifier further includes a water pump, a heater, and a water vapor separator. The water pump is in communication with the communicating vessel and the heater, respectively, and is used for pumping water from the liquid level box and the purified water tank to the heater through the communicating vessel. The water vapor separator is in communication with the heater, and is used for performing water vapor separation on water heated by the heater.

In one or more embodiments, the water vapor separator includes a water vapor separator air outlet and a water vapor separator water outlet. The water vapor separator air outlet is in communication with the third pipeline through a fourth pipeline, and the water vapor separator water outlet forms a water taking port of the water purifier.

In one or more embodiments, the water purifier further includes a water collecting box and a housing, the filter, the exhaust member, the communicating vessel, the liquid level box, the water pump, and the heater are all disposed in the housing.

In one or more embodiments, the water collecting box is detachably disposed on an outer side of the housing. A top wall of the water collecting box is provided with a water collecting opening communicating to an interior of the water collecting box, and the purified water tank is supported on the top wall of the water collecting box.

In one or more embodiments, the water vapor separator includes a water vapor separator water outlet, and the water vapor separator water outlet forms the water taking port of the water purifier. A portion of the water vapor separator penetrates through the housing and extends to an outer side of the housing, and the water vapor separator water outlet is located on the portion of the water vapor separator that extends to the outer side of the housing.

In one or more embodiments, the water purifier further includes a booster pump, and the booster pump is configured to pump water to be purified into the filter body.

In one or more embodiments, the communicating vessel inner cavity is in communication with the filter liquid outlet of the filter. An exhaust port in communication with the communicating vessel inner cavity is provided at a top of the communicating vessel, and the exhaust port is in communication with the atmosphere.

In one or more embodiments, the communicating vessel is provided with a communicating vessel liquid inlet in communication with the communicating vessel inner cavity. The filter liquid outlet of the filter is in communication with the communicating vessel liquid inlet through a pipeline.

In one or more embodiments, the water purifier further includes a housing and a sterilization unit. The housing is hollow inside and an outer wall of the housing is provided with a supporting member. The purified water tank is detachably disposed on the supporting member, the purified water tank is provided with a water tank communication port and a first mounting groove. The purified water tank communication port is used for communicating with a purified water supply interface of the water purifier, and a bottom wall of the first mounting groove is provided with a first mounting port. The sterilization unit includes a lamp cover, a lamp cover locating assembly, and a sterilization lamp. The lamp cover locating assembly includes a first locating member, which is annular in shape, one or more first sealing rings, and one or more second sealing rings. The lamp cover is located in the first mounting groove, and a head of the lamp cover is exposed into the purified water tank through the first mounting port. The first locating member sleeves an outer peripheral side of the lamp cover, the one or more first sealing rings are sealingly disposed between the first locating member and a side groove wall of the first mounting groove, and the one or more second sealing rings are sealingly disposed between the first locating member and the outer peripheral side of the lamp cover. The sterilization lamp is provided on the outer wall of the housing. When the purified water tank is supported on the supporting member, the sterilization lamp extends into an inner side of the lamp cover.

In one or more embodiments, the lamp cover locating assembly further includes a sealing member. The sealing member is connected to an end portion of the first locating member facing the purified water tank, and abuts against a side of the one or more second sealing rings facing the purified water tank.

In one or more embodiments, a count of the one or more first sealing rings is at least two, and the at least two first sealing rings are arranged along an axial direction of the first locating member; and/or a count of the one or more second sealing rings is at least two, and the at least two second sealing rings are arranged along the axial direction of the first locating member.

In one or more embodiments, the communicating vessel is provided on the housing, the communicating vessel is provided with a communicating vessel connection tube in communication with the communicating vessel inner cavity. A sealing ring is provided on an inner wall of the communicating vessel connection tube, two axial ends of the sealing ring abut an inner wall of the communicating vessel connection tube. A first sealing section between the two axial ends of the sealing ring and the inner wall of the communicating vessel connection tube define a water storage chamber together. The purified water tank is provided with a purified water tank connection tube, and the purified water tank connection tube is in communication with a purified water tank inner cavity of the purified water tank. The purified water tank connection tube is configured to be capable of being inserted into the communicating vessel connection tube when supported on the supporting member to enable communication between the communicating vessel inner cavity and the purified water tank inner cavity; and cause the first sealing section to elastically deform toward an outer side in a radial direction of the first sealing section, so as to squeeze water in the water storage chamber into the communicating vessel connection tube; and cause the first sealing section to elastically reset toward an inner side in the radial direction of the first sealing section when being disengaged from the communicating vessel connection tube, so as to adsorb water in the communicating vessel connection tube into the water storage chamber.

In one or more embodiments, an inner peripheral surface of the first sealing section is convexly provided at least two interference fit portions, which are annular in shape. The at least two interference fit portions are arranged along an axial direction of the sealing ring at intervals. The at least two interference fit portions are used for interference fit with the purified water tank connection tube.

In one or more embodiments, a count of the at least two interference fit portions is two, and a support protrusion is provided on an outer peripheral surface of the sealing ring between regions corresponding to the two interference fit portions.

The objective of the present disclosure is to achieve the effect of not affecting mounting of the water tank cover on the purified water tank and not affecting the aesthetic appearance of the purified water tank.

In order to achieve the objective, the present disclosure adopts the following technical solution.

The embodiments of the present disclosure provide a split-type UV sterilization module. The split-type UV sterilization module includes a lamp cover module and a sterilization module. The lamp cover module includes a fixing ring, a transparent outer cover, a bottom cover, a first sealing ring and a second sealing ring. The fixing ring sleeves an outer side surface of the transparent outer cover, the bottom cover is disposed on a lower end between the fixing ring and the transparent outer cover. The first sealing ring is fixedly disposed between the fixing ring and the transparent outer cover, and the second sealing ring is located on an outer side surface of the fixing ring. The sterilization module includes a UV lamp and a fixing base, the UV lamp is fixedly disposed on the fixing base and the UV lamp extends into an interior of the transparent outer cover.

In one or more embodiments, a material of the transparent outer cover is quartz glass.

In one or more embodiments, a side surface of the fixing ring is provided with a buckle slot, an outer side of the bottom cover is fixedly provided with a clamping block, and the clamping block is clamped in the buckle slot.

In one or more embodiments, an outer side surface of the fixing ring is circumferentially provided with a sealing groove, and the second sealing ring is located in the sealing groove.

In one or more embodiments, the sterilization module further includes an inner cover and an inner silicone base. The inner cover is fixedly disposed on the fixing base, an end of the inner cover close to the fixing base is provided with an opening. The UV lamp is located inside the inner cover, and the inner silicone base is fixedly disposed at the opening.

In one or more embodiments, the sterilization module further includes a lead wire. The lead wire penetrates through the fixing base and the inner silicone base in sequence, and is electrically connected to the UV lamp.

In one or more embodiments, an interior of the fixing base is filled with resin.

In one or more embodiments, the fixing base is fixedly provided with a hanging lug, and the hanging lug is provided with a through hole.

The beneficial effects of the present disclosure are as follows. The purified water tank of the present disclosure is detachably disposed on the supporting member on the outer wall of the housing. This allows a user to take the purified water tank at any time according to requirements. The first locating member sleeves the outer peripheral side of the lamp cover. The one or more first sealing rings are sealingly disposed between the first locating member and the side groove wall of the first mounting groove. The one or more second sealing rings are sealingly disposed between the first locating member and the outer peripheral side of the lamp cover. In this way, the lamp cover may be mounted in the first mounting groove. The head of the lamp cover is exposed into the purified water tank through the first mounting port, and the sterilization lamp extends into the inner side of the lamp cover when the purified water tank is supported on the supporting member. Accordingly, when the purified water tank is supported on the supporting member, light emitted by the sterilization lamp located on the inner side of the lamp cover irradiates through the lamp cover into the purified water tank to sterilize water stored in the purified water tank. In addition, the lamp cover locating assembly of the present disclosure includes the first locating member, the one or more first sealing rings disposed on the outer side of the first locating member, and the one or more second sealing rings disposed on the inner side of the first locating member. The first locating member serves as a support skeleton. The one or more first sealing rings and the one or more second sealing rings mainly serve a deformation sealing function. Compared with related technologies that use only a sealing ring with a relatively large radial thickness of the entire sealing ring, radial thicknesses of the first sealing rings and the second sealing rings that undergo deformation are smaller, and aging degree and aging speed of the first sealing rings and the second sealing rings are reduced, thereby improving sealing reliability. As the usage time increases, the possibility of leakage decreases.

When the split-type UV sterilization module of the present disclosure is mounted on the purified water tank, a mounting hole is first drilled at a corresponding position on the purified water tank. The lamp cover module fixedly penetrates through the mounting hole on the purified water tank. Sealing between the fixing ring and the purified water tank is achieved through the second sealing ring, and sealing between the fixing ring and the outer cover is achieved through the first sealing ring. The UV lamp is then extended into the interior of the outer cover. The fixing base is fixedly connected to a structure outside the purified water tank. When the UV lamp operates, ultraviolet light emitted by the UV lamp passes through the outer cover and irradiates into the interior of the purified water tank, achieving the sterilization effect on water in the purified water tank. The lamp cover module of the present disclosure is directly embedded on the purified water tank. As a result, the lamp cover module does not have any influence on the water tank cover on the purified water tank, or its mounting on the purified water tank. Besides, the fixing base is disposed on the exterior of the purified water tank, the lead wire is arranged from the exterior of the purified water tank. This may not affect the aesthetic appearance of the purified water tank. Compared with traditional technologies where excessive and long tubes or wires are suspended into the purified water tank, the present disclosure achieves the purpose of not affecting the aesthetic appearance of the purified water tank.

In the present disclosure, the interior of the filter housing, i.e., the filter inner cavity, is in communication with the atmosphere. The air outlet communicates with the interior of the filter housing of the filter, so that the liquid level box is in communication with the atmosphere. In addition, the purified water tank is in communication with the atmosphere. Therefore, during a process where the water purifier pumps water to the liquid level box and the purified water tank through the communicating vessel, or during a process where water filtered by the filter enters the liquid level box and the purified water tank through the communicating vessel, according to the principle of communicating vessels, the water level inside the liquid level box and the water level inside the purified water tank may be maintained in a substantially equal state, so that the water level inside the liquid level box can more accurately reflect the water level inside the purified water tank. In the present disclosure, by making the minimum cross-sectional area of the first channel P greater than the minimum cross-sectional area of the second channel Q, a water inflow/outflow volume per unit time of the purified water tank becomes greater than a water inflow/outflow volume per unit time of the liquid level box. That is, the water outflow speed of the purified water tank with a larger volume is made greater than the water outflow speed of the liquid level box with a smaller volume. This design can compensate for a temporary liquid level height difference caused by the volume difference between the purified water tank and the liquid level box. Therefore, during use of the water purifier, the liquid levels inside the purified water tank and the liquid level box remain consistent in real time. The water level detected by a water level detector inside the liquid level box can always truly reflect the water level inside the purified water tank, thereby avoiding repeated water production.

In the present disclosure, by providing the exhaust member, air in the communicating vessel during initial water production and air entering from the filter may be discharged through the exhaust member. In other words, water filtered from the filter is directly subjected to air exhausting through the exhaust member, and an amount of air entering the communicating vessel is reduced, which solves the problem of vapor sputtering with hot water, and addresses problems of unstable water form at the water taking port of the water purifier and a relatively slow water output speed, thereby further facilitating smooth water flow.

BRIEF DESCRIPTION OF THE DRAWINGS

FIG. 1 is a schematic diagram illustrating a structure of a water purifier according to some embodiments of the present disclosure;

FIG. 2 is a schematic diagram illustrating an exploded structure of a water purifier according to some embodiments of the present disclosure;

FIG. 3 is a schematic diagram illustrating an exploded structure of a water purifier from another perspective according to some embodiments of the present disclosure;

FIG. 4 is a cross-sectional view of a liquid level box of a water purifier according to some embodiments of the present disclosure;

FIG. 5 is a cross-sectional view of a liquid level box of a water purifier from another perspective according to some embodiments of the present disclosure;

FIG. 6 is a schematic diagram illustrating a structure of a filter of a water purifier according to some embodiments of the present disclosure;

FIG. 7 is a schematic cross-sectional view of a water purifier according to some embodiments of the present disclosure;

FIG. 8 is a schematic diagram illustrating another structure of a communicating vessel of a water purifier according to some embodiments of the present disclosure;

FIG. 9 is a schematic diagram illustrating a structure of a first communication port being mated with a purified water tank communication port of a water purifier according to some embodiments of the present disclosure;

FIG. 10 is a schematic diagram illustrating a cross-sectional structure of a first communication port being separated from a purified water tank communication port of a water purifier according to some embodiments of the present disclosure;

FIG. 11 is a partial enlarged view of a region U in FIG. 10;

FIG. 12 is a schematic diagram illustrating a cross-sectional structure of a first communication port being mated with a purified water tank communication port of a water purifier according to some embodiments of the present disclosure;

FIG. 13 is a partial enlarged view of a region V in FIG. 12;

FIG. 14 is a schematic diagram illustrating a structure of a sealing ring being mated with a communicating vessel connection tube of a water purifier according to some embodiments of the present disclosure;

FIG. 15 is a schematic diagram illustrating a structure of a supporting member being connected to a housing of a water purifier according to some embodiments of the present disclosure;

FIG. 16 is a cross-sectional view of a purified water tank of a water purifier according to some embodiments of the present disclosure;

FIG. 17 is a cross-sectional view of a purified water tank of a water purifier from another perspective according to some embodiments of the present disclosure;

FIG. 18 is a partial enlarged view of a region X in FIG. 17;

FIG. 19 is a schematic diagram illustrating an exploded structure of a sterilization unit of a water purifier according to some embodiments of the present disclosure;

FIG. 20 is a cross-sectional view illustrating another structure of a purified water tank of a water purifier according to some embodiments of the present disclosure;

FIG. 21 is a cross-sectional view illustrating another structure of a purified water tank of a water purifier from another perspective according to some embodiments of the present disclosure;

FIG. 22 is a partial enlarged view of a region Y in FIG. 21;

FIG. 23 is a schematic diagram illustrating a structure of a water vapor separator according to some embodiments of the present disclosure;

FIG. 24a is a schematic diagram illustrating a cross-sectional structure of a water vapor separator according to some embodiments of the present disclosure;

FIG. 24b is a schematic diagram illustrating a structure of a water purifier from another perspective according to some embodiments of the present disclosure;

FIG. 25 is a partial enlarged view of a region Z in FIG. 24a;

FIG. 26 is a schematic diagram illustrating a structure of a water vapor separator from another perspective according to some embodiments of the present disclosure;

FIG. 27 is a partial cross-sectional view of a water vapor separator according to some embodiments of the present disclosure;

FIG. 28 is a cross-sectional view of a water vapor separator from another perspective according to some embodiments of the present disclosure;

FIG. 29 is a schematic diagram illustrating an overall structure of a split-type UV sterilization module according to some embodiments of the present disclosure;

FIG. 30 is a cross-sectional view illustrating an overall structure of a split-type UV sterilization module according to some embodiments of the present disclosure;

FIG. 31 is a schematic diagram illustrating structures of a fixing ring, an outer cover, and a bottom cover of a split-type UV sterilization module according to some embodiments of the present disclosure;

## DETAILED DESCRIPTION

To make the above objectives, features, and advantages of the present disclosure more apparent and easier to understand, the detailed description of the specific embodiments of the present disclosure is provided below with reference to the accompanying drawings. Many specific details are set forth in the following description to facilitate a full understanding of the present disclosure. However, the present disclosure may be implemented in many other ways different from those described herein. Persons skilled in the art may make similar improvements without departing from the spirit of the present disclosure. Therefore, the present disclosure is not limited by the specific embodiments disclosed below. In the description of the present disclosure, the terms "first" and "second" are used for descriptive purposes only and are not to be construed as indicating or implying relative importance or implicitly indicating the quantity of the indicated technical features. Thus, features defined with "first" and "second" may explicitly or implicitly include at least one such feature. In the description of the present disclosure, the meaning of "a plurality of" is at least two, e.g., two, three, etc., unless explicitly and specifically defined otherwise. In the present disclosure, unless otherwise explicitly specified and defined, terms such as "mount", "connect", "couple", and "fix" should be interpreted broadly. For example, a connection may be a fixed connection, a detachable connection, or an integral connection. A connection may be a mechanical connection, an electrical connection, or a direct connection. A connection may be an indirect connection through an intermediate medium, or an internal communication between two elements or an interaction relationship between two elements, unless explicitly defined otherwise. Those skilled in the art may understand the specific meanings of the above terms in the present disclosure according to specific situations.

A water purifier 100 according to some embodiments of the present disclosure is described below with reference to the accompanying drawings.

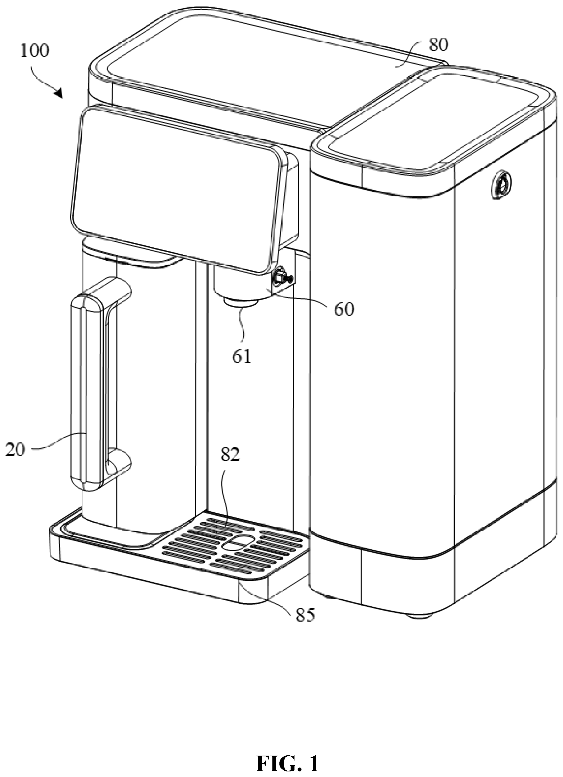

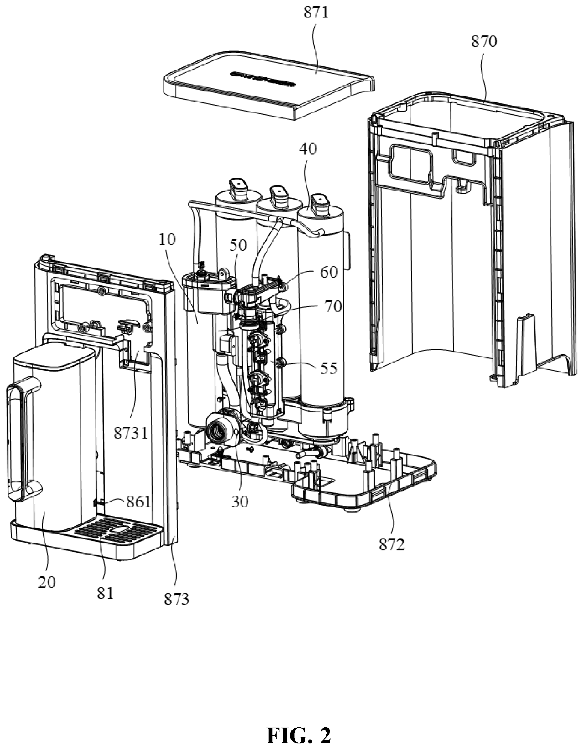

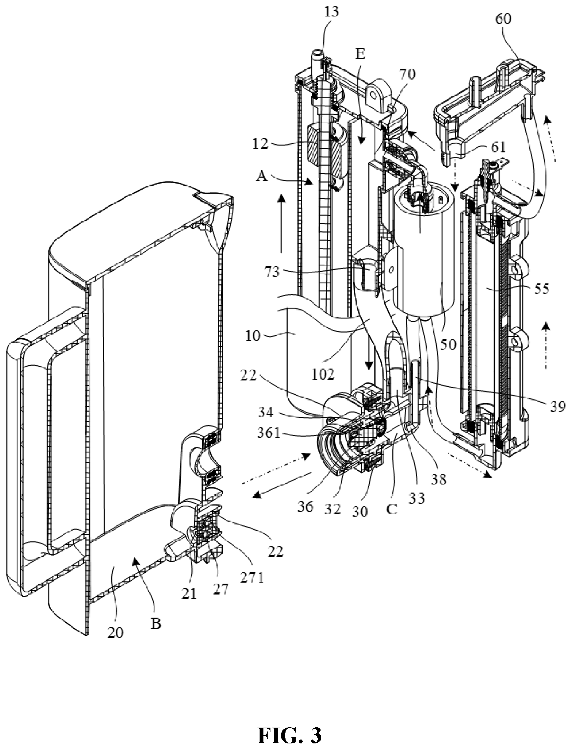

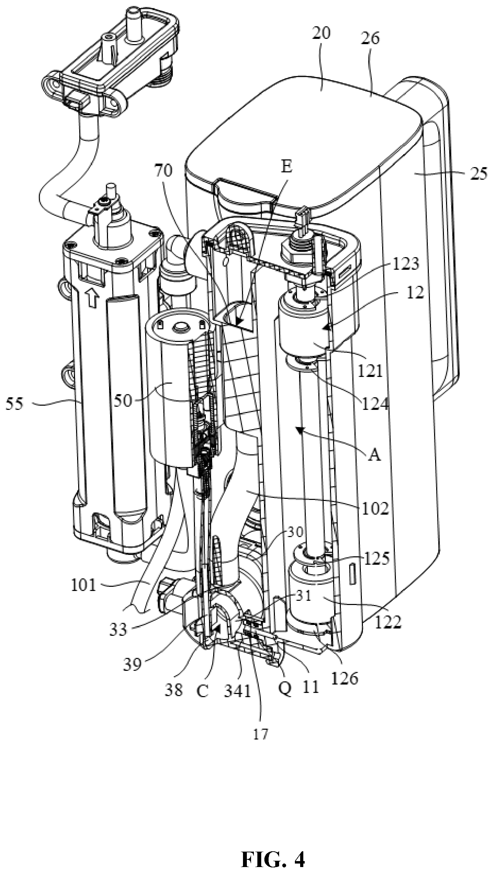

FIG. 1 is a schematic diagram illustrating a structure of a water purifier 100 according to some embodiments of the present disclosure. FIG. 2 is a schematic diagram illustrating an exploded structure of the water purifier 100 according to some embodiments of the present disclosure. FIG. 3 is a schematic diagram illustrating an exploded structure of the water purifier 100 from another perspective according to some embodiments of the present disclosure. FIG. 4 is a cross-sectional view of a liquid level box 10 of the water purifier 100 according to some embodiments of the present disclosure.

As shown in FIG. 1, FIG. 2, and FIG. 3, in some embodiments of the present disclosure, the water purifier 100 is provided and configured to purify water from a water source to be filtered.

The water purifier 100 includes: a housing 80, a filter 40, a communicating vessel 30, a purified water tank 20, a liquid level box 10, a water pump 50, a heater 55, and a water vapor separator 60. The filter 40 communicates with a communicating vessel inner cavity C of the communicating vessel 30. The communicating vessel 30 communicates with the purified water tank 20 and the liquid level box 10, respectively. The water pump 50 communicates with the communicating vessel inner cavity C of the communicating vessel 30 and the heater 55, respectively. Thus, the water pump 50 may pump water from the liquid level box 10 and the purified water tank 20 to the heater 55 through the communicating vessel 30. The heater 55 communicates with the water vapor separator 60. It should be noted that the communicating vessel 30 is detachably connected to the purified water tank 20.

With such a configuration, when a user takes water, the water pump 50 pumps water from the communicating vessel 30. The water from the liquid level box 10 and the purified water tank 20 simultaneously flows into the water pump 50 through the communicating vessel 30. The water from the water pump 50 flows into the heater 55. After being heated by the heater 55, the water flows into the water vapor separator 60 and flows out from the water vapor separator 60.

The filter 40 is configured to connect to a water source to be purified to filter the water source to be purified. The purified water tank 20 is configured to store filtered purified water. The liquid level box 10 is internally provided with a water level sensor 12. The purified water tank 20 communicates with the liquid level box 10 through the communicating vessel 30, and both the purified water tank 20 and the liquid level box 10 are in communication with the atmosphere. According to the principle of communicating vessels, a water level inside the liquid level box 10 may reflect a water level inside the purified water tank 20.

The heater 55 is configured to heat the purified water. The water vapor separator 60 is configured to perform water vapor separation on heated purified water. The water vapor separator 60 is provided with a water vapor separator water outlet 61. The water vapor separator water outlet 61 forms a water taking port of the water purifier 100.

As shown in FIG. 2 and FIG. 3, when the user needs to take the purified water, the water pump 50 operates to simultaneously pump water from the purified water tank 20 and the liquid level box 10 to the heater 55

through the communicating vessel 30. After passing through the heater 55, water continues to pass through the water vapor separator 60 and is taken out from the water vapor separator water outlet 61.

When the water level inside the liquid level box 10 is lower than a high liquid level described below, the filter 40 operates to purify the water source to be purified. The purified water enters the liquid level box 10 and the purified water tank 20 through the communicating vessel 30.

Each part of the water purifier 100 is described in detail below with reference to the accompanying drawings.

As shown in FIG. 1 and FIG. 2, the housing 80 is hollow inside. The housing 80 includes a rear panel 870, a top cover 871, a base 872, and a front panel 873. The rear panel 870, the top cover 871, the base 872, and the front panel 873 are collectively enclosed to form an accommodation cavity. The filter 40, the communicating vessel 30, the liquid level box 10, the water pump 50, the heater 55, etc., are disposed in the accommodation cavity. The rear panel 870 and the front panel 873 are disposed around sides of the base 872 to form a main body of the housing 80. The top cover 871 is configured to cover the front panel 873 and the rear panel 870.

An outer wall of the housing 80 is provided with a supporting member 81. The purified water tank 20 is detachably disposed on the supporting member 81.

The supporting member 81 is provided as a water collecting box 85. The water collecting box 85 is detachably disposed on an outer side of the housing 80. A top wall of the water collecting box 85 is provided with a water collecting opening 82 communicating with an interior of the water collecting box 85. The purified water tank 20 is supported on the top wall of the water collecting box 85.

Thus, the purified water tank 20 is detachably disposed on the outer side of the housing 80, allowing the user to directly remove the purified water tank 20 to take water when a large amount of water is needed. In addition, the purified water tank 20 may be conveniently removed for maintenance operations such as cleaning.

In addition, as shown in FIG. 1 and FIG. 2, a portion of the water vapor separator 60 penetrates through the housing 80 and extends to the outer side of the housing 80. The water vapor separator water outlet 61 is located on the portion of the water vapor separator 60 that extends to the outer side of the housing 80. Thus, the user may conveniently take water from the water vapor separator water outlet 61 that is located the outer side of the housing 80. Merely by way of example, an avoidance opening 8731 may be formed in the front panel 873. The water vapor separator water outlet 61 extends to the outer side of the housing 80 through the avoidance opening 8731.

In some embodiments of the present disclosure, as shown in FIG. 4, the water level sensor 12 is configured as a float sensor. The water level sensor 12

includes a first float 121 and a second float 122. A first upper baffle 123, a first lower baffle 124, a second upper baffle 125, and a second lower baffle 126 are sequentially disposed in the liquid level box 10 along a height direction of the liquid level box 10. The first float 121 is located between the first upper baffle 123 and the first lower baffle 124. The second float 122 is located between the second upper baffle 125 and the second lower baffle 126.

The water level sensor 12 is configured to detect the liquid level (also referred to as a water level when the water is contained in the liquid level box) inside the liquid level box 10. When the first float 121 abuts against the first upper baffle 123, the liquid level is determined to be at the high liquid level. When the second float 122 abuts against the second lower baffle 126, the liquid level is determined to be at a low liquid level.

With such a configuration, whether detecting the high liquid level or the low liquid level, a stroke of the corresponding float is relatively short. Compared to a solution with only one float, this avoids a situation where the float has a long stroke at different liquid levels, is prone to jamming, and consequently causes inaccurate detection results or float failure.

In some embodiments of the present disclosure, the water purifier 100 further includes a controller (not shown in the figure). The controller is electrically connected to the water level sensor 12 and a booster pump. The controller is configured to control the booster pump to stop operating when the liquid level inside the liquid level box 10 is at the high liquid level, thereby stopping water production. The controller is configured to control the booster pump to start operating when the liquid level inside the liquid level box 10 is lower than the high liquid level, to perform the water production. The controller is configured to control the water pump 50 to stop operating when the liquid level inside the liquid level box 10 is at the low liquid level, to stop water output.

In some embodiments of the present disclosure, the water purifier 100 further includes an exhaust member 70.

The exhaust member 70 is provided with a first chamber E in communication with the atmosphere. The first chamber E communicates with a filter liquid outlet (not shown in the figure) of the filter 40.

As described above, the communicating vessel 30 is provided with the communicating vessel inner cavity C. The communicating vessel inner cavity C communicates with the purified water tank 20, the liquid level box 10, and the first chamber E, respectively. Merely by way of example, water filtered by the filter 40 may be sequentially input to the exhaust member 70 and the communicating vessel 30, and flow into the liquid level box 10 and the purified water tank 20 through the communicating vessel inner cavity C. In addition, the communicating vessel 30 communicates with the filter liquid outlet on a filter body 43 described later and the water taking port of the water purifier.

By providing the exhaust member 70, air in the communicating vessel 30 during initial water production and air entering the filter 40 may be discharged through the exhaust member 70. In other words, the water filtered from the filter 40 is directly subjected to air exhausting through the exhaust member 70, and the amount of air entering the communicating vessel inner cavity C is reduced. This solves the problem of vapor sputtering with hot water, and addresses problems of unstable water form at the water taking port of the water purifier 100 and a relatively slow water output speed, thereby further facilitating smooth water flow.

As shown in FIG. 3, the liquid level box 10 is provided with an air outlet 13 in communication with the atmosphere. The exhaust member 70 is disposed on the liquid level box 10. The first chamber E communicates with a liquid level box inner cavity A of the liquid level box 10, to be in communication with the atmosphere through the air outlet 13. Thus, the liquid level box 10 and the exhaust member 70 may be integrally provided, which can reduce the count of components and save mounting steps.

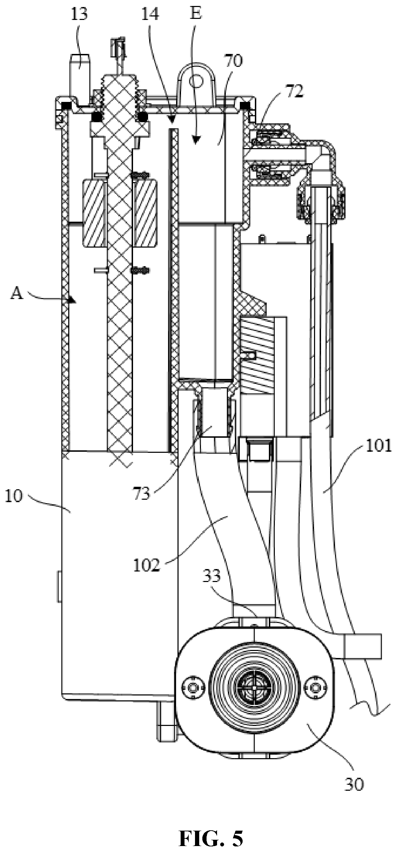

Further, as shown in FIG. 5, the exhaust member 70 is disposed on an outer side wall of the liquid level box 10. Each of opposing side walls of the exhaust member 70 and the liquid level box 10 facing each other is provided with a communication port 14. The two communication ports 14 communicate with each other, so that the first chamber E communicates with the liquid level box inner cavity A. The first chamber E communicates with the liquid level box inner cavity A, and the liquid level box 10 is in communication with the atmosphere, so that the first chamber E of the exhaust member 70 is in communication with the atmosphere through the liquid level box inner cavity A.

Regarding communication manners between various components, as shown in FIG. 3, FIG. 4, and FIG. 5, for example, the exhaust member 70 may be provided with an exhaust member liquid inlet 72 and an exhaust member liquid outlet 73. The communicating vessel 30 is provided with a communicating vessel liquid inlet 33 that communicates with the communicating vessel inner cavity C. The exhaust member liquid inlet 72 communicates with the filter liquid outlet through a first pipeline 101. The exhaust member liquid outlet 73 communicates with the communicating vessel liquid inlet 33 of the communicating vessel 30 through a second pipeline 102.

Setting heights of the communication ports 14 on the exhaust member 70 and the liquid level box 10 relative to a bottom wall of the liquid level box 10 are higher than a setting height of the exhaust member liquid inlet 72. In this way, the water entering the exhaust member 70 from the exhaust member liquid inlet 72 may be prevented from entering the liquid level box 10 through the communication port 14.

As shown in FIG. 3, further, the communicating vessel liquid inlet 33 communicates with the filter liquid outlet of the filter 40 through the exhaust member 70. A diameter of the communicating vessel liquid inlet 33 is greater than 6 mm, and an inner diameter of the second pipeline 102 is greater than 6 mm.

When the diameter of the communicating vessel liquid inlet 33 or the inner diameter of the second pipeline 102 connected to the communicating vessel liquid inlet 33 is less than 6 mm, a process of air in the communicating vessel 30 entering the exhaust member 70 through the second pipeline 102 is obstructed. A situation of poor exhaust is prone to occur. The water inflow from the exhaust member 70 to the communicating vessel 30 may not be stably and smoothly performed. The water accumulated in the exhaust member 70 may directly enter the liquid level box 10 through the communication port 14. The liquid level inside the liquid level box 10 is high, adversely affecting determination of the liquid level inside the purified water tank 20.

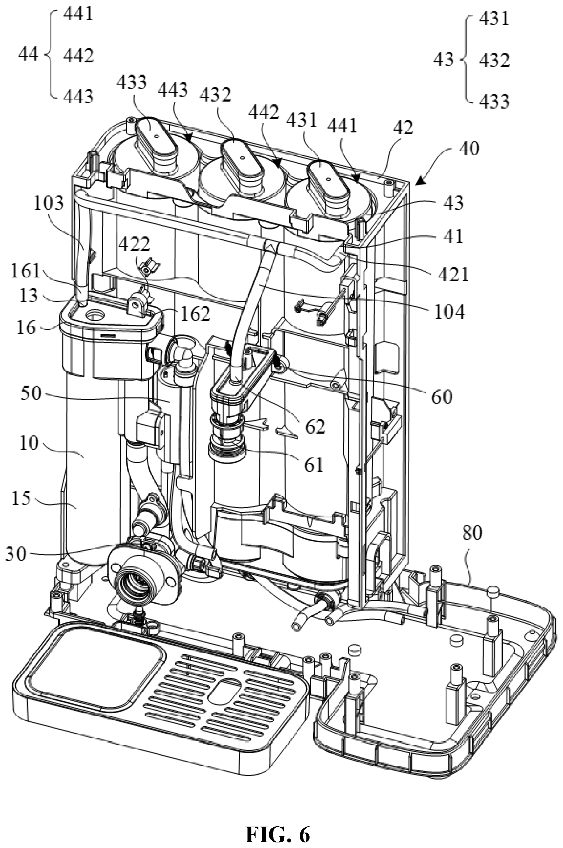

FIG. 6 is a schematic diagram illustrating a structure of the filter 40 of the water purifier 100 according to some embodiments of the present disclosure.

As shown in FIG. 6, the filter 40 includes a filter housing 42 and the filter body 43. The filter housing 42 is provided with a filter inner cavity 44 with one open end (communicating with the atmosphere). The filter body 43 is disposed in the filter inner cavity 44. The air outlet 13 provided on the liquid level box 10 communicates with an interior of the filter housing 42 of the filter 40.

The interior of the filter housing 42, i.e., the filter inner cavity 44 is in communication with the atmosphere. The air outlet 13 communicates with the interior of the filter housing 42 of the filter 40, so that the liquid level box 10 is in communication with the atmosphere. In addition, the purified water tank 20 is also in communication with the atmosphere. Therefore, during a process where the water purifier 100 pumps the water to the liquid level box 10 and the purified water tank 20 through the communicating vessel 30, or during a process where the water filtered by the filter 40 enters the liquid level box 10 and the purified water tank 20 through the communicating vessel 30, according to the principle of communicating vesselscommunicating vessel, the water level inside the liquid level box 10 and the water level inside the purified water tank 20 may be maintained in a substantially equal state. The water level inside the liquid level box 10 can more accurately reflect the water level inside the purified water tank 20.

The liquid level box 10 (the air outlet 13) communicates with the interior of the filter 40 (i.e., the filter inner cavity 44 inside the filter housing 42) through a third pipeline 103.

Further, the liquid level box 10 includes a box body 15 and a box cover 16 sealingly disposed on the box body 15. The air outlet 13 is disposed on the box cover 16.

For example, as described above, the filter housing 42 is provided with a filter housing air inlet 41 communicating with the filter inner cavity. Two ends of the third pipeline 103 are respectively connected to the air outlet 13 and the filter housing air inlet 41, so that the liquid level box 10 is in communication with the atmosphere.

It should be understood that the filter inner cavity necessarily has an opening for accessing the filter body 43, and the filter inner cavity is in communication with the atmosphere. The air outlet 13 of the liquid level box 10 communicates with the filter inner cavity of the filter 40 through the third pipeline 103. The water purifier 100 has a more aesthetically pleasing overall appearance without providing a new opening on the housing 80 of the water purifier 100.

Merely by way of example, the filter housing 42 is provided with a filter extension tube 421 communicating with the interior of the filter housing 42 through the filter housing air inlet 41. A position of the box cover 16 corresponding to the air outlet 13 is provided with a liquid level box extension tube 161. The two ends of the third pipeline 103 are connected to the filter extension tube 421 and the liquid level box extension tube 161, respectively. With such a configuration, connection of the two ends of the third pipeline 103 to the filter housing 42 and the liquid level box 10 is facilitated.

Further, the box body 15 is provided with a first mounting portion 162. The filter housing 42 is provided with a second mounting portion 422. The first mounting portion 162 is connected to the second mounting portion 422 to connect the liquid level box 10 to the filter 40. It should be understood that a count of the first mounting portion 162 and a count of the second mounting portion 422 may be at least two. For example, a portion of the at least two first mounting portions 162 may be disposed on the box body 15. A portion of the at least two second mounting portions 422 corresponding to the portion of the at least two first mounting portions 162 is disposed at a position of the filter housing corresponding to the portion of the at least two first mounting portions 162.

In addition, as described above, the water pump 50 communicates with the communicating vessel 30 and the heater 55, respectively. The water pump 50 is configured to pump water from the liquid level box 10 and the purified water tank 20 to the heater 55 through the communicating vessel 30.

The water vapor separator 60 includes a water vapor separator air outlet 62 and the water vapor separator water outlet 61. The water vapor separator air outlet 62 communicates with the interior of the filter housing 42. In this way, steam discharged from the water vapor separator air outlet 62 may be discharged to the atmosphere through the filter housing 42.

In some embodiments of the present disclosure, the filter 40 includes three-stage filtration, so that the filtration effect is better.

For example, the filter body 43 includes a first-stage filter 431, a second-stage filter 432, and a third-stage filter 433 connected in sequence. The filter inner cavity 44 includes a first-stage filter inner cavity 441, a second-stage filter inner cavity 442, and a third-stage filter inner cavity 443 that communicate with each other.

The first-stage filter 431 is accommodated in the first-stage filter inner cavity 441. The second-stage filter 432 is accommodated in the second-stage filter inner cavity 442. The third-stage filter 433 is accommodated in the third-stage filter inner cavity 443. The air outlet 13 communicates with the first-stage filter inner cavity 441.

The filter body 43 is configured as the first-stage filter 431, the second-stage filter 432, and the third-stage filter 433 connected in sequence, so that the filtration effect is better.

Further, the water purifier 100 further includes a booster pump. The booster pump is configured to pump the water to be purified into the filter body 43. The water source is purified in the filter body 43. The booster pump is provided as a power source for water production of the purifier. In addition to water sources with a certain water pressure such as tap water pipes, the water purifier 100 can be applied to different types of water sources, such as water sources in water storage tanks in daily life.

In some embodiments of the present disclosure, as shown in FIG. 3 and FIG. 4 described above, the water pump 50 communicates with the communicating vessel 30 and the heater 55, respectively. The water pump 50 is used for pumping water from the liquid level box 10 and the purified water tank 20 to the heater 55 through the communicating vessel 30. The water vapor separator 60 communicates with the heater 55. The water vapor separator 60 is used for performing water vapor separation on the water heated by the heater 55.

With such a configuration, when the user takes water, the water pump 50 pumps water from the communicating vessel 30. Water in the liquid level box 10 and the purified water tank 20 flows into the water pump 50 simultaneously. Water from the water pump 50 flows into the heater 55, and after penetrating through the heater 55, water flows into the water vapor separator 60 and flows out from the water vapor separator 60.

As shown in FIG. 6, further, the water vapor separator air outlet 62 communicates with the third pipeline 103 through a fourth pipeline 104. In this way, steam separated from the water vapor separator air outlet 62 may be discharged to the atmosphere through the filter housing 42. A count of pipelines can be reduced, so that the structure is more compact.

Regarding communication between the purified water tank 20 and the atmosphere, for example, as shown in FIG. 4, the purified water tank 20 includes a purified water tank body 25 and a water tank cover 26 openably and closably covering the purified water tank body 25. A gap is provided between the purified water tank body 25 and the water tank cover 26, so that the purified water tank 20 communicates with the atmosphere. In this way, when the user needs a large amount of water, the user may open the water tank cover 26 and pour water out to take the water.

Further, the water vapor separator air outlet 62 is disposed at a top end portion of the water vapor separator 60. The third pipeline 103 and the fourth pipeline 104 are located on a top side of the liquid level box 10 and the water vapor separator 60.

In this way, lengths of the third pipeline 103 and the fourth pipeline 104 may be set to be relatively short. Combined with the characteristic of water vapor rising upward, water vapor is discharged more smoothly.

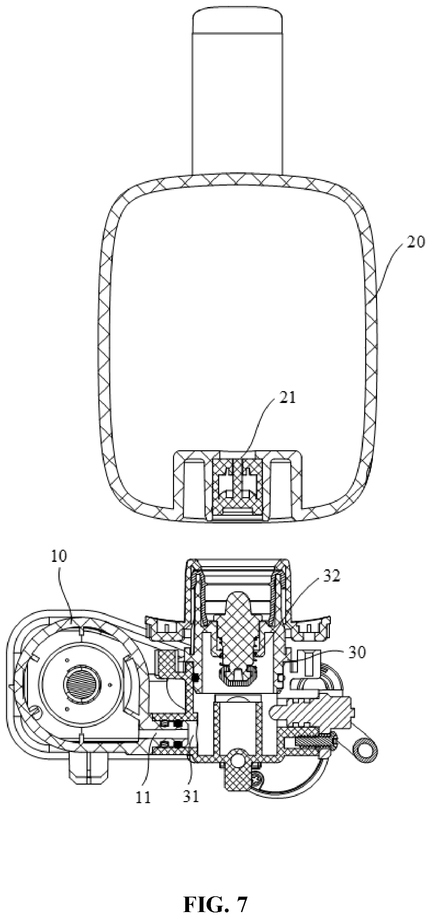

FIG. 7 is a schematic cross-sectional view of the water purifier 100 according to some embodiments of the present disclosur.

In some embodiments of the present disclosure, as described above, the communicating vessel 30 communicates with the liquid level box 10 and the purified water tank 20, respectively. For example, as shown in FIG. 3 and FIG. 7, the liquid level box 10 is provided with a liquid level box communication port 11. The purified water tank 20 is provided with a water tank communication port 21. The communicating vessel 30 is further provided with a second communication port 31 and a first communication port 32. The second communication port 31 is connected to the liquid level box communication port 11. The first communication port 32 is connected to the purified water tank communication port 21. In this way, the communicating vessel 30 communciates with the liquid level box 10 and the purified water tank 20, respectively.

Further, as shown in FIG. 3 and FIG. 4, the communicating vessel 30 is further provided with a communicating vessel liquid outlet 38. The communicating vessel liquid outlet 38 communicates with the water taking port of the water purifier 100. A setting height of the liquid level box communication port 11 relative to a bottom of the water purifier 100 is higher than a setting height of the communicating vessel liquid outlet 38.

With such a configuration, liquid in the liquid level box 10 can flow out of the communicating vessel 30 through the communicating vessel liquid outlet 38 relatively smoothly. This prevents the situation where the liquid level box 10 fails to drain properly, resulting in water accumulation within the liquid level box 10, and the purified water provided to the water taking port is mixed with the accumulated water.

For example, the communicating vessel 30 is provided with an extension tube 39. The extension tube 39 penetrates through a wall portion of the communicating vessel 30 from an outer side (e.g., a top side) of the communicating vessel 30 and extends to a bottom position of the communicating vessel inner cavity C. An end portion of the extension tube 39 located inside the communicating vessel inner cavity C forms the communicating vessel liquid outlet 38.

Communication between the water pump 50 and the communicating vessel 30 is implemented by connecting the communicating vessel liquid outlet 38 to an inlet of the water pump 50 through a pipeline. An outlet of the water pump 50 is also connected to the heater 55 through another pipeline to deliver the purified water in the communicating vessel 30 to the heater 55. The water pump 50 may be connected to an outer wall of the exhaust member 70 by fasteners such as screws.

Further, a setting height of the communicating vessel liquid inlet 33 relative to the bottom of the water purifier 100 is higher than setting heights of the liquid level box communication port 11, the purified water tank communication port 21, and the communicating vessel liquid outlet 38. The communicating vessel liquid inlet 33 may be disposed at a topmost portion of the communicating vessel 30. Therefore, the purified water entering the communicating vessel 30 from the communicating vessel liquid inlet 33 can smoothly enter the liquid level box 10 and the purified water tank 20.

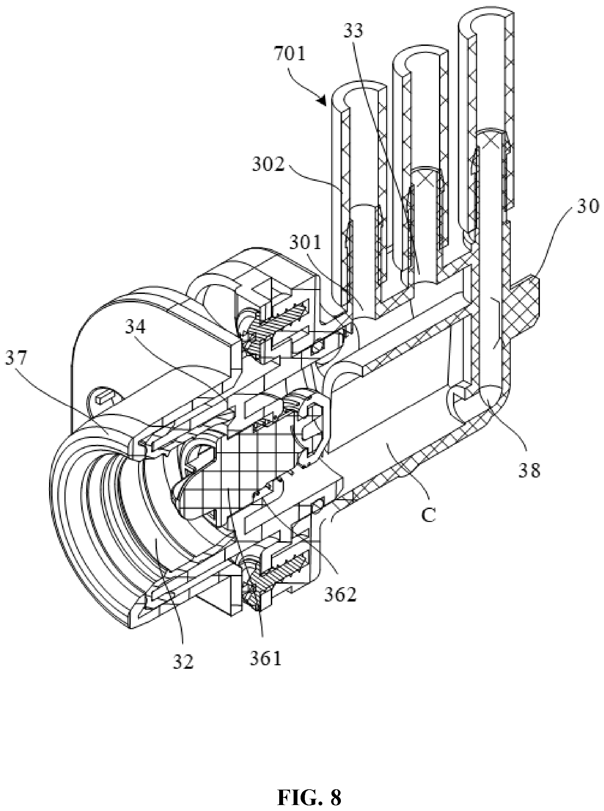

FIG. 8 is a schematic diagram illustrating another structure of the communicating vessel 30 of the water purifier 100 according to some embodiments of the present disclosure.

As shown in FIG. 8, both water production and water pumping of the water purifier 100 need to pass through the communicating vessel 30, during a process of water production, because a volume of the communicating vessel 30 is small, air cannot be discharged smoothly. The communicating vessel inner cavity C may be considered to communicate with the filter liquid outlet of the filter 40. For example, the filter liquid outlet of the filter 40 may communicate with the communicating vessel liquid inlet 33 through a pipeline (not shown in the figure). In this case, the communicating vessel liquid inlet 33 may simultaneously communicate with the exhaust member 70, or may only communicate with the filter liquid outlet and not communicate with the exhaust member 70.

Further, an exhaust portion 701 communicating with the atmosphere is provided on the communicating vessel 30. The exhaust portion 701 communicates with the communicating vessel inner cavity C, thereby facilitating the smooth discharge of air from the communicating vessel 30 during the process of water production and the process of water pumping of the water purifier 100. This ensures unimpeded water flow and allows real-time balance between the water levels inside the purified water tank 20 and the float box. When the communicating vessel liquid inlet 33 only communicates with the filter liquid outlet and does not communicate with the exhaust member 70, water filtered by the filter 40 does not pass through the exhaust member 70. The water directly enters the communicating vessel inner cavity C from the communicating vessel liquid inlet 33. The exhaust portion 701 is used for air exhausting.

For example, a top of the communicating vessel 30 is provided with an exhaust port 301 that communicates with the communicating vessel inner cavity C. The exhaust port 301 forms the exhaust portion 701. To facilitate smooth discharge of air from the communicating vessel 30, an exhaust tube 302 is provided at the exhaust port 301. The exhaust tube 302 extends along the height direction of the water purifier 100.

It should be noted that, in another possible implementation, the communicating vessel liquid inlet 33 may be simultaneously in communication with the exhaust member 70 and the filter liquid outlet. A portion of the water from the filter 40 may enter the communicating vessel 30 through the exhaust member 70, and another portion of the water from the filter 40 may enter the communicating vessel 30 directly through the pipeline communicating with the communicating vessel liquid inlet 33. In this case, air exhausting may be performed simultaneously through the exhaust member 70 and the exhaust portion 701.

As shown in FIG. 3 and FIG. 7, the operation process of the water purifier 100 according to the embodiments of the present disclosure is described below.

When the user needs to take the purified water, as shown by the dashed arrows in FIG. 3, the water pump 50 operates. The purified water in the purified water tank 20 enters the communicating vessel inner cavity C through the purified water tank communication port 21 and the first communication port 32. The purified water in the liquid level box 10 enters the communicating vessel inner cavity C through the liquid level box communication port 11 and the second communication port 31. Driven by the water pump 50, the purified water in the communicating vessel inner cavity C enters the water pump 50 through the communicating vessel liquid outlet 38, and enters the heater 55 communicating with the water pump 50. When the purified water enters the heater 55, the heater 55 may operate to heat the purified water. When the heater 55 does not operate, the purified water is not heated. Water entering the heater 55 finally enters the water vapor separator 60. Heated purified water undergoes water-vapor separation through the water vapor separator 60, and then the purified water flows out from the water vapor separator water outlet 61. If the purified water is not heated in the heater 55, the purified water directly flows out through the water vapor separator water outlet 61. In this process, the water pump 50 serves as a driving source for the entire circulation.

During the process of water production, as shown in FIG. 3 and FIG. 4 and as shown by the solid arrows, a booster pump (not shown in the figure) operates. The filter 40 purifies the water source to be purified, and delivers the purified water to the first chamber E of the exhaust member 70 through the first pipeline 101. The purified water enters the communicating vessel inner cavity C through the exhaust member liquid outlet 73, the second pipeline 102, and the communicating vessel liquid inlet 33. A portion of the purified water entering the communicating vessel inner cavity C enters the purified water tank 20 through the first communication port 32 and the purified water tank communication port 21. Another portion of the purified water enters the liquid level box 10 through the second communication port 31 and the liquid level box communication port 11. Specifically, during the process of water production, when the water level inside the liquid level box 10 is lower than the high liquid level, the filter 40 operates to purify the water source to be purified. The purified water enters the liquid level box 10 and the purified water tank 20 respectively through the above process. In this process, the booster pump serves as a driving source for the entire circulation.

In the embodiments of the present disclosure, as shown in FIG. 3 and FIG. 7, a volume of the purified water tank inner cavity B of the purified water tank 20 is greater than a volume of the liquid level box inner cavity A of the liquid level box 10. As described above, the water filtered by the filter 40 may flow into the liquid level box 10 and the purified water tank 20 through the communicating vessel inner cavity C.

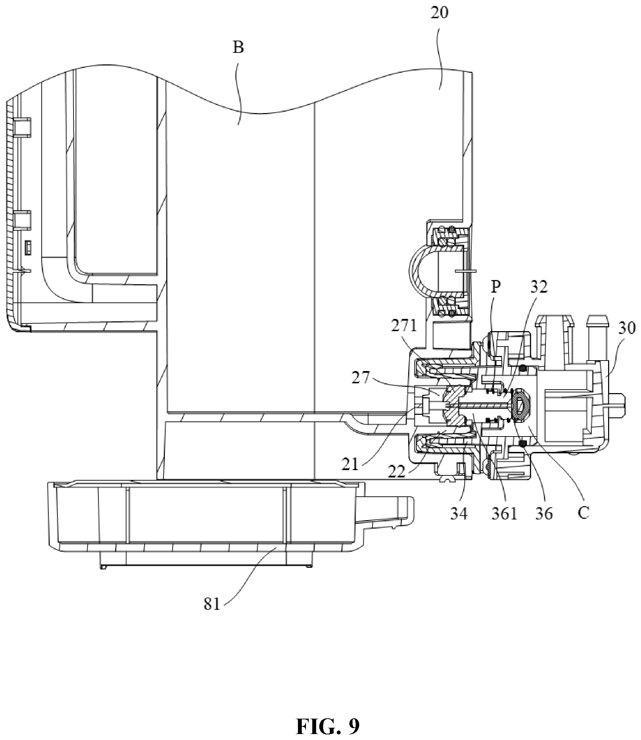

Further, as shown in FIG. 4 and FIG. 9 described later, a minimum cross-sectional area of a first communication channel P for communicating the purified water tank communication port 21 with the communicating vessel inner cavity C is greater than a minimum cross-sectional area of a second communication channel Q for communicating the liquid level box communication port 11 with the communicating vessel inner cavity C.

The volume of the purified water tank inner cavity B of the purified water tank 20 is greater than the volume of the liquid level box inner cavity A of the liquid level box 10. If a water inflow/outflow speed of the purified water tank 20 is the same as a water inflow/outflow speed of the liquid level box 10, a situation may easily occur where, during use of the water purifier 100, the liquid level inside the purified water tank 20 is temporarily higher than the liquid level inside the liquid level box 10. In the present disclosure, by making the minimum cross-sectional area of the first communication channel P greater than the minimum cross-sectional area of the second communication channel Q, a water inflow/outflow volume per unit time of the purified water tank 20 becomes greater than a water inflow/outflow volume per unit time of the liquid level box 10. That is, the water outflow speed of the purified water tank 20 with a larger volume is made greater than the water outflow speed of the liquid level box 10 with a smaller volume. This design can compensate for a temporary liquid level height difference caused by a volume difference between the purified water tank 20 and the liquid level box 10. Therefore, during use of the water purifier 100, the liquid level inside the purified water tank 20 and the liquid level niside the liquid level box 10 remain consistent in real time. The water level detected by a water level detector inside the liquid level box 10 can always truly reflect the water level inside the purified water tank 20, thereby avoiding repeated water production.

Further, the communicating vessel 30 is provided with a communicating vessel connection tube 34 that communicates with the communicating vessel inner cavity C. The communicating vessel connection tube 34 corresponds to a setting position of the first communication port 32.

The purified water tank 20 is provided with a purified water tank connection tube 22. The purified water tank connection tube 22 corresponds to a setting position of the purified water tank communication port 21. The purified water tank connection tube 22 communicates with the purified water tank inner cavity B of the purified water tank 20. The purified water tank connection tube 22 is configured to be partially inserted into the communicating vessel connection tube 34 to enable communication between the communicating vessel inner cavity C with the purified water tank inner cavity B when supported on the supporting member 81.

A partial tube section of the communicating vessel connection tube 34 not inserted by the purified water tank connection tube 22 and the purified water tank connection tube 22 together define the first communication channel P. A position with the minimum cross-sectional area of the first communication channel P is located on the partial tube section of the communicating vessel connection tube 34 not inserted by the purified water tank connection tube 22.

Further, the communicating vessel 30 is provided with a communicating vessel insertion tube 341 that communicates with the communicating vessel inner cavity C. The communicating vessel insertion tube 341 corresponds to a setting position of the second communication port 31.

The liquid level box 10 is provided with a liquid level box insertion tube 17. The liquid level box insertion tube 17 communicates with the liquid level box inner cavity A. The liquid level box insertion tube 17 is inserted into the communicating vessel insertion tube 341.

A partial tube section of the communicating vessel insertion tube 341 not inserted by the liquid level box insertion tube 17 and the liquid level box insertion tube 17 together define the second communication channel Q. A position with the minimum cross-sectional area of the second communication channel Q is located inside the liquid level box insertion tube 17.

In the embodiments of the present disclosure, a cross-sectional area S1 of the purified water tank inner cavity B along the height direction of the water purifier 100, a minimum cross-sectional area S2 of the first communication channel P, a cross-sectional area S3 of the liquid level box inner cavity A along the height direction of the water purifier 100, and a minimum cross-sectional area S4 of the second communication channel Q satisfy:

$$S3/S4 = K*S1/S2$$

where K denotes a drag coefficient of fluid in the liquid level box communication port 11, and a cross-section of the purified water tank inner cavity B and a cross-section of the liquid level box inner cavity A remain unchanged along the height direction of the water purifier 100.

In addition, a value of the drag coefficient of fluid K changes with a hole depth or shape at the liquid level box communication port 11.

In this way, during use of the water purifier 100, the liquid level inside the purified water tank 20 and the liquid level niside the liquid level box 10 can always remain completely consistent. The water level detected by the water level detector in the liquid level box 10 can reflect a real water level inside the purified water tank 20 in real time, thereby avoiding repeated water production.

Further, the cross-sectional area S1 of the purified water tank inner cavity B along the height direction of the water purifier 100 and the cross-sectional area S3 of the liquid level box inner cavity A along the height direction of the water purifier 100 satisfy: S1 > S3.

A bottom wall of the purified water tank inner cavity B is configured to be flush with a bottom wall of the liquid level box inner cavity A.

In this way, the water level detected by the water level detector in the liquid level box 10 is the real water level inside the purified water tank 20.

Further, a cross-sectional area of the first communication port 32 is greater than a cross-sectional area of the second communication port 31.

Further, a cross-sectional area of the liquid level box communication port 11 is greater than or equal to 4.5 mm$^2$; and/or a cross-sectional area of the purified water tank communication port 21 is greater than 40 mm$^2$.

If the cross-sectional area of the liquid level box communication port 11 is too large, i.e., a diameter of the liquid level box communication port 11 is too large, the flow speed of water in the liquid level box 10 is relatively fast. This causes the water level inside the liquid level box 10 to drop too quickly, leading to an excessively fast drop of the liquid level inside the liquid level box 10. The liquid level inside the liquid level box 10 becomes lower than the liquid level inside the purified water tank 20, causing the water level detected by the water level detector to fail to reflect the real water level inside the purified water tank 20. When the cross-sectional area of the liquid level box communication port 11 is too small, i.e., the diameter of the liquid level box communication port 11 is too small, the flow speed of water in the liquid level box 10 is relatively slow. The water level inside the liquid level box 10 drops too slowly. Similarly, the water level detected by the water level detector fails to reflect the real water level inside the purified water tank 20.

When the cross-sectional area of the liquid level box communication port 11 is greater than or equal to 4.5 mm$^2$, and/or the cross-sectional area of the purified water tank communication port 21 is greater than 40 mm$^2$, it ensures that the water from the liquid level box 10 enters and exits the communicating vessel 30 through the liquid level box communication port 11, and when the water from the liquid level box 10 enters and exits the communicating vessel 30 through the liquid level box communication port 11, rise and fall of the water level inside the liquid level box 10 and the water level the purified water tank 20 occurr synchronously, so that a water level detection result detected by the water level detector in the liquid level box 10 can more accurately reflect the water level inside the purified water tank 20.

FIG. 9 is a schematic diagram illustrating a structure of the first communication port 32 being mated with the purified water tank communication port 21 of the water purifier 100 according to some embodiments of the present disclosure.

In the embodiment of the present disclosure, as described above, an outer wall of the housing 80 is provided with the supporting member 81. The purified water tank 20 is detachably disposed on the supporting member 81.

As shown in FIG. 3, FIG. 8, and FIG. 9, to enable communication between the purified water tank 20 and the communicating vessel 30, a communicating vessel check valve 36 and a purified water tank check valve 27 are provided at the first communication port 32 and the purified water tank communication port 21, respectively.

Further, as described above, the communicating vessel 30 is provided with the communicating vessel connection tube 34 that communicates with the communicating vessel inner cavity C. The communicating vessel connection tube 34 is disposed at a position corresponding to the first communication port 32. For example, at least a portion of a structure of the communicating vessel 30 is disposed in the inner side of the housing 80. The communicating vessel connection tube 34 penetrates from inside the housing 80 to outside the housing 80 and extends to a supporting side of the supporting member 81.

In this way, a majority of the communicating vessel 30 is accommodated inside the housing 80, and only the communicating vessel connection tube 34 for connecting to the water purifier 100 extends outside the housing 80. The purified water tank 20 may be placed on the supporting member 81 outside the housing 80, facilitating the user access.

Correspondingly, the purified water tank 20 is provided with the purified water tank connection tube 22. The purified water tank connection tube 22 communicates with the purified water tank inner cavity B of the purified water tank 20. The purified water tank connection tube 22 is disposed at a position corresponding to the purified water tank communication port 21. The communicating vessel check valve 36 is located inside the communicating vessel connection tube 34. The purified water tank check valve 27 is disposed inside the purified water tank connection tube 22.

The purified water tank connection tube 22 is configured to be inserted into the communicating vessel connection tube 34 when supported on the supporting member 81 to enable communication between the communicating vessel inner cavity C and the purified water tank inner cavity B. Merely by way of example, when the purified water tank connection tube 22 is inserted into the communicating vessel connection tube 34, the purified water tank check valve 27 pushes open a valve core 361 of the communicating vessel check valve to achieve water inflow/outflow between the communicating vessel 30 and the purified water tank 20.

More specifically, as shown in FIG. 3 and FIG. 8, a valve seat 362 is provided inside the communicating vessel connection tube 34. The valve core 361 of the communicating vessel check valve is elastically connected to the valve seat 362. For example, the valve core 361 of the communicating vessel check valve is connected to the valve seat 362 through an elastic member. When the purified water tank connection tube 22 is inserted into the communicating vessel connection tube 34, a valve core 271 of the purified water tank check valve 27 overcomes an elastic force of the elastic member and abuts against the valve core 361 of the communicating vessel check valve to open the communicating vessel check valve 36. At the same time, the valve core 361 of the communicating vessel check valve also pushes open the valve core 271 of the purified water tank check valve to open the purified water tank check valve 27. When the purified water tank connection tube 22 is disengaged from the communicating vessel connection tube 34, the valve core 361 of the communicating vessel check valve returns to an original state under the action of the elastic member (not shown in the figure), thereby closing the communicating vessel connection tube 34. When the purified water tank connection tube 22 is disengaged from the communicating vessel connection tube 34, the valve core 271 of the purified water tank check valve also returns to an original state under the action of the elastic member, thereby closing the purified water tank connection tube 22.

Merely by way of example, a cross-sectional area of the valve core 361 of the communicating vessel check valve is less than or equal to a cross-sectional area of the valve core 271 of the purified water tank check valve.

In this way, when the purified water tank connection tube 22 is inserted into the communicating vessel connection tube 34, the valve core 271 of the purified water tank check valve can reliably abut against the valve core 361 of the communicating vessel check valve to smoothly open the communicating vessel check valve 36, thereby achieving water inflow/outflow from the communicating vessel 30 to the purified water tank 20.

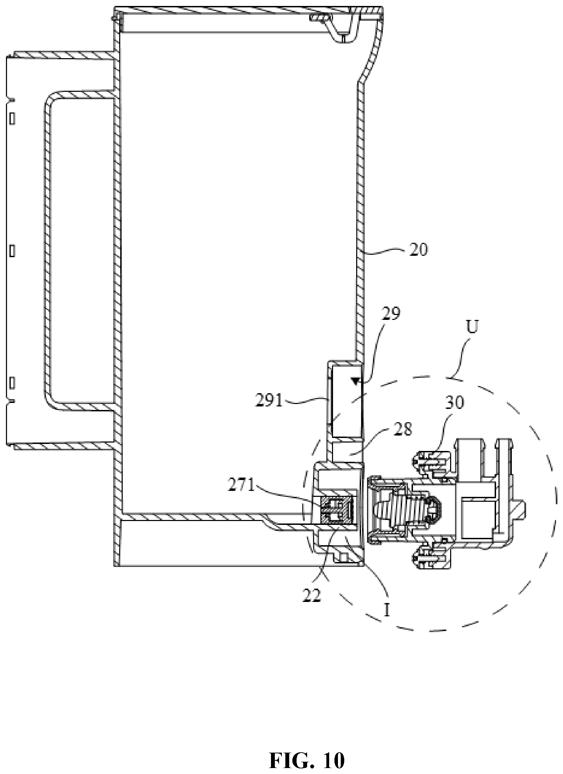

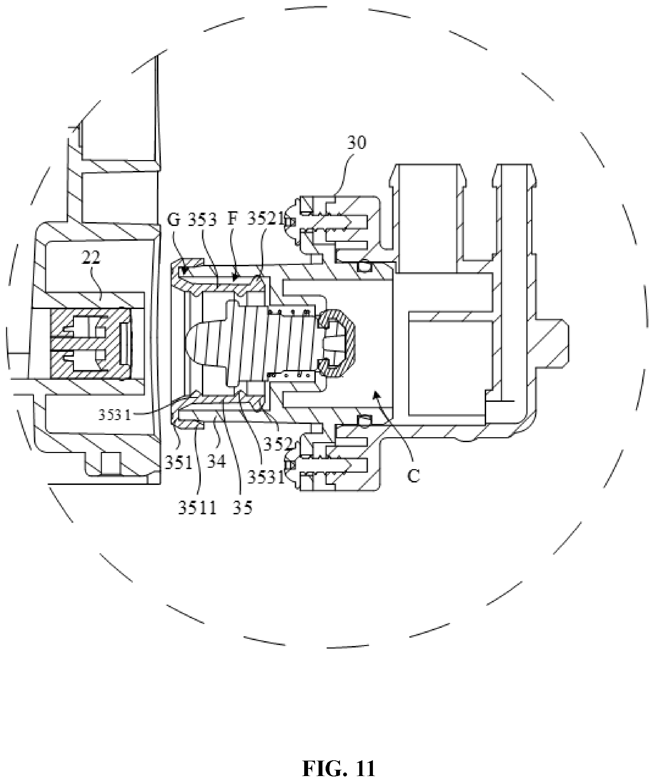

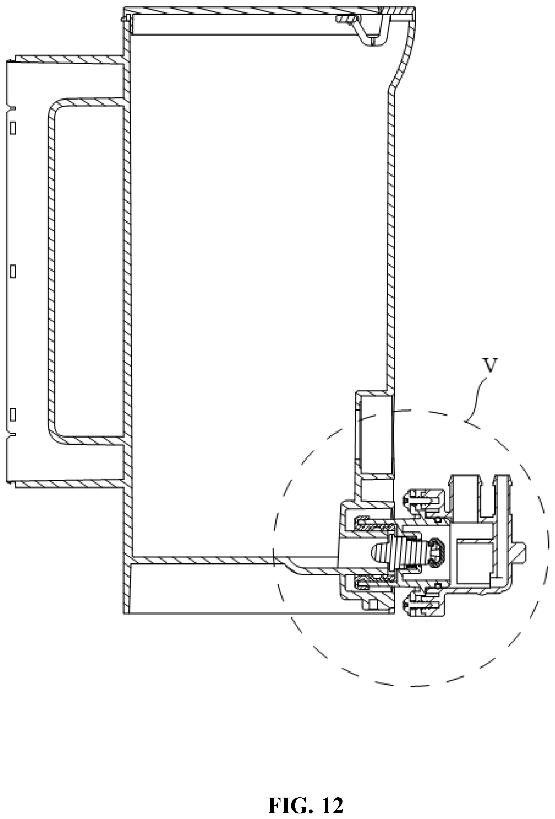

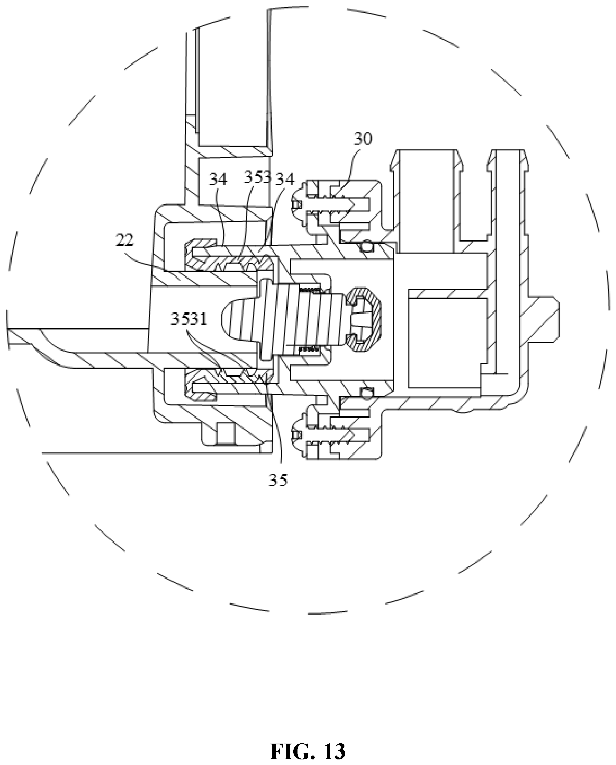

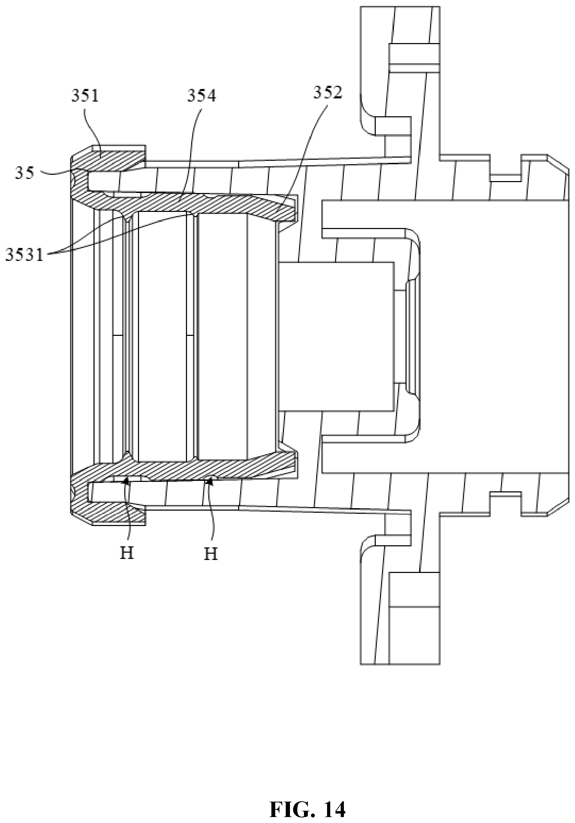

FIG. 10 is a schematic diagram illustrating a cross-sectional structure of the first communication port 32 being separated from the purified water tank communication port 21 of the water purifier 100 according to some embodiments of the present disclosure. FIG. 11 is a partial enlarged view of a region U in FIG. 10. FIG. 12 is a schematic diagram illustrating a cross-sectional structure of the first communication port 32 being mated with the purified water tank communication port 21 of the water purifier 100 according to some embodiments of the present disclosure. FIG. 13 is a partial enlarged view of a region V in FIG. 12. FIG. 14 is a schematic diagram illustrating a structure of a sealing ring 35 being mated with the communicating vessel connection tube 34 of the water purifier 100 according to some embodiments of the present disclosure. It should be noted that, in FIG. 12 and FIG. 13, the structure of the purified water tank check valve 27 is omitted for ease of observation.

In the embodiment of the present disclosure, as shown in FIG. 9, FIG. 10, FIG. 11, FIG. 12, and FIG. 13, an inner wall of the communicating vessel connection tube 34 is provided with the sealing ring 35. Two axial ends of the sealing ring 35 abut against the inner wall of the communicating vessel connection tube 34. A first sealing section 353 between the two axial ends of the sealing ring 35 and the inner wall of the communicating vessel connection tube 34 define a water storage chamber F. The purified water tank connection tube 22 is configured to be inserted into the communicating vessel connection tube 34 when supported on the supporting member 81 to enable communication between the communicating vessel inner cavity C and the purified water tank inner cavity B; cause the first sealing section 353 to elastically deform toward an outer side of the first sealing section 353 in a radial direction of the first sealing section 353 to squeeze water in the water storage chamber F into the communicating vessel connection tube 34; and when the purified water tank connection tube 22 is disengaged from the communicating vessel connection tube 34, cause the first sealing section 353 to elastically reset toward an inner side of the first sealing section 353 in the radial direction of the first sealing section 353 to adsorb water in the communicating vessel connection tube 34 into the water storage chamber F.

In the above solution, the water storage chamber F is defined by the first sealing section 353 between the two axial ends of the sealing ring 35 and the inner wall of a communicating vessel connection tube 34. The water storage chamber F has a certain water storage capacity. Since the purified water tank connection tube 22 may cause the first sealing section 353 to elastically reset toward the inner side in the radial direction of the first sealing section when the purified water tank connection tube 22 is disengaged from the communicating vessel connection tube 34, the water in the communicating vessel connection tube 34 is adsorbed into the water storage chamber F. Therefore, when the user takes the purified water tank 20 and the purified water tank connection tube 22 is disengaged from the communicating vessel connection tube 34, even if water flows from the communicating vessel 30 into the communicating vessel connection tube 34, the water is partially or entirely adsorbed by the water storage chamber F. The problem of water flowing into the communicating vessel connection tube 34 due to the instantaneous disengagement of the purified water tank connection tube 22 and the communicating vessel connection tube 34 when the purified water tank 20 is taken is alleviated.

As shown in FIG. 11 and FIG. 13, further, among the two axial ends of the sealing ring 35, an end portion facing the purified water tank 20 is defined as a first end portion 351, and an end portion away from the purified water tank 20 is defined as a second end portion 352.

The first end portion 351 is provided with an annular flange portion 3511. The flange portion 3511 and an outer peripheral side of the sealing ring 35 define a flange portion mounting groove G. An end portion of the communicating vessel connection tube 34 facing the purified water tank 20 is clamped into the flange portion mounting groove G, so that a portion of a structure of the first end portion 351 abuts against the inner wall of the communicating vessel connection tube 34.

In this way, the first end portion 351 of the sealing ring 35 wraps the end portion of the communicating vessel connection tube 34 facing the purified water tank 20. This prevents the water in the water storage chamber F from leaking out from the first end portion 351, i.e., the side of the sealing ring 35 facing the purified water tank 20.

Further, the second end portion 352 is provided with an annular protrusion portion 3521. The protrusion portion 3521 abuts against the inner wall of the communicating vessel connection tube 34. The protrusion portion 3521, an outer peripheral side of the first sealing section 353, and the flange portion 3511 jointly define a water storage recess. The water storage recess and the inner wall of the communicating vessel connection tube 34 jointly define the water storage chamber F.

In this way, the water storage chamber F is formed by providing the water storage recess on the sealing ring 35. The structure is relatively simple and facilitates processing. Moreover, this also facilitates inserting the purified water tank connection tube 22 into the inner side of the sealing ring 35, which presses the inner pheripheral surface of the sealing ring 35 in a radially outward direction, causing the first sealing section 353 to elastically deform toward the outer side in the radial direction of the first sealing section 353 to squeeze the water in the water storage chamber F into the communicating vessel connection tube 34.

In some embodiments of the present disclosure, as shown in FIG. 11, the inner peripheral surface of the first sealing section 353 is convexly provided with at least two interference fit portions 3531, which are annular in shape. The at least two interference fit portions 3531 are arranged along an axial direction of the sealing ring 35. The at least two interference fit portions 3531 are used for interference fit with the purified water tank connection tube 22.

The outer peripheral surface of the first sealing section 353 refers to an outer side surface of the first sealing section 353 that is away from the central hole of the first sealing section 353 along the radial direction of the first sealing section 353.

The inner side of the sealing ring 35 refers to an inner side surface of the sealing ring 35 that is close to a central hole of the sealing ring 35 along the radial direction of the sealing ring 35.

In this way, when the purified water tank connection tube 22 is inserted into the communicating vessel connection tube 34, the purified water tank connection tube 22 may be in sealing engagement with the sealing ring 35, thereby preventing water from leaking between the purified water tank connection tube 22 and the communicating vessel connection tube 34.

Merely by way of example, along a direction from the first end portion 351 toward the second end portion 352, protrusion heights of the at least two interference fit portions 3531 from the inner peripheral side of the sealing ring 35 gradually decrease.

The direction from the first end portion 351 toward the second end portion 352 is a direction in which the purified water tank connection tube 22 is inserted into the communicating vessel connection tube 34. During the insertion process, the purified water tank connection tube 22 first contacts the interference fit portion 3531 with a higher protrusion height, and water may be sealed as soon as possible to avoid leakage. With continued insertion, the purified water tank connection tube 22 cooperates with the interference fit portion 3531 with a lower protrusion height, and an interference amount is relatively small. The insertion difficulty of the purified water tank connection tube 22 can be reduced, and the insertion feel can be improved.

In some embodiments of the present disclosure, as shown in FIG. 14, a count of the at least two interference fit portions 3531 is two. A support protrusion 354 is provided between regions on the outer peripheral side of the sealing ring 35 corresponding to the two interference fit portions 3531.

In this way, when the purified water tank connection tube 22 is inserted into the inner side of the sealing ring 35, the interference fit portions 3531 elastically deform toward the inner wall of the communicating vessel connection tube 34 under the pressure from the purified water tank connection tube 22. The support protrusion 354 first contacts the inner wall of the communicating vessel connection tube 34. At this time, two avoidance spaces are formed between the regions of the outer peripheral side of the sealing ring 35 corresponding to the two interference fit portions 3531 and the inner wall of the communicating vessel connection tube 34. The two avoidance spaces allow the two interference fit portions 3531 to still have room for elastic deformation radially outward or radially inward. This prevents a mismatch between the purified water tank connection tube 22 and the sealing ring 35 caused by dimensional tolerances, and addresses the issue of poor insertion feel during the insertion process of the purified water tank connection tube 22.

Further, the count of the at least two interference fit portions 3531 is two. Avoidance grooves H are respectively disposed on the regions of the outer peripheral side of the sealing ring 35 corresponding to the two interference fit portions 3531. A groove depth of the avoidance groove H corresponding to the interference fit portion 3531 with a higher protrusion height is greater than a groove depth of the avoidance groove H corresponding to the interference fit portion 3531 with a lower protrusion height.

In this way, the interference fit portion 3531 with the higher protrusion height has a larger avoidance space, and the interference fit portion 3531 with the lower protrusion height has a smaller avoidance space. Such differentiated design allows the capacity of the water storage chamber F to be as large as possible.

As shown in FIG. 3, FIG. 9, and FIG. 13, when the purified water tank connection tube 22 of the purified water tank 20 is inserted into the communicating vessel connection tube 34, the valve core 271 of the purified water tank check valve abuts against the valve core 361 of the communicating vessel check valve. The communicating vessel check valve 36 opens, so that the purified water tank inner cavity B of the purified water tank 20 communicates with the communicating vessel inner cavity C of the communicating vessel 30. At this time, the purified water tank connection tube 22 is inserted into the inner side of the sealing ring 35 and pushes the first sealing section 353 toward the radial outer side of the sealing ring 35. This causes the outer side wall of the first sealing section 353 to abut against the inner wall of the communicating vessel connection tube 34, thereby squeezing the water storage chamber F. During the process of withdrawing the purified water tank connection tube 22 from the communicating vessel connection tube 34, a portion of water may flow out from the valve core 361 of the communicating vessel check valve. At this time, the squeezing of the communicating vessel connection tube 34 on the first sealing section 353 disappears, the sealing ring 35 recovers, and the water storage chamber F returns to an original state. The portion of water that flows into the communicating vessel connection tube 34 is squeezed into the water storage chamber F due to atmospheric pressure and temporarily stored in the water storage chamber F.

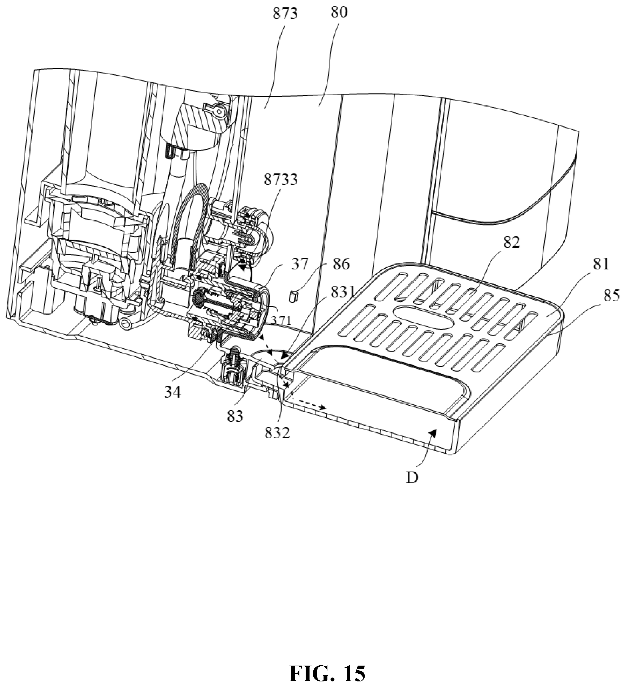

FIG. 15 is a schematic diagram illustrating a structure of the supporting member 81 being connected to the housing 80 of the water purifier 100 according to some embodiments of the present disclosure.

In some embodiments of the present disclosure, as shown in FIG. 15, as described above, the supporting member 81 is detachably connected to the housing 80. For example, the supporting member 81 is connected to the front panel 873. The supporting member 81 is provided with a water collecting chamber D. A top wall of the supporting member 81 is provided with the water collecting opening 82 communicating with the water collecting chamber D. The purified water tank 20 is supported on the top wall of the supporting member 81.

In this way, water leaking from a connection between the purified water tank 20 and the communicating vessel 30 may enter the water collecting chamber D through the water collecting opening 82. Alternatively, the user may place a water cup on the supporting member 81. Water outside the water cup or outside the purified water tank 20 may be poured into the water collecting chamber D through the water collecting opening 82.

Further, the outer wall of the housing 80 is provided with a water guiding portion 83. The supporting member 81 is detachably connected to the housing 80 via plug-in engagement with the water guiding portion 83.

The water guiding portion 83 has a guiding surface 831. A guiding hole 832 communicating with the water collecting chamber D is provided on the guiding surface 831. The guiding surface 831 is configured to guide water in the communicating vessel connection tube 34 to the guiding hole 832.

In this way, as shown by the dashed lines in FIG. 15, the water in the communicating vessel connection tube 34 may be guided to the guiding hole 832 by the water guiding portion and the water in the communicating vessel connection tube 34 may finally flow into the water collecting chamber D. The user may periodically remove the supporting member 81 and clean water in the water collecting chamber D.

Further, to better guide water flowing out from the communicating vessel connection tube 34, a projection of the end portion of the communicating vessel connection tube 34 facing the purified water tank 20 on a first plane is within a range of a projection of the guiding surface 831 on the first plane. The first plane is perpendicular to the height direction of the water purifier 100. In this way, when water leaks from the end portion of the communicating vessel connection tube 34 and falls under gravity, the water may be completely caught by the guiding surface 831 and collected into the water collecting chamber D. For example, the guiding surface 831 is configured as a conical surface centered on the guiding hole 832. An inclined conical surface provides a good effect of water guiding.

Further, a through hole 8733 for the communicating vessel connection tube 34 to penetrate through is provided on the housing 80. The communicating vessel 30 further includes a pressing cover 37. The pressing cover 37 is connected to an edge of an opening of the through hole 8733. The pressing cover 37 is provided with a pressing cover opening 371 for the purified water tank connection tube 22 to be inserted into the communicating vessel connection tube 34. The pressing cover 37 presses the end portion of the sealing ring 35 facing the purified water tank 20 against the communicating vessel connection tube 34.

In this way, the sealing ring 35 can be more reliably fixed on the communicating vessel connection tube 34. For example, an end portion of the pressing cover 37 is provided with an inwardly bent bending portion. A top end portion of the bending portion presses tightly against the sealing ring 35.

Correspondingly, as shown in FIG. 10, an outer wall of the purified water tank 20 is provided with a purified water tank mounting groove 28. The purified water tank connection tube 22 is disposed on a bottom wall of the purified water tank mounting groove 28. An accommodation space I is defined between an outer wall of the purified water tank connection tube 22 and a side groove wall of the purified water tank mounting groove 28. The accommodation space I is used for accommodating the pressing cover 37. In this way, a surface of the purified water tank 20 is relatively flat, and the structure is aesthetically pleasing.

In some embodiments of the present disclosure, as shown in FIG. 2 and FIG. 15, to detect whether the purified water tank 20 is located on the supporting member 81, the water purifier 100 further includes a sensor assembly 86. The sensor assembly 86 is disposed inside the housing 80. The sensor assembly 86 is configured to detect a relative position between the purified water tank 20 and the supporting member 81.

Regarding a setting position of the sensor assembly 86, for example, the sensor assembly 86 may be disposed at an inner side of the housing 80, so that a detection end of the sensor assembly 86 penetrates from inside the housing 80 to outside the housing 80 and extends to a supporting side of the supporting member 81. To trigger the sensor assembly 86, a triggering portion 861 is disposed at a position on the outer wall of the purified water tank 20 corresponding to the detection end. The triggering portion 861 is configured to contact the detection end when the purified water tank 20 is supported on the supporting member 81, o trigger the sensor assembly 86 to perform detection. In this way, determining whether the purified water tank 20 is located on the supporting member 81 is facilitated.

For example, the sensor assembly 86 may be, for example, a micro switch. When the purified water tank 20 is placed on the supporting member 81, the triggering portion 861 triggers the detection end of the sensor assembly 86 to detect that the purified water tank 20 is in place.

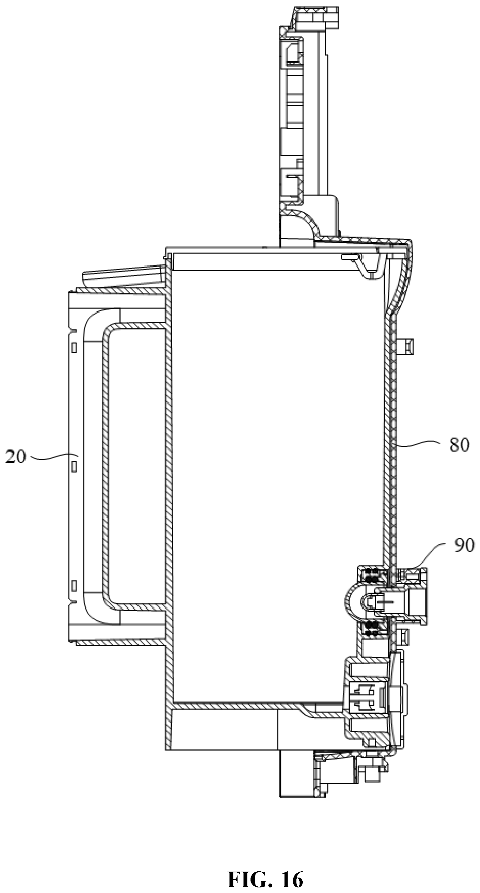

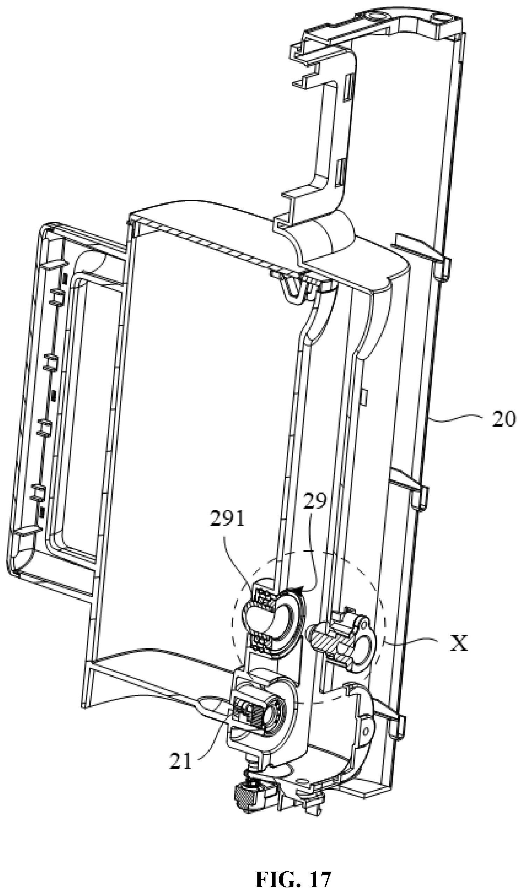

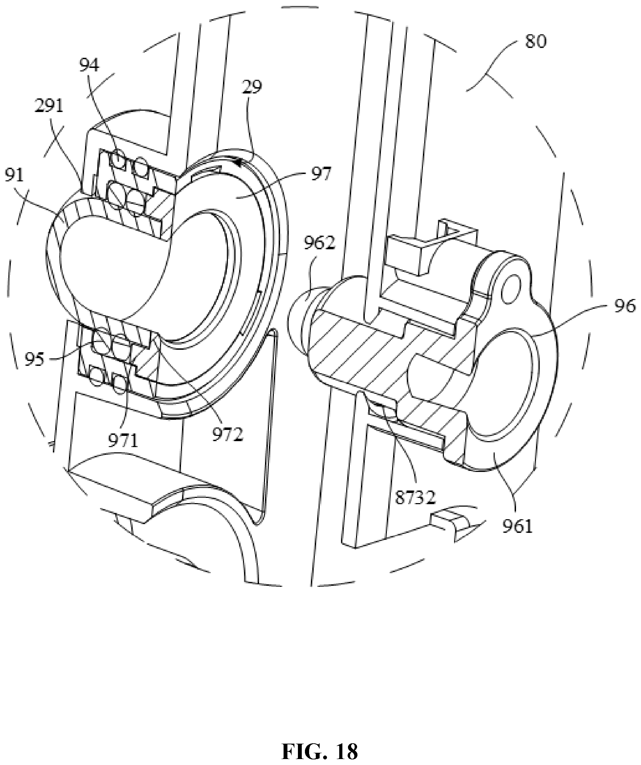

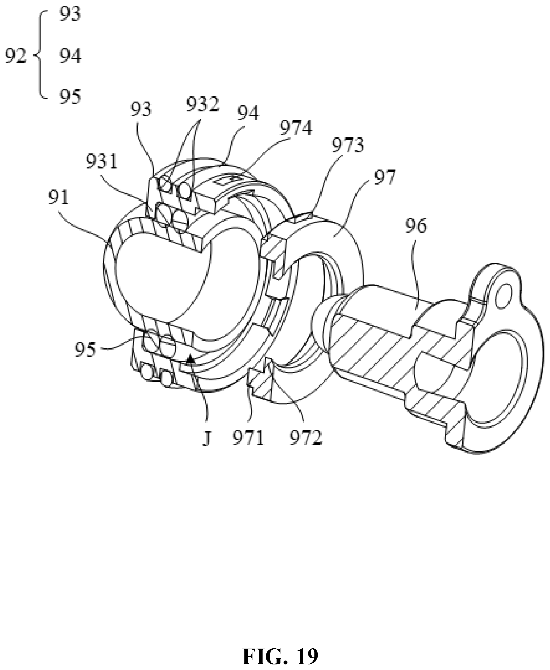

FIG. 16 is a cross-sectional view of the purified water tank 20 of the water purifier 100 according to some embodiments of the present disclosure. FIG. 17 is a cross-sectional view of the purified water tank 20 of the water purifier 100 from another perspective according to some embodiments of the present disclosure. FIG. 18 is a partial enlarged view of a region X in FIG. 17. FIG. 19 is a schematic diagram illustrating an exploded structure of a sterilization unit 90 of the water purifier 100 according to some embodiments of the present disclosure.

As shown in FIG. 16, FIG. 17, FIG. 18, and FIG. 19, in some embodiments of the present disclosure, the water purifier 100 further includes the sterilization unit 90 configured to sterilize purified water stored in the purified water tank 20. Specifically, as shown in FIG. 10 and FIG. 17, the purified water tank 20 is further provided with a first mounting groove 29. A bottom wall of the first mounting groove 29 is provided with a first mounting port 291.

As shown in FIG. 18 and FIG. 19, the sterilization unit 90 includes a lamp cover 91, a lamp cover locating assembly 92, and a sterilization lamp 96. The lamp cover locating assembly 92 includes a first locating member 93, which is annular in shape, one or more first sealing rings 94, and one or more second sealing rings 95. The lamp cover 91 is located in the first mounting groove 29. A head of the lamp cover 91 is exposed into the purified water tank 20 through the first mounting port 291. The first locating member 93 sleeves an outer peripheral side of the lamp cover 91. The one or more first sealing rings 94 are sealingly disposed between the first locating member 93 and a side groove wall of the first mounting groove 29. The one or more second sealing rings 95 are sealingly disposed between the first locating member 93 and the outer peripheral side of the lamp cover 91. For example, the one or more first sealing rings 94 interference fit between the first locating member 93 and the side groove wall of the first mounting groove 29. The one or more second sealing rings 95 interference fit between the first locating member 93 and the outer peripheral side of the lamp cover 91.

The sterilization lamp 96 is disposed on the outer wall of the housing 80. When the purified water tank 20 is supported on the supporting member 81, the sterilization lamp 96 may extend into an inner side of the lamp cover 91.

In the above solution, the purified water tank 20 is detachably disposed on the supporting member 81 on the outer wall of the housing 80. This allows the user to take the purified water tank 20 at any time according to requirements. The first locating member 93 sleeves the outer peripheral side of the lamp cover 91. The one or more first sealing rings 94 are sealingly disposed between the first locating member 93 and the side groove wall of the first mounting groove 29. The one or more second sealing rings 95 are sealingly disposed between the first locating member 93 and the outer peripheral side of the lamp cover 91. In this way, the lamp cover 91 may be mounted in the first mounting groove 29. The head of the lamp cover 91 is exposed into the purified water tank 20 through the first mounting port 291, and the sterilization lamp 96 extends into the inner side of the lamp cover 91 when the purified water tank 20 is supported on the supporting member 81. Therefore, light emitted by the sterilization lamp 96 located in the inner side of the lamp cover 91 irradiates through the lamp cover 91 into the purified water tank 20 to sterilize water stored in the purified water tank 20 when the purified water tank 20 is supported on the supporting member 81.

In addition, the lamp cover locating assembly 92 includes the first locating member 93, and the one or more first sealing rings 94 and the one or more second sealing rings 95 disposed on an outer side and an inner side of the first locating member 93, respectively. The first locating member 93 serves as a support skeleton. The one or more first sealing rings 94 and the one or more second sealing rings 95 mainly serve a deformation sealing function. Compared with related technologies that use only a sealing ring with a relatively large radial thickness of the entire sealing ring 35, radial thicknesses of the one or more first sealing rings 94 and the one or more second sealing rings 95 that undergo deformation are smaller, and aging degrees and aging speeds of the one or more first sealing rings 94 and the one or more second sealing rings 95 are reduced, thereby improving sealing reliability. As the usage time increases, the possibility of leakage decreases.

Merely by way of example, the lamp cover 91 is a light-transmitting structure. For example, the head of the lamp cover 91 may extend into the purified water tank 20 through the first mounting port 291, to allow the sterilization lamp 96 to irradiate a larger range of water as much as possible. The sterilization lamp 96 may be, for example, an ultraviolet sterilization lamp.

For example, a hardness of the first locating member 93 is greater than a hardness of the one or more first sealing rings 94 and a hardness of the one or more second sealing rings 95. This design can further reduce the aging speed of the lamp cover 91, and improve the overall strength of the lamp cover locating assembly 92. For example, the first locating member 93 may be configured as a metal member, and the one or more first sealing rings 94 and the one or more second sealing rings 95 may be configured as rubber members.

To increase sealing performance, a count of the one or more first sealing rings 94 is at least two. The at least two first sealing rings 94 are arranged along an axial direction of the first locating member 93. Similarly, a count of the one or more second sealing rings 95 is at least two. The at least two second sealing rings 95 are arranged along the axial direction of the first locating member 93. In this way, a plurality of lines of defense are arranged in the axial direction of the first locating member 93, which can minimize the occurrence of leakage.

As shown in FIG. 19, in a case where the count of the one or more first sealing rings 94 and the count of the one or more second sealing rings 95 are at least two, to perform positioning in the axial direction, at least one second mounting groove 932, which are annular in shape, may be provided on an outer peripheral surface of the first locating member 93. The at least two first sealing rings 94 are mounted in the at least one second mounting groove 932 in a one-to-one correspondence manner. In this way, movement of the at least two first sealing rings 94 in the axial direction of the first locating member 93 can be avoided.

At least one annular stop portion 931 is provided on the inner peripheral surface of the first locating member 93. The at least one stop portion 931 and the inner peripheral side of the first locating member 93 define a mounting space J which is annular and semi-open. The at least two second sealing rings 95 are mounted in the mounting space J. In this way, the at least one stop portion 931 and a sealing member 97 together form a mounting space for mounting the at least two second sealing rings 95.

In the embodiment of the present disclosure, as shown in FIG. 18 and FIG. 19, the lamp cover locating assembly 92 further includes the sealing member 97. The sealing member 97 is connected to an end portion of the first locating member 93 facing the purified water tank 20, and abuts against a side of the one or more second sealing rings 95 facing the purified water tank 20. In this way, the one or more second sealing rings 95 are prevented from disengaging from a gap between the first locating member 93 and the lamp cover 91.

Regarding a connection manner between the sealing member 97 and the first locating member 93, for example, the sealing member 97 may be provided with a clamping arm 973, and the first locating member 93 may be provided with a clamping slot 974. The sealing member 97 and the first locating member 93 are connected through a clamping fit between the clamping arm 973 and the clamping slot 974. In this way, the first locating member 93 and the sealing member 97 can be reliably connected as one piece.

Further, an end portion of the sealing member 97 along the axial direction of the first locating member 93 is provided with a first abutting portion 971 and a second abutting portion 972, which are annular in shape. The first abutting portion 971 is configured to abut against the one or more second sealing rings 95. The second abutting portion 972 is configured to abut against an end portion of the lamp cover 91 facing the purified water tank 20. In this way, movement of the one or more second sealing rings 95 in the axial direction of the first locating member 93 can be prevented, and disengagement of the lamp cover 91 from the first mounting groove 29 can be prevented.

As shown in FIG. 18, the sterilization lamp 96 includes a sterilization lamp mounting bracket 961 and a lamp body 962. The sterilization lamp mounting bracket 961 is disposed at a position of an outer wall of the housing 80 corresponding to the first mounting port 291. The lamp body 962 is disposed at an end portion of the sterilization lamp mounting bracket 961 facing the purified water tank 20. In this way, the sterilization lamp 96 can be mounted at a position corresponding to the lamp cover 91.

The housing 80 is provided with a second mounting port 8732, so that the sterilization lamp mounting bracket 961 can penetrate through the second mounting port 8732 and extend out of the housing 80.

As shown in FIG. 17, both the first mounting port 291 and the purified water tank communication port 21 are located between a top and a bottom of the purified water tank 20, and a setting position of the first mounting port 291 is higher than a setting position of the purified water tank communication port 21. In this way, sterilization light emitted by the sterilization lamp 96 covers water in the purified water tank 20 as much as possible.

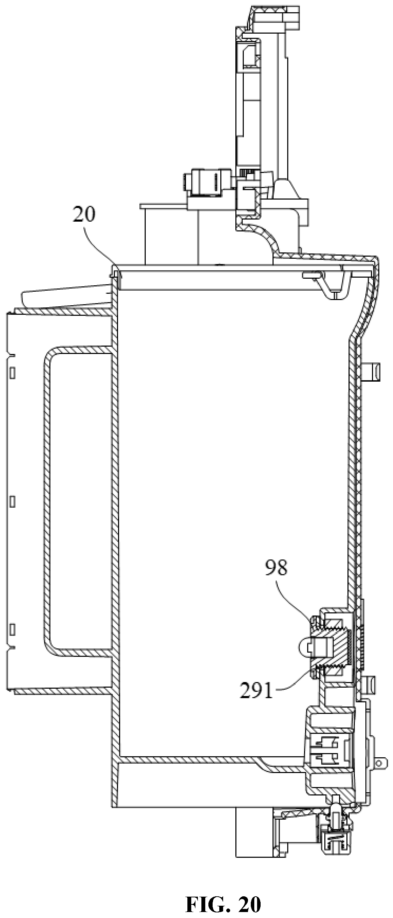

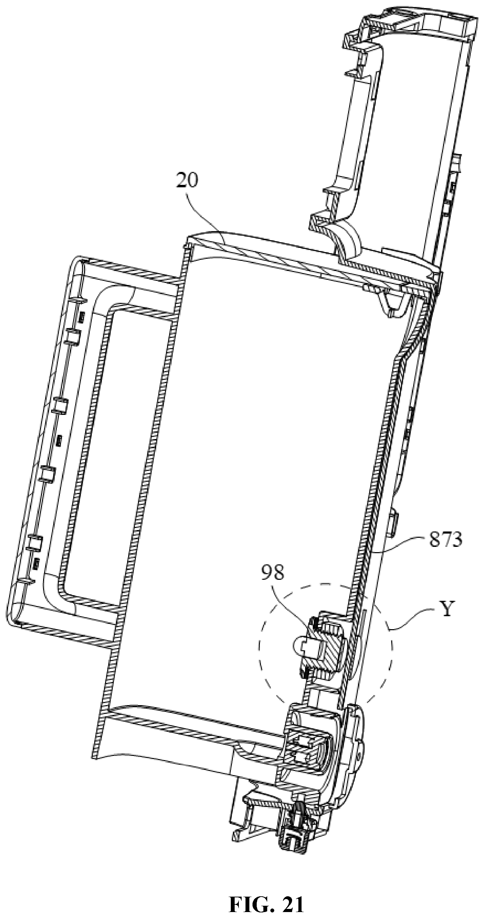

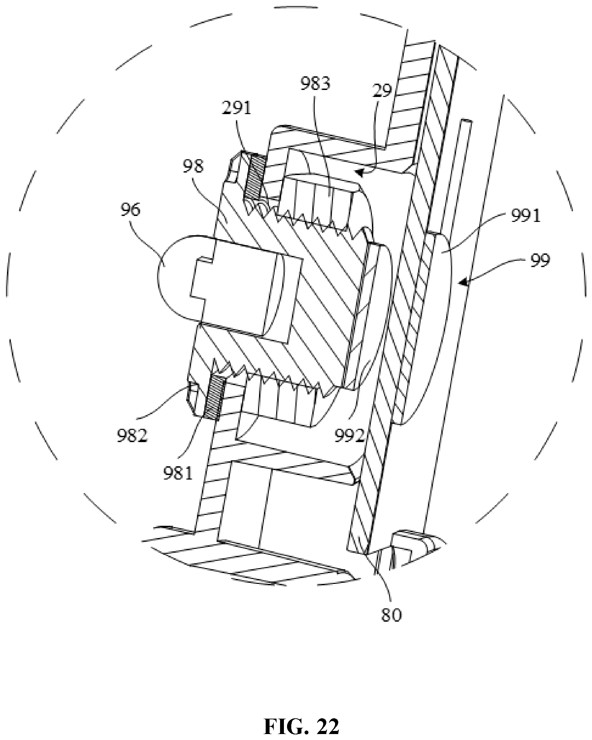

FIG. 20 is a cross-sectional view illustrating another structure of the purified water tank 20 of the water purifier 100 according to some embodiments of the present disclosure. FIG. 21 is a cross-sectional view illustrating another structure of the purified water tank 20 of the water purifier 100 from another perspective according to some embodiments of the present disclosure. FIG. 22 is is a partial enlarged view of a region Y in FIG. 21.

As shown in FIG. 20, FIG. 21, and FIG. 22, in the above solution, the front panel 873 needs to be provided with an opening used for mounting the sterilization lamp 96, which affects the visual perception of the user. Accordingly, the sterilization unit 90 may be configured in a wireless mode.

In specific implementation, the sterilization unit 90 may include a lamp bracket 98. The lamp bracket 98 penetrates through the first mounting port 291 and is sealingly connected to the first mounting port 291. Regarding a manner of the sealing connection, for example, a flange portion 982 may be provided at a first end of the lamp bracket 98. The flange portion 982 is lapped on an edge portion of the first mounting port 291, and a third sealing ring 981 is provided between the flange portion 982 and the edge portion of the first mounting port 291. At this time, the sterilization lamp 96 may be disposed at an end portion of the lamp bracket 98 facing an inner side of the purified water tank 20. In this way, the sterilization lamp 96 directly extends into an interior of the purified water tank 20. Compared with the previous solution, an irradiation range within the purified water tank 20 is larger.

Further, as shown in FIG. 22, the sterilization unit 90 further includes a second mounting member 983 sleeving the lamp bracket 98. The second mounting member 983 may be located on an outer side of the purified water tank 20. For example, the second mounting member 983 may be located in the first mounting groove 29, and the second mounting member 983 may be configured to apply a force toward the outer side of the purified water tank 20 to the flange portion 982, so that the flange portion 982 abuts the third sealing ring 981 against an inner wall of the purified water tank 20. In practical application, the second mounting member 983 may abut against a bottom wall of the first mounting groove 29. The second mounting member 983 and the lamp bracket 98 may be in threaded engagement. At this time, the flange portion 982, the one or more first sealing rings 94, and the second mounting member 983 abut against a bottom of the first mounting groove 29 from the inner side and the outer side of the purified water tank 20, respectively.

To locate the sterilization lamp 96, the end portion of the lamp bracket 98 facing the inner side of the purified water tank 20 is provided with a mounting groove. The sterilization lamp 96 is sealingly disposed in the mounting groove.

In the embodiment of the present disclosure, the sterilization unit 90 further includes a wireless assembly 99. The wireless assembly 99 includes a wireless transmission unit 991 and a wireless reception unit 992. The wireless transmission unit 991 is disposed on an inner wall of the housing 80 and is electrically connected to a power supply circuit board (not shown in the figure) of the water purifier 100. The wireless reception unit 992 is disposed at an end portion of the lamp bracket 98 facing the outer side of the purified water tank 20. When the purified water tank 20 is supported on the supporting member 81, the wireless transmission unit 991 and the wireless reception unit 992 are arranged opposite to each other, to supply power to the sterilization lamp 96 through the wireless reception unit 992.

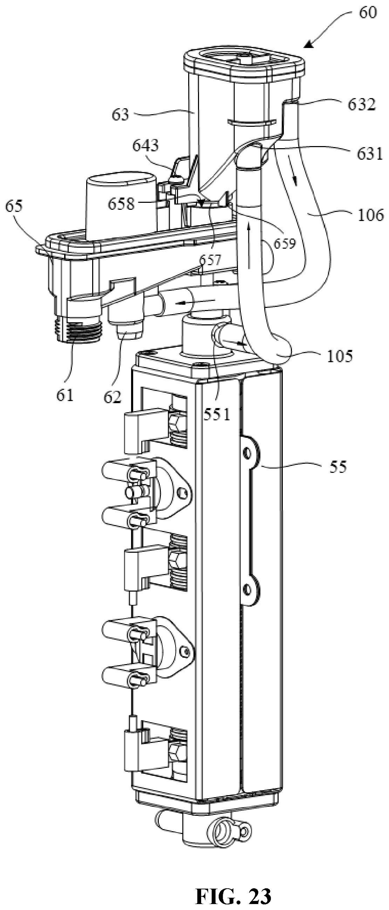

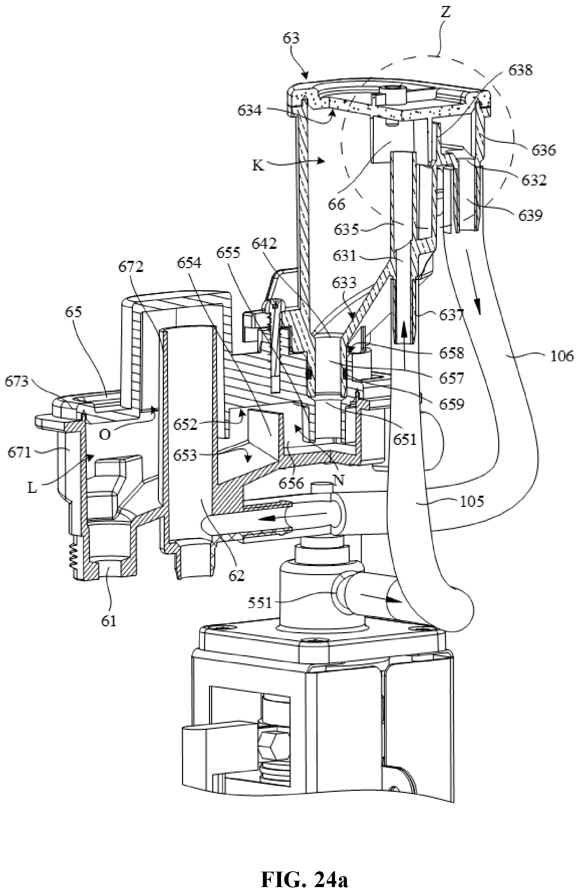

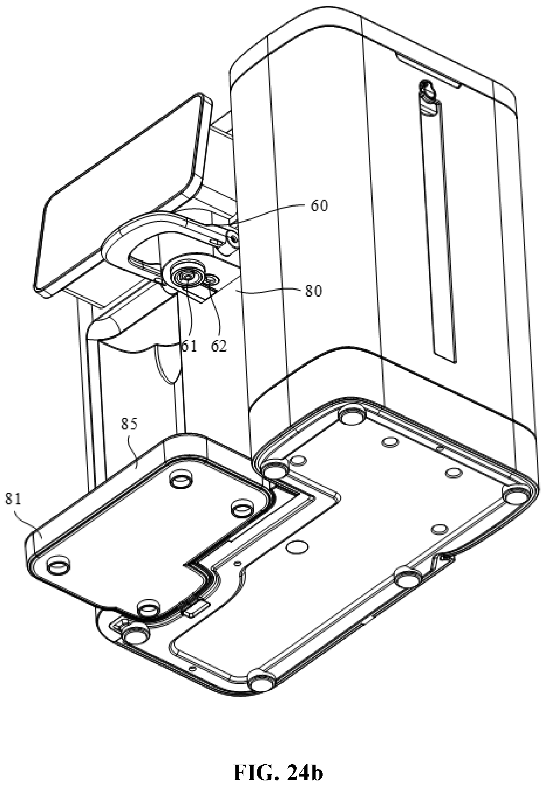

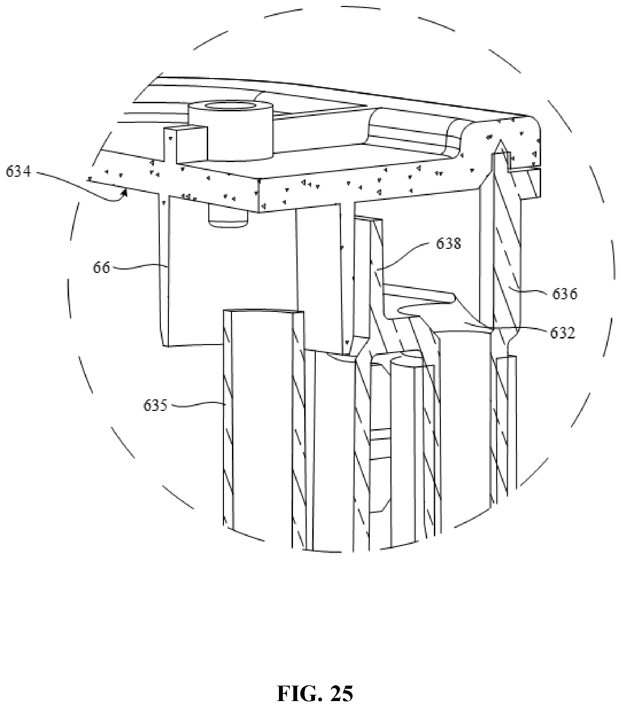

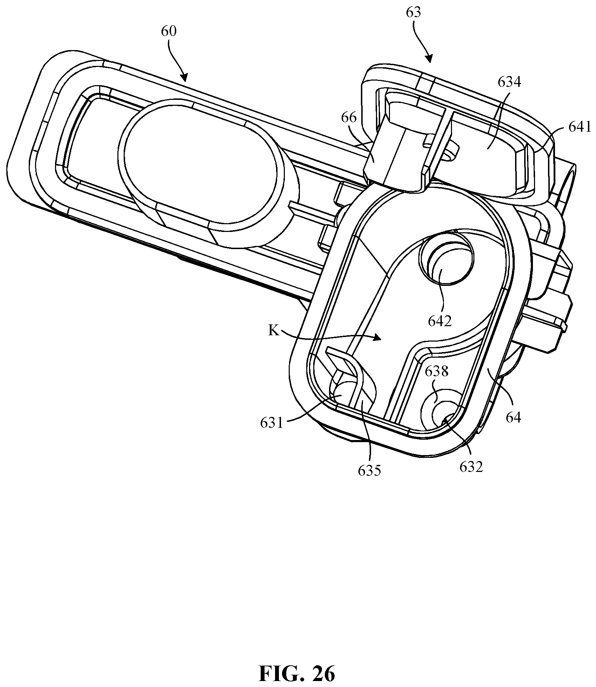

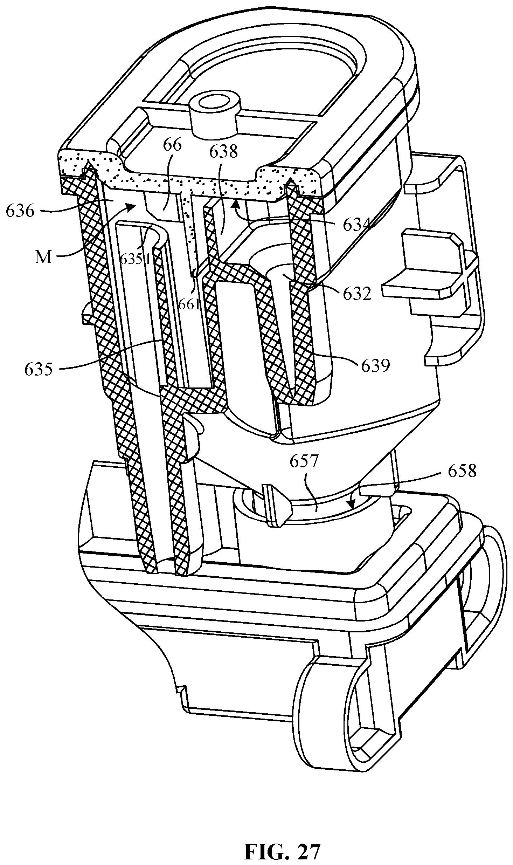

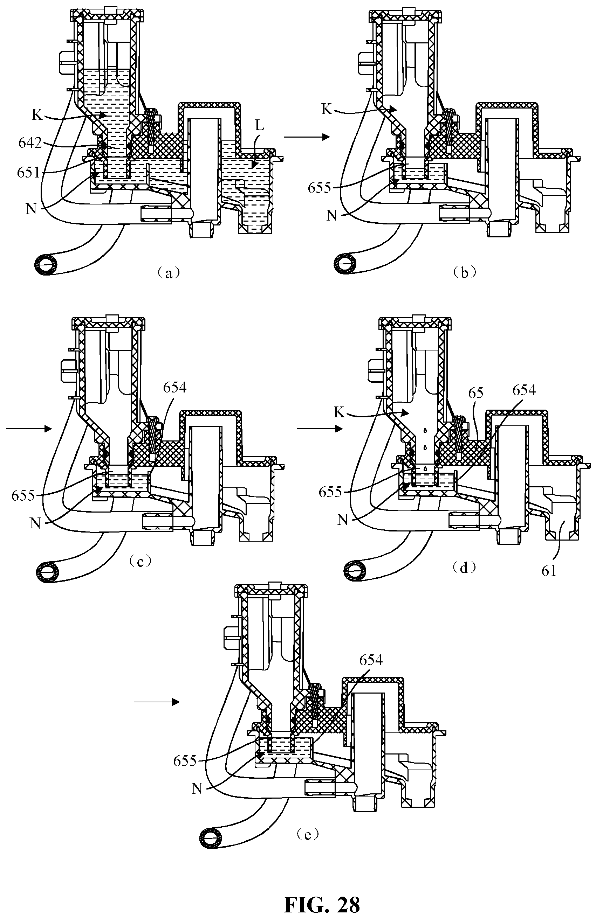

FIG. 23 is a schematic diagram illustrating a structure of a water vapor separator according to some embodiments of the present disclosure. FIG. 24a is a schematic diagram illustrating a cross-sectional structure of a water vapor separator according to some embodiments of the present disclosure. FIG. 24b is a schematic diagram illustrating a structure of a water purifier from another perspective according to some embodiments of the present disclosure. FIG. 25 is a partial enlarged view of a region Z in FIG. 24a. FIG. 26 is a schematic diagram illustrating a structure of a water vapor separator from another perspective according to some embodiments of the present disclosure. FIG. 27 is a partial cross-sectional view of a water vapor separator according to some embodiments of the present disclosure. FIG. 28 is a cross-sectional view of a water vapor separator from another perspective according to some embodiments of the present disclosure. It should be understood that, to facilitate observation of internal structures, FIG. 26 shows a schematic diagram of a state where a first-stage separation body cover 641 is opened relative to a first-stage separation body 64.

In the embodiment of the present disclosure, as mentioned above, the water vapor separator 60 is used for separating steam from heated purified water. The water vapor separator 60 is provided with the water vapor separator water outlet 61. The water vapor separator water outlet 61 forms a water taking port of the water purifier 100.

In water vapor separators of related technologies, the problem of poor separation effect on steam exists. Water flowing out from the water vapor separator water outlet contains a large amount of steam. To avoid this problem, water purifiers of related technologies often control an outlet water temperature at about 93 °C to reduce the steam in the outlet water. Accordingly, the water purifiers of related technologies have the problem of insufficiently high outlet water temperature.

To solve this problem, the embodiment of the present disclosure improves the structure of the water vapor separator 60.

Specifically, as shown in FIG. 23, FIG. 24a, and FIG. 25, the water vapor separator 60 includes a first-stage water vapor separation body 63 and a second-stage water vapor separation body 65 for performing water vapor separation. The first-stage water vapor separation body 63 and the second-stage water vapor separation body 65 are respectively provided with a first-stage water vapor separation cavity K and a second-stage water vapor separation cavity L that communicate with each other.

The first-stage water vapor separation body 63 is provided with a water vapor separator water inlet 631 and a first air outlet 632 that communicate to the first-stage water vapor separation cavity K. The water vapor separator water outlet 61 and the water vapor separator air outlet 62 are provided on the second-stage water vapor separation body 65 and communicate to the second-stage water vapor separation cavity L. The water vapor separator water inlet 631 is configured to be connected to a hot water supply source.

The water vapor separator water inlet 631 is provided on a bottom wall 633 of the first-stage water vapor separation cavity. The bottom wall 633 of the first-stage water vapor separation cavity is provided with a first guide tube 635 extending toward a top wall 634 of the first-stage water vapor separation cavity. The first guide tube 635 communicates to the water vapor separator water inlet 631. The top wall 634 of the first-stage water vapor separation cavity is further provided with a guide wall 66 extending toward the bottom wall 633 of the first-stage water vapor separation cavity. The guide wall 66 abuts against a peripheral outer side of at least a portion of a tube segment of the first guide tube 635.

The water vapor separator 60 includes the first-stage water vapor separation body 63 and the second-stage water vapor separation body 65 for performing water vapor separation, and the first-stage water vapor separation cavity K in the first-stage water vapor separation body 63 and the second-stage water vapor separation cavity L in the second-stage water vapor separation body 65 communicate with each other. In this way, a water vapor mixture first enters the first-stage water vapor separation body 63 for first water vapor separation, and then enters the second-stage water vapor separation body 65 for second water vapor separation, achieving better water vapor separation effect.

In addition, the water vapor separator water inlet 631 is disposed on the bottom wall 633 of the first-stage water vapor separation cavity, and the bottom wall 633 of the first-stage water vapor separation cavity is provided with the first guide tube 635 extending toward the top wall 634 of the first-stage water vapor separation cavity. In this way, the water vapor mixture entering the first-stage water vapor separation cavity K from the water vapor separator water inlet 631 enters the first guide tube 635. In addition, the top wall 634 of the first-stage water vapor separation cavity is provided with the guide wall 66 extending toward the bottom wall 633 of the first-stage water vapor separation cavity. The guide wall 66 is disposed on the peripheral outer side of the at least a portion of the tube segment of the first guide tube 635. In this way, after the water vapor mixture in the first guide tube 635 leaves the first guide tube 635, the water vapor mixture rushes toward the top wall 634 of the first-stage water vapor separation cavity. The top wall 634 of the first-stage water vapor separation cavity may disperse the water vapor mixture to separate a portion of steam in the water vapor mixture from water flow. The water flow flows down along the guide wall 66 into a bottom of the first-stage water vapor separation cavity K. The steam flows upward and is discharged from the first-stage water vapor separation body 63 through the first air outlet 632. As described above, in a case where the water vapor separation effect is good, the steam in the water is less, and the outlet water temperature of the water purifier can be set higher to meet water usage demand of the user.

The hot water supply source may be, for example, the heater 55. A water outlet 551 of the heater may be connected to the water vapor separator water inlet 631 through a fifth pipeline 105. In other embodiments, the water outlet 551 may be directly connected to the water vapor separator water inlet 631.

In the embodiments of the present disclosure, a setting height of a bottom end portion of the guide wall 66 facing the bottom wall 633 of a first-stage water vapor separation cavity is lower than a setting height of a top end portion of the first guide tube 635 facing the first-stage water vapor separation cavity K.

By making the bottom end portion of the guide wall 66 lower than the top end portion of the first guide tube 635, water flow dispersed after the water vapor mixture out from the first guide tube 635 is dispersed by the top wall 634 of the first-stage water vapor separation cavity reliably falls onto the bottom wall 633 of the first-stage water vapor separation cavity along the guide wall 66, and the water flow does not enter the first guide tube 635 from the top end portion of the first guide tube 635.

Further, as shown in FIG. 27, the guide wall 66 and a portion of a side wall 636 of the first-stage water vapor separation cavity define a dispersing cavity M. A portion of a tube segment on a top side of the first guide tube 635 extends into the dispersing cavity M.

In some embodiments, at least a portion of an outer tube wall of the first guide tube 635 and an inner wall of the first-stage water vapor separation cavity K are configured as an integral component, which facilitates the processing and manufacturing process.

As shown in FIG. 24a and FIG. 27, further, an outer wall of the first-stage water vapor separation body 63 is provided with a first mounting tube 637 coaxial with the first guide tube 635 and communicating with the first guide tube 635. In this way, the water vapor mixture flowing out from the water outlet 551 of the heater can be conveniently guided into the first guide tube 635.

Further, the first air outlet 632 is disposed on the side wall 636 of the first-stage water vapor separation cavity. The side wall 636 of the first-stage water vapor separation cavity is provided with a second guide tube 638 extending toward the top wall 634 of the first-stage water vapor separation cavity. The second guide tube 638 communicates with the first air outlet 632. The guide wall 66 extends between the first guide tube 635 and the second guide tube 638. The top end portion of the first guide tube 635 and a top end portion of the second guide tube 638 are separated by the guide wall 66.

With such a configuration, a setting height of the bottom end portion of the guide wall 66 is actually lower than a setting height of the top end portion of the second guide tube 638. After the water vapor mixture out from the first guide tube 635 is dispersed by the top wall 634 of the first-stage water vapor separation cavity, the water flow flows downward on a side of the guide wall 66 facing the first guide tube 635. Due to the shielding of the guide wall 66, the water flow may not enter the second guide tube 638.

Similar to the first guide tube 635, at least a portion of an outer tube wall of the second guide tube 638 and the inner wall of the first-stage water vapor separation cavity K are configured as an integral component, which facilitates the processing and manufacturing process.

In the embodiments of the present disclosure, the outer wall of the first-stage water vapor separation body 63 is provided with a second mounting tube 639 coaxial with the second guide tube 638 and communicating with the second guide tube 638. In this way, steam after water vapor separation can be conveniently guided out of the first-stage water vapor separation cavity K. For example, as shown in FIG. 24a, the second mounting tube 639 may communicate with the water vapor separator air outlet 62 on the second-stage water vapor separation body 65 through a sixth pipeline 106.

As shown in FIG. 26 and FIG. 27, further, the first-stage water vapor separation body 63 includes a first-stage separation body 64 and a first-stage separation body cover 641 disposed on the first-stage separation body 64. The guide wall 66 is disposed on the first-stage separation body cover 641. Such a configuration can facilitate the processing procedure.

As shown in FIG. 24a, FIG. 27, and FIG. 28, the first-stage water vapor separation body 63 is provided with a first connection port 642 communicating with the first-stage water vapor separation cavity K. The second-stage water vapor separation body 65 is provided with a second connection port 651 communicating with the second-stage water vapor separation cavity L. The first connection port 642 communicates with the second connection port 651.

A top wall 652 of the second-stage water vapor separation cavity is provided with a third guide tube 655 extending toward a bottom wall 653 of the second-stage water vapor separation cavity. The third guide tube 655 communicates with the second connection port 651. The bottom wall 653 of the second-stage water vapor separation cavity is provided with a stop wall 654 extending toward the top wall 652 of the second-stage water vapor separation cavity. The stop wall 654 is positioned to block a region between an outer peripheral side of the third guide tube 655 and the water vapor separator water outlet 61.

By providing the third guide tube 655 extending from the top wall 652 of the second-stage water vapor separation cavity toward the bottom wall 653 of the second-stage water vapor separation cavity, water flowing out from the first-stage water vapor separation cavity K falls onto the bottom wall 653 of the second-stage water vapor separation cavity and is dispsersed again to separate a portion of the steam mixed in the water flow from the water flow. The bottom wall 653 of the second-stage water vapor separation cavity is provided with the stop wall 654 extending toward the top wall of the second-stage water vapor separation cavity. The stop wall 654 is positioned to block the region between the outer peripheral side of the third guide tube 655 and the water vapor separator water outlet 61. In this way, the water flow after being dispersed and separated on the bottom wall 653 of the second-stage water vapor separation cavity encounters the stop wall 654 during the flow toward the water vapor separator water outlet 61 and is dispsersed again for water vapor separation. The separated steam flows out of the second-stage water vapor separation cavity L from the water vapor separator air outlet 62. The water flow dispsersed again by the stop wall 654 contains a relatively low amount of steam and may flow out of the second-stage water vapor separation cavity L through the water vapor separator water outlet 61. In this way, the water flow entering the second-stage water vapor separation cavity L undergoes two more water vapor separations. Combined with the use of the first-stage water vapor separation body 63, the water vapor separation effect for hot water reaches a relatively optimal degree.

As shown in FIG. 24a and FIG. 28, further, the bottom wall 653 of the second-stage water vapor separation cavity is provided with a retention groove N spaced apart from the water vapor separator water outlet. A bottom end portion of the third guide tube 655 extends into the retention groove N.

By making the bottom end portion of the third guide tube 655 extend into the retention groove N, a height of the bottom end portion of the third guide tube 655 is lower than a height of a groove edge portion of the retention groove N. In this way, at the moment water taking stops, water flowing out from the first-stage water vapor separation cavity K may rush out of the third guide tube 655 due to water flow inertia and water adhesion characteristics, causing a water level inside the third guide tube 655 to be lower than a water level inside the retention groove N (which is filled with water). As time passes and the water in the third guide tube 655 gradually stabilizes, a portion of the water in the retention groove N returns to the third guide tube 655, causing the water level inside the third guide tube 655 to equalize with the water level inside the retention groove N. Consequently, the water level inside the retention groove N is lower than the groove edge portion and is not fully filled. At this time, if residual water droplets in the first-stage water vapor separation cavity K fall into the second-stage water vapor separation body 65, the water level inside the retention groove N and the water level inside the third guide tube 655 may rise accordingly. However, due to the viscosity of water, water may adhere to side groove walls of the retention groove N, i.e., water in the retention groove N may not flow out. Accordingly, no water droplets may fall from the water vapor separator water outlet 61. In this way, a quick water sealing effect is achieved when water taking stops, thereby effectively improving the problem of water leakage at the water taking port of the water purifier 100.

In related technologies, air may easily enter an inner cavity of the water vapor separator 60 from the water vapor separator water outlet 61. Over time, bacteria may easily breed. Furthermore, the inner cavity is a region that the user cannot clean. In view of this, by providing the retention groove N, after water taking stops, the bottom end portion of the third guide tube 655 extends into the retention groove N to serve as a liquid seal. In this way, external air may be prevented from entering the inner cavity of the water vapor separator 60, particularly the first-stage water vapor separation body 63. Bacterial growth can be inhibited, making water output from the water vapor separator 60 cleaner and more hygienic.

In some embodiments, the stop wall 654 and a portion of a side wall 656 of the second-stage water vapor separation cavity define the retention groove N. With such a configuration, compared to forming a groove on the bottom wall 653 of the second-stage water vapor separation cavity, the volume of the second-stage water vapor separation body 65 can be relativley small.

As shown in FIG. 23 and FIG. 24a, further, an outer wall of the first-stage water vapor separation body 63 is provided with a first mating tube 657 communicating with the first connection port 642. The second-stage water vapor separation body 65 is provided with a first mating insertion slot 658 communicating with the second connection port 651. The first mating tube 657 and the first mating insertion slot 658 are engaged in an insertion fit manner, so that the first connection port 642 communicates with the second connection port 651.

It should be understood that, to prevent water leakage between the first mating tube 657 and the first mating insertion slot 658, a sealing member 660 may be provided between an outer wall of the first mating tube 657 and an inner slot wall of the first mating insertion slot 658. The sealing member 660 may be an annular sealing ring that sleeves an outer periphery of the first mating tube 657 and is clamped between the first mating tube 657 and the first mating insertion slot 658.

In this way, the first-stage water vapor separation body 63 and the second-stage water vapor separation body 65 are engaged in the insertion fit manner, making the cooperation between the first-stage water vapor separation body 63 and the second-stage water vapor separation body 65 relatively secure. It should be understood that, as shown in FIG. 23, the first-stage water vapor separation body 63 and the second-stage water vapor separation body 65 may be fixedly connected by a fastener 643, making the connection between the first-stage water vapor separation body 63 and the second-stage water vapor separation body 65 more secure. A plurality of positioning ribs 659 arranged at intervals in a circumferential direction may be provided on an outer peripheral wall of the first mating tube 657. The plurality of positioning ribs 659 abut against a slot opening of the first mating insertion slot 658 to assist in positioning the insertion fit between the first mating tube 657 and the first mating insertion slot 658.

As shown in FIG. 23 and FIG. 24a, further, the second-stage water vapor separation body 65 includes a second-stage water vapor separation body 671 and a second-stage water vapor separation cover 673 disposed on the second-stage water vapor separation body 671. The first mating insertion slot 658 is disposed on a top side of the second-stage water vapor separation cover 673. The third guide tube 655 is disposed on a bottom side of the second-stage water vapor separation cover 673 and communicates with the first mating insertion slot 658.

In this way, after the first mating tube 657 is inserted into the first mating insertion slot 658, water flowing out from the first mating tube 657 may directly enter the third guide tube 655. For example, the first mating tube 657 and the third guide tube 655 may be arranged coaxially.

Further, the water vapor separator water outlet 61 is disposed on the bottom wall 653 of the second-stage water vapor separation cavity. The bottom wall 653 of the second-stage water vapor separation cavity is provided as an inclined wall structure inclined toward the water vapor separator water outlet 61. In this way, water flowing out from the retention groove N can more easily flow into the water vapor separator water outlet 61 along the inclined wall.

As shown in FIG. 24a and FIG. 27, further, the water vapor separator air outlet 62 is disposed on the bottom wall 653 of the second-stage water vapor separation cavity and located between the water vapor separator water outlet 61 and the stop wall 654.

The bottom wall 653 of the second-stage water vapor separation cavity is provided with a fourth guide tube 672 extending toward the top wall 652 of the second-stage water vapor separation cavity. The fourth guide tube 672 communicates with the water vapor separator air outlet 62. A top end portion of the fourth guide tube 672 is spaced apart from the top wall 652 of the second-stage water vapor separation cavity.

In this way, steam separated in the second-stage water vapor separation cavity L rises and gathers at a top of the second-stage water vapor separation cavity L. The steam may enter the fourth guide tube 672 from the top end portion of the fourth guide tube 672 and flow out of the second-stage water vapor separation cavity L from the water vapor separator air outlet 62.

Further, the water vapor separator air outlet 62 is located at a position of the bottom wall 653 of the second-stage water vapor separation cavity close to the water vapor separator water outlet 61.

In the embodiments of the present disclosure, an inner side wall of the second-stage water vapor separation cover 673 is provided with an avoidance recess O at a position corresponding to the fourth guide tube 672. The top end portion of the fourth guide tube 672 extends into the avoidance recess O.

In this way, even if the fourth guide tube 672 is relatively long, an external contour size of the second-stage water vapor separation body 65 is not increased.

Further, the water vapor separator air outlet 62 is located between the water vapor separator water outlet 61 and the second connection port 651. The position of the first connection port 642 corresponds to the position of the second connection port 651.

Further, the water vapor separator water outlet 61, the water vapor separator air outlet 62, and the first connection port 642 are arranged in a row.

As shown in FIG. 24b, as mentioned earlier, an outer wall of the housing 80 is provided with the supporting member 81. The water collecting box 85 is formed on the supporting member 81. During water taking, the user may place a water taking container on the water collecting box 85 to take water from the position of the water vapor separator water outlet 61. A setting position of the water vapor separator 60, particularly the water vapor separator water outlet 61 and the water vapor separator air outlet 62, needs to be located above the supporting member 81 (the water collecting box 85) and correspond to the position of the supporting member 81.

As mentioned earlier, an avoidance notch needs to be provided on the housing 80 to allow a portion of the structure of the water vapor separator 60 to be exposed to the outer side of the housing 80. For example, the water vapor separator water outlet 61 and the water vapor separator air outlet 62 need to be located on the outer side of the housing 80, which facilitates water taking, and facilitates air exhausting without air entering the interior of the housing 80 to affect various components inside the housing 80.

Further, the first connection port 642 is disposed on the bottom wall 633 of the first-stage water vapor separation cavity. The bottom wall 633 of the first-stage water vapor separation cavity is provided as an inclined structure inclined toward the first connection port 642. In this way, water flow flowing downward from the guide wall 66 can more easily flow out of the first-stage water vapor separation cavity K from the first connection port 642. As described above, the water vapor separator liquid inlet 631 and the first connection port 642 are both located on the bottom wall 633 of the first-stage water vapor separation cavity. However, the setting position of the water vapor separator liquid inlet 631 is higher than the setting position of the first connection port 642. This facilitates fluid flowing out from the first guide tube 635 to be more easily guided to the first connection port 642 from the bottom wall 633 of the first-stage water vapor separation cavity.

In addition, as described above, the water vapor separator air outlet 62 may communicate with the interior of the filter housing 42. In this way, steam discharged from the water vapor separator air outlet 62 may be discharged to the atmosphere through the filter housing 42. As another example, a portion of the structure of the water vapor separator 60 may be arranged inside the housing 80, and both the water vapor separator water outlet 61 and the water vapor separator air outlet 62 may be disposed outside the housing 80. Such a configuration facilitates steam discharged from the water vapor separator air outlet 62 to dissipate to the outer side of the housing.

In addition, in the embodiments of the present disclosure, a cross-sectional area of the water vapor separator air outlet 62 is greater than or equal to 22 mm$^2$. Since steam discharged from the water vapor separator air outlet 62 forms condensate upon contacting outside air, and the condensate may directly flow into an external water cup. When the cross-sectional area of the water vapor separator air outlet 62 is too small, the condensate may form a water film when penetrating through the water vapor separator air outlet 62, causing poor exhaust. This leads to steam being discharged together with water flow from the water vapor separator water outlet 61, resulting in flow interruption and steam sputtering. When the cross-sectional area of the water vapor separator air outlet 62 is greater than or equal to 22 mm$^2$, this situation can be avoided.

Further, a cross-sectional area of the first connection port 642 is greater than or equal to 22 mm$^2$. This may prevent forming a water film due to an excessively small cross-sectional area when water flows out of a first-stage water vapor separation cavity K through the first connection port 642 to cause poor water drainage.

An operation process of a water cutoff operation of the water vapor separator 60 is described below as shown in FIG. 28.

In FIG. 28, the water cutoff process of the water vapor separator is divided into six states.

State (a) is a water level state during water production.

State (b) corresponds to the moment when water taking stops. Water flowing out from the first-stage water vapor separation cavity K may rush out of the third guide tube 655 due to water flow inertia and water adhesion characteristics. This causes the water level inside the third guide tube 655 to be lower than the water level inside the retention groove N when the retention groove N is filled with water.

State (c) is a state where, as time increases, water in the third guide tube 655 gradually stabilizes. A portion of water in the retention groove N returns to the third guide tube 655, causing the water level inside the third guide tube 655 to equalize with the water level inside the retention groove N. Consequently, the water level inside the retention groove N is lower than a top end portion of the stop wall 654.

In state (d), if residual water droplets in the first-stage water vapor separation cavity K fall into the second-stage water vapor separation body 65, the water level inside the retention groove N and the water level inside the third guide tube 655 rise correspondingly. However, due to water viscosity, water adheres to a side of the stop wall 654 close to the retention groove N, i.e., water in the retention groove N may not cross over the stop wall 654. Therefore, no water droplets fall from the water vapor separator water outlet 61. In this way, a rapid water sealing effect is achieved when water taking stops.

State (e) corresponds to a schematic diagram where the stop wall 654 blocks dripping water within the retention groove.

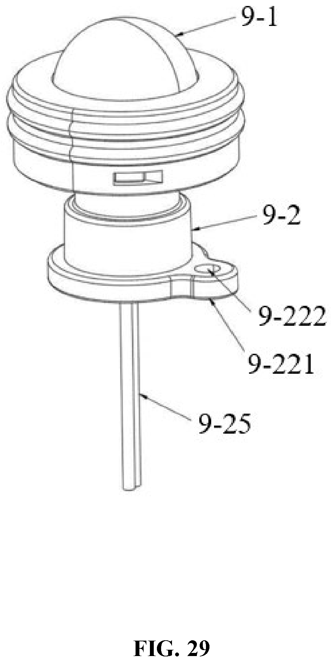

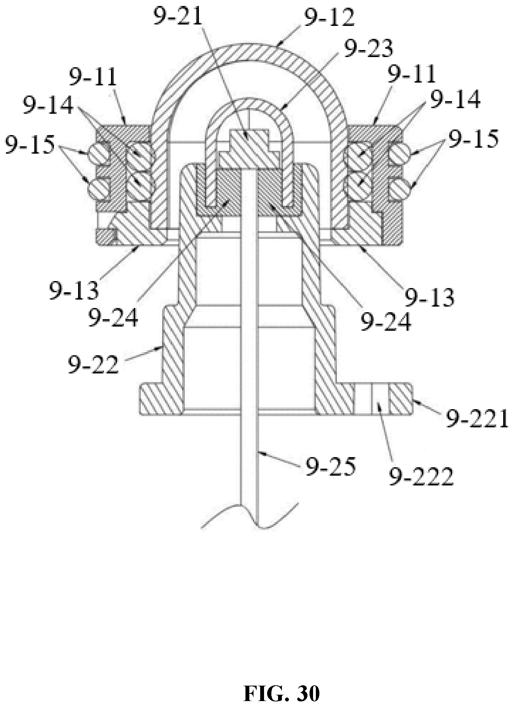

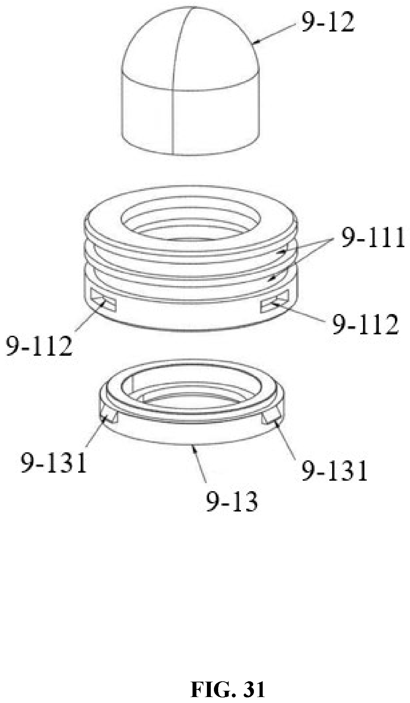

As shown in FIGs. 29-31, a split-type UV sterilization module is provided. The split-type UV sterilization module includes a lamp cover module 9-1 and a sterilization module 9-2.

The lamp cover module 9-1 includes a fixing ring 9-11, a transparent outer cover 9-12, a bottom cover 9-13, a first sealing ring 9-14, and a second sealing ring 9-15. A material of the transparent outer cover 9-12 is quartz glass. The fixing ring 9-11 sleeves an outer side surface of the transparent outer cover 9-12. The bottom cover 9-13 is disposed on a lower end between the fixing ring 9-11 and the transparent outer cover 9-12. The first sealing ring 9-14 is fixedly disposed between the fixing ring 9-11 and the transparent outer cover 9-12.

The second sealing ring 9-15 is located on an outer side surface of the fixing ring 9-11. A specific structure is as follows: the outer side surface of the fixing ring 9-11 is circumferentially provided with a sealing groove 9-111, and the second sealing ring 9-15 is located in the sealing groove 9-111.

A side surface of the fixing ring 9-11 is provided with a buckle slot 9-112. An outer side of the bottom cover 9-13 is fixedly provided with a clamping block 9-131. The clamping block 9-131 is clamped in the buckle slot 9-112.

In practical application, first, a mounting hole is drilled at a corresponding position on a purified water tank. The fixing ring 9-11 fixedly penetrates through the mounting hole on the purified water tank, and sealing between the fixing ring 9-11 and the purified water tank is achieved through the second sealing ring 9-15. Next, the transparent outer cover 9-12 is inserted into a center of the fixing ring 9-11, and sealing between the fixing ring 9-11 and the transparent outer cover 9-12 is achieved through the first sealing ring 9-14. Finally, the bottom cover 9-13 is placed between the fixing ring 9-11 and the transparent outer cover 9-12, and the clamping block 9-131 on the bottom cover 9-13 is clamped in the buckle slot 9-112. Thus, the lamp cover module 9-1 as a whole is fixedly disposed on the purified water tank.

The sterilization module 9-2 includes a UV lamp 9-21, a fixing base 9-22, an inner cover 9-23, an inner silicone base 9-24, and a lead wire 9-25. The UV lamp 9-21 is fixedly disposed on the fixing base 9-22, and the UV lamp 9-21 extends into an interior of the transparent outer cover 9-12. A specific structure is as follows: the inner cover 9-23 is fixedly disposed on the fixing base 9-22, and an end of the inner cover 9-23 close to the fixing base 9-22 is provided with an opening. The UV lamp 9-21 is located inside the inner cover 9-23. The inner silicone base 9-24 is fixedly disposed at the opening.

The transparent outer cover 9-12 is transparent, and the UV lamp 9-21 extends into the interior of the transparent outer cover 9-12. When the UV lamp 9-21 operates, ultraviolet light emitted by the UV lamp 9-21 penetrates through the transparent outer cover 9-12 and irradiates into the interior of the purified water tank, thereby providing a sterilization effect on water in the purified water tank.

The lead wire 9-25 penetrates through the fixing base 9-22 and the inner silicone base 9-24 in sequence, and is electrically connected to the UV lamp 9-21. An interior of the fixing base 9-22 is filled with resin. After the resin solidifies, the lead wire 9-25 is fixed in the interior of the fixing base 9-22. Meanwhile, the inner cover 9-23, the inner silicone base 9-24, and the fixing base 9-22 are fixed as an integral unit.

Since the sterilization module 9-2 as a whole is disposed outside the purified water tank, the lead wire 9-25 is arranged from the exterior of the purified water tank. This may not affect the aesthetic appearance of the purified water tank. Compared with traditional technology where excessive and long tubes or wires are suspended inside the purified water tank, the present disclosure achieves the purpose of not affecting the aesthetic appearance of the purified water tank.

The fixing base 9-22 is fixedly provided with a hanging lug 9-221. The hanging lug 9-221 is provided with a through hole 9-222. The sterilization module 9-2 may be fixedly disposed on equipment outside the purified water tank through the hanging lug 9-221, thereby achieving split-type installation of the lamp cover module 9-1 and the sterilization module 9-2.

An operation principle of the split-type UV sterilization module in the embodiment is as follows. In practical application, first, the mounting hole is drilled at the corresponding position on the purified water tank. The fixing ring 9-11 fixedly penetrates through the mounting hole on the purified water tank, and sealing between the fixing ring 9-11 and the purified water tank is achieved through the second sealing ring 9-15. Next, the transparent outer cover 9-12 is inserted into the center of the fixing ring 9-11, and sealing between the fixing ring 9-11 and the transparent outer cover 9-12 is achieved through the first sealing ring 9-14. Finally, the bottom cover 9-13 is placed between the fixing ring 9-11 and the transparent outer cover 9-12, and the clamping block 9-131 on the bottom cover 9-13 is clamped in the buckle slot 9-112. Thus, the lamp cover module 9-1 as a whole is fixedly disposed on the purified water tank. Then, the inner cover 9-23 extends into the transparent outer cover 9-12, thereby causing the UV lamp 9-21 to extend into the interior of the transparent outer cover 9-12. When the UV lamp 9-21 operates, ultraviolet light emitted by the UV lamp 9-21 penetrates through the transparent outer cover 9-12 and irradiates into the interior of the purified water tank, thereby providing the sterilization effect on water in the purified water tank.

Technical features of the above embodiments may be combined arbitrarily. For the sake of concise description, not all possible combinations of the various technical features in the above embodiments are described. However, as long as the combinations of these technical features have no contradiction, the combinations should be considered as within the scope recorded in the present disclosure. The above embodiments only express several implementations of the present disclosure. The description is relatively specific and detailed, but should not be construed as limiting the scope of the present disclosure. It should be pointed out that, for those having ordinary skills in the art, several variations and improvements may be made without departing from the concept of the present disclosure. These variations and improvements all fall within the protection scope of the present disclosure. Therefore, the protection scope of the present disclosure should be subject to the appended claims.

**Claims**

1. A water purifier, comprising:

   a housing (80);
   a purified water tank (20) detachably disposed on an outer side of the housing (80), wherein the purified water tank (20) is provided with a purified water tank communication port (21) and a first mounting groove (29), the purified water tank communication port (21) is configured to communicate with a purified water supply interface of the water purifier (100), and a bottom wall of the first mounting groove (29) is provided with a first mounting port (291); and
   a sterilization unit (90), comprising a lamp cover (91), a lamp cover locating assembly (92), and a sterilization lamp (96), wherein the lamp cover locating assembly (92) includes a first locating member (93), which is annular in shape, one or more first sealing rings (94), and one or more second sealing rings (95); the lamp cover (91) is located in the first mounting groove (29), and a head of the lamp cover (91) is exposed into the purified water tank (20) through the first mounting port (291); the first locating member (93) sleeves an outer peripheral side of the lamp cover (91); the one or more first sealing rings (94) are sealingly disposed between the first locating member (93) and a side groove wall of the first mounting groove (29); and the one or more second sealing rings (95) are sealingly disposed between the first locating member (93) and the outer peripheral side of the lamp cover (91);
   wherein the sterilization lamp (96) is disposed on an outer wall of the housing (80) such that, when the purified water tank (20) is mounted on the housing (80), the sterilization lamp (96) extends into an inner side of the lamp cover (91).

2. The water purifier according to claim 1, wherein a hardness of the first locating member (93) is greater than a hardness of the one or more first sealing rings (94) and a hardness of the one or more second sealing rings (95).

3. The water purifier according to claim 1, wherein the lamp cover locating assembly (92) further includes a sealing member (97), the sealing member (97) is connected to an end portion of the first locating member (93) facing the purified water tank (20) and abuts against a side of the one or more second sealing rings (95) facing the purified water tank (20).

4. The water purifier according to claim 3, wherein the sealing member (97) is provided with a clamping arm (973), the first locating member (93) is provided with a clamping slot (974), and the clamping arm (973) and the clamping slot (974) are engaged with each other.

5. The water purifier according to claim 4, wherein an end portion of the sealing member (97) along an axial direction of the first locating member (93) is provided with a first abutting portion (971) and a second abutting portion (972), which are annular in shape; the first abutting portion (971) is configured to abut against the one or more second sealing rings (95); and the second abutting portion (972) is configured to abut against an end portion of the lamp cover (91) facing the purified water tank (20).

6. The water purifier according to any one of claims 1-5, wherein a count of the one or more first sealing rings (94) is at least two, and the at least two first sealing rings (94) are arranged along an axial direction of the first locating member (93); and/or
   a count of the one or more second sealing rings (95) is at least two, and the at least two second sealing rings (95) are arranged along the axial direction of the first locating member (93).

7. The water purifier according to claim 6, wherein an outer peripheral surface of the first locating member (93) is provided with at least one second mounting groove (932), which are annular in shape, and each of the one or more first sealing rings (94) is disposed in the at least one second mounting groove (932).

8. The water purifier according to claim 6, wherein an inner peripheral surface of the first locating member (93) is provided with at least one annular stop portion (931); the at least one annular stop portion (931) and an inner peripheral side of the first locating member (93) define a mounting space (J), which is annular and semi-open; and the one or more second sealing rings (95) are disposed in the mounting space (J).

9. The water purifier according to any one of claims 1-5, wherein the sterilization lamp (96) includes a sterilization lamp mounting bracket (961) and a lamp body (962); the sterilization lamp mounting bracket (961) is disposed at a position on the outer wall of the housing (80) corresponding to the first mounting port (291); and the lamp body (962) is disposed at an end portion of the sterilization lamp mounting bracket (961) facing the purified water tank (20).

10. The water purifier according to claim 9, wherein the housing (80) is provided with a second mounting port (8732), and the sterilization lamp mounting bracket (961) penetrates through the second mounting port (8732) and extends out of the housing (80);

optionally, both the first mounting port (291) and the purified water tank communication port (21) are located between a top and a bottom of the purified water tank (20), and a setting position of the first mounting port (291) is higher than a setting position of the purified water tank communication port (21);

optionally, the water purifier (100) further comprises a filter (40), an exhaust member (70), a communicating vessel (30), and a liquid level box (10);

the exhaust member (70) is provided with a first chamber (E) in communication with atmosphere, and the first chamber (E) communicates with a filter liquid outlet of the filter (40);

the purified water tank (20) and the liquid level box (10) communicate with the atmosphere, and the liquid level box (10) is internally provided with a water level sensor (12) for detecting a water level;

the communicating vessel (30) is provided with a communicating vessel inner cavity (C), and the communicating vessel inner cavity (C) communicates with the purified water tank (20), the liquid level box (10), and the first chamber (E), respectively;

water filtered by the filter (40) is capable of being input into the exhaust member (70) and the communicating vessel (30) in sequence, and flowing into the liquid level box (10) and the purified water tank (20) through the communicating vessel inner cavity (C);

optionally, the exhaust member (70) is disposed on an outer side wall of the liquid level box (10), and opposing side walls of the exhaust member (70) and the liquid level box (10) are both provided with communication ports (14) that communicate with each other to allow the first chamber (E) to communicate with a liquid level box inner cavity (A);

optionally, the water level sensor (12) is configured as a float sensor, and the water level sensor (12) includes a first float (121) and a second float (122);

in a height direction of the liquid level box (10) inside the liquid level box (10), a first upper baffle (123), a first lower baffle (124), a second upper baffle (125), and a second lower baffle (126) are provided in sequence, the first float (121) is located between the first upper baffle (123) and the first lower baffle (124), and the second float (122) is located between the second upper baffle (125) and the second lower baffle (126); the water level sensor (12) is configured to be capable of detecting a liquid level in the liquid level box (10); when the first float (121) abuts against the first upper baffle (123), the liquid level is determined to be at a high liquid level; and when the second float (122) abuts against the second lower baffle (126), the liquid level is determined to be at a low liquid level;

optionally, the filter (40) includes a filter housing (42) and a filter body (43); the filter housing (42) is provided with a filter inner cavity with an open end, and the filter body (43) is disposed in the filter inner cavity;

the liquid level box (10) communicates with the filter inner cavity of the filter (40) through a third pipeline (103);

optionally, the liquid level box (10) is provided with a liquid level box communication port (11);

a volume of a purified water tank inner cavity (B) of the purified water tank (20) is greater than a volume of the liquid level box inner cavity (A) of the liquid level box (10);

a minimum cross-sectional area of a first communication channel (P) for communicating the purified water tank communication port (21) with the communicating vessel inner cavity (C) is greater than a minimum cross-sectional area of a second communication channel (Q) for communicating the liquid level box communication port (11) with the communicating vessel inner cavity (C);

optionally, a cross-sectional area S1 of the purified water tank inner cavity (B) along a height direction of the water purifier (100), the minimum cross-sectional area S2 of the first communication channel (P), a cross-sectional area S3 of the liquid level box inner cavity (A) along the height direction of the water purifier (100), and the minimum cross-sectional area S4 of the second communication channel (Q) satisfy:

$$S3/S4 = K*S1/S2$$

where K is a drag coefficient of fluid in the liquid level box communication port (11); and a cross-section of the purified water tank inner cavity (B) and a cross-section of the liquid level box inner cavity (A) remain unchanged along the height direction of the water purifier (100);

optionally, the cross-sectional area S1 of the purified water tank inner cavity (B) along the height direction of the water purifier (100) and the cross-sectional area S3 of the liquid level box inner cavity (A) along the height direction of the water purifier (100) satisfy: S1 > S3;

a bottom wall of the purified water tank inner cavity (B) is configured to be flush with a bottom wall of the liquid level box inner cavity (A);

optionally, the water purifier (100) further comprises a communicating vessel (30);

the communicating vessel (30) is disposed in the housing (80) and provided with the communicating vessel inner cavity (C) that communicates with the purified water supply interface in the water purifier (100), the communicating vessel (30) is provided with a communicating vessel connection tube (34) that communicates with the communicating vessel inner cavity (C); an inner wall of the communicating vessel connection tube (34) is provided with a sealing ring (35); two axial ends of the sealing ring (35) abut against the inner wall of the communicating vessel connection tube (34); and a first sealing section (353) between the two axial ends of the sealing ring (35) and the inner wall of the communicating vessel connection tube (34) defines a water storage chamber (F) together;

the purified water tank (20) is provided with a purified water tank connection tube (22); the purified water tank connection tube (22) communicates with the purified water tank inner cavity (B) of the purified water tank (20) and is disposed at a position corresponding to the purified water tank communication port (21); the purified water tank connection tube (22) is configured to be capable of being inserted into the communicating vessel connection tube (34) to enable communication between the communicating vessel inner cavity (C) and the purified water tank inner cavity (B); and cause the first sealing section (353) to elastically deform toward a radial outer side of first sealing section (353) to squeeze water in the water storage chamber (F) into the communicating vessel connection tube (34); and when disengaged from the communicating vessel connection tube (34), cause the first sealing section (353) to elastically reset toward a radial inner side of the first sealing section (353) to adsorb water in the communicating vessel connection tube (34) into the water storage chamber (F);

optionally, an inner peripheral surface of the first sealing section (353) is convexly provided with at least two interference fit portions (3531), which are annular in shape; the at least two interference fit portions (3531) are arranged at intervals along an axial direction of the sealing ring (35); and the at least two interference fit portions (3531) are configured to be in interference fit with the purified water tank connection tube (22);

optionally, a count of the at least two interference fit portions (3531) is two, and a support protrusion (354) is provided between regions on an outer peripheral surface of the sealing ring (35) corresponding to the two interference fit portions (3531);

optionally, the outer wall of the housing (80) is provided with a supporting member (81), and the purified water tank (20) is detachably disposed on the supporting member (81).

11. A water purifier, comprising:

a liquid level box (10) configured to be communicated with atmosphere and provided with a liquid level box communication port (11), wherein the liquid level box (10) is internally provided with a water level sensor (12) for detecting a water level;

a purified water tank (20) configured to be communicated with the atmosphere and provided with a purified water tank communication port (21), wherein a volume of a purified water tank inner cavity (B) of the purified water tank (20) is greater than a volume of a liquid level box inner cavity (A) of the liquid level box (10);

a communicating vessel (30) provided with a communicating vessel inner cavity (C), wherein the communicating vessel inner cavity (C) communicates with the purified water tank communication port (21) and the liquid level box communication port (11), respectively, and the communicating vessel (30) is detachably connected to the purified water tank (20); and

a filter (40) configured to be connected to a water source to be purified and communicate with the communicating vessel inner cavity (C), wherein water filtered by the filter (40) is capable of flowing into the liquid level box (10) and the purified water tank (20) through the communicating vessel inner cavity (C); wherein

a minimum cross-sectional area of a first communication channel (P) for communicating the purified water tank communication port (21) with the communicating vessel inner cavity (C) is greater than a minimum cross-sectional area of a second communication channel (Q) for communicating the liquid level box communication port (11) with the communicating vessel inner cavity (C).

12. The water purifier according to claim 11, wherein a cross-sectional area S1 of the purified water tank inner cavity (B) along a height direction of the water purifier (100), the minimum cross-sectional area S2 of the first communication channel (P), a cross-sectional area S3 of the liquid level box inner cavity (A) along the height direction of the water purifier (100), and the minimum cross-sectional area S4 of the second communication channel (Q) satisfy:

$$S3/S4 = K*S1/S2$$

where K is a drag coefficient of fluid in the liquid level box communication port (11); and a cross-section of the purified water tank inner cavity (B) and a cross-section of the liquid level box inner cavity (A) remain unchanged along the height direction of the water purifier (100).

13. The water purifier according to claim 12, wherein the communicating vessel (30) is provided with a second communication port (31) and a first communication port (32); the second communication port (31) is connected to the liquid level box communication port (11); and the first communication port (32) is connected to the purified water tank communication port (21); and

the first communication port (32) and the purified water tank communication port (21) are respectively provided with a communicating vessel check valve (36) and a purified water tank check valve (27), and a cross-sectional area of a valve core (361) of the communicating vessel check valve is less than or equal to a cross-sectional area of a valve core (271) of the purified water tank check valve.

14. The water purifier according to claim 13, wherein a cross-sectional area of the first communication port (32) is greater than a cross-sectional area of the second communication port (31).

15. The water purifier according to claim 13, wherein the communicating vessel (30) is provided with a communicating vessel connection tube (34) that communicates with the communicating vessel inner cavity (C), and the communicating vessel connection tube (34) corresponds to a setting position of the first communication port (32);

the purified water tank (20) is provided with a purified water tank connection tube (22), the purified water tank connection tube (22) corresponds to a setting position of the purified water tank communication port (21), and the purified water tank connection tube (22) communicates with the purified water tank inner cavity (B) of the purified water tank (20); and the purified water tank connection tube (22) is configured to be partially inserted into the communicating vessel connection tube (34) to enable communication between the communicating vessel inner cavity (C) and the purified water tank inner cavity (B) when the purified water tank connection tube (22) is supported on a supporting member (81); and

a partial tube section of the communicating vessel connection tube (34) not inserted by the purified water tank connection tube (22) and the purified water tank connection tube (22) define the first communication channel (P) together, and a position with the minimum cross-sectional area of the first communication channel (P) is located on the partial tube section of the communicating vessel connection tube (34) not inserted by the purified water tank connection tube (22).

16. The water purifier according to claim 13, wherein the communicating vessel (30) is provided with a communicating vessel insertion tube (341) communicating with the communicating vessel inner cavity (C), and the communicating vessel insertion tube (341) corresponds to a setting position of the second communication port (31);

the liquid level box (10) is provided with a liquid level box insertion tube (17), and the liquid level box insertion tube (17) communicates with the liquid level box inner cavity (A); and the liquid level box insertion tube (17) is inserted into the communicating vessel insertion tube (341); and a partial tube section of the communicating vessel insertion tube (341) not inserted by the liquid level box insertion tube (17) and the liquid level box insertion tube (17) define the second communication channel (Q) together, and a position with the minimum cross-sectional area of the second communication channel (Q) is located inside the liquid level box insertion tube (17).

17. The water purifier according to claim 12, wherein the communicating vessel (30) is provided with a communicating vessel liquid inlet (33) that communicates with the communicating vessel inner cavity (C), and the communicating vessel liquid inlet (33) communicates with a filter liquid outlet of the filter (40); and
a diameter of the communicating vessel liquid inlet (33) is greater than 6 mm.

18. The water purifier according to claim 12, wherein a cross-sectional area of the liquid level box communication port (11) is greater than or equal to 4.5 mm$^2$; and/or a cross-sectional area of the purified water tank communication port (21) is greater than 40 mm$^2$.

**19.** The water purifier according to claim 11, wherein a cross-sectional area S1 of the purified water tank inner cavity (B) along a height direction of the water purifier (100) and a cross-sectional area S3 of the liquid level box inner cavity (A) along the height direction of the water purifier (100) satisfy: S1 > S3; and
a bottom wall of the purified water tank inner cavity (B) is configured to be flush with a bottom wall of the liquid level box inner cavity (A).

**20.** The water purifier according to claim 11, wherein the purified water tank (20) includes a purified water tank body (25) and a water tank cover (26) that is openably and closably covered on the purified water tank body (25), and a gap is provided between the purified water tank body (25) and the water tank cover (26) to allow the purified water tank (20) to communicate with the atmosphere;

optionally, a top of the liquid level box (10) is provided with an air outlet (13) to allow the liquid level box (10) to communicate with the atmosphere;
optionally, the filter (40) includes a filter housing (42) and a filter body (43), the filter housing (42) is provided with a filter inner cavity with an open end, and the filter body (43) is disposed in the filter inner cavity;
the air outlet (13) of the liquid level box (10) communicates with the filter inner cavity of the filter (40) through a third pipeline (103);
optionally, the water purifier (100) further comprises a water pump (50), a heater (55), and a water vapor separator (60);
the water pump (50) communicates with the communicating vessel (30) and the heater (55), respectively, and is used for pumping water from the liquid level box (10) and the purified water tank (20) to the heater (55) through the communicating vessel (30);
the water vapor separator (60) communicates with the heater (55), and is used for performing water vapor separation on water heated by the heater (55);
optionally, the water vapor separator (60) includes a water vapor separator air outlet (62) and a water vapor separator water outlet (61), the water vapor separator air outlet (62) communicates with the third pipeline (103) through a fourth pipeline (104), and the water vapor separator water outlet (61) forms a water taking port of the water purifier (100);
optionally, the water purifier (100) further comprises a water collecting box (85) and a housing (80), and the filter (40), the communicating vessel (30), the liquid level box (10), the water pump (50), and the heater (55) are all disposed in the housing (80);
the water collecting box (85) is detachably disposed on an outer side of the housing (80), a top wall of the water collecting box (85) is provided with a water collecting opening (82) communicating to an interior of the water collecting box (85), and the purified water tank (20) is supported on the top wall of the water collecting box (85);
optionally, the water vapor separator (60) includes the water vapor separator water outlet (61), and the water vapor separator water outlet (61) forms the water taking port of the water purifier (100);
a portion of the water vapor separator (60) penetrates through the housing (80) and extends to an outer side of the housing (80), and the water vapor separator water outlet (61) is located on the portion of the water vapor separator (60) that extends to the outer side of the housing (80);
optionally, the water purifier (100) further comprises a booster pump, and the booster pump is configured to pump water to be purified into the filter body (43);
optionally, the water purifier (100) further comprises an exhaust member (70), the exhaust member (70) is provided with a first chamber (E) communicating with the atmosphere, the first chamber (E) communicates with the filter liquid outlet of the filter (40), and the first chamber (E) further communicates with the communicating vessel inner cavity (C) to allow the filter (40) to communicate with the communicating vessel inner cavity (C);
optionally, the exhaust member (70) is disposed on an outer side wall of the liquid level box (10), and opposing side walls of the exhaust member (70) and the liquid level box (10) are provided with communication ports (14) that communicate with each other to allow the first chamber (E) to communicate with the liquid level box inner cavity (A);
optionally, the exhaust member (70) is provided with an exhaust member liquid inlet (72) and an exhaust member liquid outlet (73), the communicating vessel (30) is provided with a communicating vessel liquid inlet (33) communicating with the communicating vessel inner cavity (C), the exhaust member liquid inlet (72) communicates with the filter liquid outlet through a first pipeline (101), and the exhaust member liquid outlet (73) communicates with the communicating vessel liquid inlet (33) of the communicating vessel (30) through a second pipeline (102);
setting heights of the communication ports (14) on the exhaust member (70) and the liquid level box (10) relative to a bottom wall of the liquid level box (10) are higher than a setting height of the exhaust member liquid inlet (72);
optionally, the communicating vessel (30) is provided with an exhaust port (301) that communicates with the communicating vessel inner cavity (C);
optionally, the water level sensor (12) is configured as a float sensor, and the water level sensor (12) includes a first float (121) and a second float (122);
in a height direction of the liquid level box (10) inside the liquid level box (10), a first upper baffle (123), a first lower baffle (124), a second upper baffle (125), and a second lower baffle (126) are provided in sequence, the first float (121) is located between the first upper baffle (123) and the first lower baffle (124), and the second float (122) is located between the second upper baffle (125) and the second lower baffle (126);
the water level sensor (12) is configured to be capable of detecting a liquid level inside the liquid level box (10), when the first float (121) abuts against the first upper baffle (123), determining that the liquid level is at a high liquid level, and when the second float (122) abuts against the second lower baffle (126), determining that the liquid level is at a low liquid level;
optionally, the water purifier (100) further comprises a controller, a booster pump, a water pump (50), and a heater (55), the booster pump is configured to pump water to be purified into the filter (40), and the water pump (50) is configured to pump water from the liquid level box (10) and the purified water tank (20) to the heater (55) through the communicating vessel (30);
the controller is electrically connected to the water level sensor (12) and the booster pump, the controller is configured to control the booster pump to stop operating when the liquid level inside the liquid level box (10) is at the high liquid level, and control the booster pump to start operating when the liquid level inside the liquid level box (10) is lower than the high liquid level; and the controller is further configured to control the water pump (50) to stop operating when the liquid level inside the liquid level box (10) is at the low liquid level to stop water output;
optionally, the water purifier (100) further comprises a housing (80) and a sterilization unit (90); the housing (80) is hollow inside, and an outer wall of the housing (80) is provided with a supporting member (81);
the purified water tank (20) is detachably disposed on the supporting member (81), the purified water tank (20) is further provided with a first mounting groove (29), and a bottom wall of the first mounting groove (29) is provided with a first mounting port (291);

the sterilization unit (90) includes a lamp cover (91), a lamp cover locating assembly (92), and a sterilization lamp (96), the lamp cover locating assembly (92) includes a first locating member (93), which is annular in shape, one or more first sealing rings (94), and one or more second sealing rings (95); the lamp cover (91) is located in the first mounting groove (29), a head of the lamp cover (91) is exposed into the purified water tank (20) through the first mounting port (291), the first locating member (93) sleeves an outer peripheral side of the lamp cover (91), the one or more first sealing rings (94) are sealingly disposed between the first locating member (93) and a side groove wall of the first mounting groove (29), and the one or more second sealing rings (95) are sealingly disposed between the first locating member (93) and the outer peripheral side of the lamp cover (91);
the sterilization lamp (96) is disposed on the outer wall of the housing (80), and when the purified water tank (20) is supported on the supporting member (81), the sterilization lamp (96) extends into an inner side of the lamp cover (91);
optionally, the lamp cover locating assembly (92) further includes a sealing member (97), the sealing member (97) is connected to an end portion of the first locating member (93) facing the purified water tank (20), and abuts against a side of the one or more second sealing rings (95) facing the purified water tank (20);
optionally, a count of the one or more first sealing rings (94) is at least two, and the at least two first sealing rings (94) are arranged along an axial direction of the first locating member (93); and/or a count of the one or more second sealing rings (95) is at least two, and the at least two second sealing rings (95) are arranged along the axial direction of the first locating member (93);
optionally, the communicating vessel (30) is disposed on the housing (80), the communicating vessel (30) is provided with a communicating vessel connection tube (34) that communicates with the communicating vessel inner cavity (C), an inner wall of the communicating vessel connection tube (34) is provided with a sealing ring (35), two axial ends of the sealing ring (35) abut against the inner wall of the communicating vessel connection tube (34), and a first sealing section (353) between the two axial ends of the sealing ring (35) and the inner wall of the communicating vessel connection tube (34) defines a water storage chamber (F) together;
the purified water tank (20) is provided with a purified water tank connection tube (22), the purified water tank connection tube (22) corresponds to a setting position of the purified water tank communication port (21), and the purified water tank connection tube (22) communicates with the purified water tank inner cavity (B) of the purified water tank (20); the purified water tank connection tube (22) is configured to be capable of being inserted into the communicating vessel connection tube (34) when the purified water tank connection tube (22) supported on the supporting member (81) to enable communication between the communicating vessel inner cavity (C) and the purified water tank inner cavity (B); and cause the first sealing section (353) to elastically deform toward an outer side in a radial direction of first sealing section (353) to squeeze water in the water storage chamber (F) into the communicating vessel connection tube (34); and when disengaged from the communicating vessel connection tube (34), cause the first sealing section (353) to elastically reset toward an inner side in the radial direction of the first sealing section (353) to adsorb water in the communicating vessel connection tube (34) into the water storage chamber (F);

optionally, an inner peripheral surface of the first sealing section (353) is convexly provided with at least two interference fit portions (3531), which are annular in shape, the at least two interference fit portions (3531) are arranged along an axial direction of the sealing ring (35) at intervals, and the at least two interference fit portions (3531) are used for interference fit with the purified water tank connection tube (22);

optionally, a count of the at least two interference fit portions (3531) is two, and an outer peripheral surface of the sealing ring (35) is provided with a support protrusion (354) between regions corresponding to the two interference fit portions (3531).

21. A water purifier, comprising: a filter (40), an exhaust member (70), a communicating vessel (30), a purified water tank (20), and a liquid level box (10), wherein

the exhaust member (70) is provided with a first chamber (E) communicating with atmosphere, and the first chamber (E) communicates with a filter liquid outlet of the filter (40);

the purified water tank (20) and the liquid level box (10) are both in communication with the atmosphere, and a water level sensor (12) configured to detect a water level is disposed in the liquid level box (10); and

the communicating vessel (30) is provided with a communicating vessel inner cavity (C), and the communicating vessel inner cavity (C) is in communication with the purified water tank (20), the liquid level box (10), and the first chamber (E), respectively.

22. The water purifier according to claim 21, wherein water filtered by the filter (40) is capable of being input into the exhaust member (70) and the communicating vessel (30) in sequence, and flowing into the liquid level box (10) and the purified water tank (20) through the communicating vessel inner cavity (C).

23. The water purifier according to claim 21, wherein an air outlet (13) in communication with the atmosphere is provided on the liquid level box (10); the exhaust member (70) is disposed on the liquid level box (10), and the first chamber (E) is in communication with a liquid level box inner cavity (A) of the liquid level box (10), so as to be in communication with the atmosphere through the air outlet (13).

24. The water purifier according to claim 23, wherein the exhaust member (70) is disposed on an outer side wall of the liquid level box (10), and opposing side walls of the exhaust member (70) and the liquid level box (10) are provided with communication ports (14) that are in communication with each other, so that the first chamber (E) is in communication with the liquid level box inner cavity (A).

25. The water purifier according to claim 24, wherein an exhaust member liquid inlet (72) and an exhaust member liquid outlet (73) are provided on the exhaust member (70), the communicating vessel (30) is provided with a communicating vessel liquid inlet (33) in communication with the communicating vessel inner cavity (C), the exhaust member liquid inlet (72) is in communication with the filter liquid outlet through a first pipeline (101), and the exhaust member liquid outlet (73) is in communication with the communicating vessel liquid inlet (33) of the communicating vessel (30) through a second pipeline (102); and

setting heights of the communication ports (14) on the exhaust member (70) and the liquid level box (10) relative to a bottom wall of the liquid level box (10) are higher than a setting height of the exhaust member liquid inlet (72).

26. The water purifier according to claim 25, wherein a diameter of the communicating vessel liquid inlet (33) is greater than 6 mm, and/or an inner diameter of the second pipeline (102) is greater than 6 mm.

27. The water purifier according to claim 25, wherein a liquid level box communication port (11) is provided on the liquid level box (10), and a purified water tank communication port (21) is provided on the purified water tank (20); and

the communicating vessel (30) is further provided with a second communication port (31) and a first communication port (32); the second communication port (31) is connected to the liquid level box communication port (11), and the first communication port (32) is connected to the purified water tank communication port (21).

28. The water purifier according to claim 27, wherein the communicating vessel (30) is further provided with a communicating vessel liquid outlet (38), and the communicating vessel liquid outlet (38) is in communication with a water taking port of the water purifier (100);
a setting height of the liquid level box communication port (11) relative to a bottom of the water purifier (100) is higher than a setting height of the communicating vessel liquid outlet (38).

29. The water purifier according to claim 28, wherein an extension tube (39) is provided on the communicating vessel (30), and the extension tube (39) penetrates through a wall portion of the communicating vessel (30) from an outer side of the communicating vessel (30) and extends to a bottom position of the communicating vessel inner cavity (C).

30. The water purifier according to claim 28, wherein a setting height of the communicating vessel liquid inlet (33) relative to the bottom of the water purifier (100) is higher than setting heights of the liquid level box communication port (11), the purified water tank communication port (21), and the communicating vessel liquid outlet (38);

optionally, a minimum cross-sectional area of a first communication channel (P) for communicating the purified water tank communication port (21) with the communicating vessel inner cavity (C) is greater than a minimum cross-sectional area of a second communication channel (Q) for communicating the liquid level box communication port (11) with the communicating vessel inner cavity (C);
optionally, a cross-sectional area of the first communication port (32) is greater than a cross-sectional area of the second communication port (31);
optionally, a cross-sectional area of the liquid level box communication port (11) is greater than or equal to 4.5 mm$^2$; and/or a cross-sectional area of the purified water tank communication port (21) is greater than 40 mm$^2$;
optionally, the water level sensor (12) is configured as a float sensor, and the water level sensor (12) includes a first float (121) and a second float (122);
in a height direction of the liquid level box (10) inside the liquid level box (10), a first upper baffle (123), a first lower baffle (124), a second upper baffle (125), and a second lower baffle (126) are provided in sequence, the first float (121) is located between the first upper baffle (123) and the first lower baffle (124), and the second float (122) is located between the second upper baffle (125) and the second lower baffle (126);
the water level sensor (12) is configured to be capable of detecting a liquid level in the liquid level box (10), when the first float (121) abuts the first upper baffle (123), determining that the liquid level is at a high liquid level, and when the second float (122) abuts the second lower baffle (126), determining that the liquid level is at a low liquid level;
optionally, the water purifier (100) further comprises a controller, a booster pump, a water pump (50), and a heater (55), the booster pump is configured to pump water to be purified into the filter (40), and the water pump (50) is configured to pump water from the liquid level box (10) and the purified water tank (20) to the heater (55) through the communicating vessel (30);
the controller is electrically connected to the water level sensor (12) and the booster pump, the controller is configured to control the booster pump to stop operating when the liquid level in the liquid level box (10) is at the high liquid level, and control the booster pump to start operating when the liquid level in the liquid level box (10) is below the high liquid level; the controller is further configured to control the water pump (50) to stop operating when the liquid level in the liquid level box (10) is at the low liquid level to stop water output;
optionally, the filter (40) includes a filter housing (42) and a filter body (43), the filter housing (42) is provided with a filter inner cavity with an open end, and the filter body (43) is disposed in the filter inner cavity;
the liquid level box (10) is in communication with the filter inner cavity of the filter (40) through a third pipeline (103);
optionally, an air outlet (13) in communication with the atmosphere is provided on the liquid level box (10), and a filter housing air inlet (41) in communication with the filter inner cavity is provided on the filter housing (42);
two ends of the third pipeline (103) are respectively connected to the air outlet (13) and the filter housing air inlet (41);
optionally, the water purifier (100) further comprises the water pump (50), the heater (55), and a water vapor separator (60);
the water pump (50) is in communication with the communicating vessel (30) and the heater (55), respectively, and is used for pumping water from the liquid level box (10) and the purified water tank (20) to the heater (55) through the communicating vessel (30);

the water vapor separator (60) is in communication with the heater (55), and is used for performing water vapor separation on water heated by the heater (55);

optionally, the water vapor separator (60) includes a water vapor separator air outlet (62) and a water vapor separator water outlet (61), the water vapor separator air outlet (62) is in communication with the third pipeline (103) through a fourth pipeline (104), and the water vapor separator water outlet (61) forms the water taking port of the water purifier (100);

optionally, the water purifier (100) further comprises a water collecting box (85) and a housing (80), the filter (40), the exhaust member (70), the communicating vessel (30), the liquid level box (10), the water pump (50), and the heater (55) are all disposed in the housing (80);

optionally, the water collecting box (85) is detachably disposed on an outer side of the housing (80), and a top wall of the water collecting box (85) is provided with a water collecting opening (82) that communicates to an interior of the water collecting box (85), and the purified water tank (20) is supported on the top wall of the water collecting box (85);

optionally, the water vapor separator (60) includes the water vapor separator water outlet (61), and the water vapor separator water outlet (61) forms the water taking port of the water purifier (100);

a portion of the water vapor separator (60) penetrates through the housing (80) and extends to the outer side of the housing (80), and the water vapor separator water outlet (61) is located on the portion of the water vapor separator (60) that extends to the outer side of the housing (80);

optionally, the water purifier (100) further comprises the booster pump, and the booster pump is configured to pump water to be purified into the filter body (43);

optionally, the communicating vessel inner cavity (C) is in communication with the filter liquid outlet of the filter (40), an exhaust port (301) in communication with the communicating vessel inner cavity (C) is provided at a top of the communicating vessel (30), and the exhaust port (301) is in communication with the atmosphere;

optionally, the communicating vessel (30) is provided with the communicating vessel liquid inlet (33) in communication with the communicating vessel inner cavity (C), and the filter liquid outlet of the filter (40) is in communication with the communicating vessel liquid inlet (33) through a pipeline;

optionally, the water purifier (100) further comprises the housing (80) and a sterilization unit (90);

the housing (80) is hollow inside and an outer wall of the housing (80) is provided with a supporting member (81);

the purified water tank (20) is detachably disposed on the supporting member (81), the purified water tank (20) is provided with the purified water tank communication port (21) and a first mounting groove (29), the purified water tank communication port (21) is used for communicating with a purified water supply interface of the water purifier (100), and a bottom wall of the first mounting groove (29) is provided with a first mounting port (291);

the sterilization unit (90) includes a lamp cover (91), a lamp cover locating assembly (92), and a sterilization lamp (96), the lamp cover locating assembly (92) includes a first locating member (93), which is annular in shape, one or more first sealing rings (94), and one or more second sealing rings (95); the lamp cover (91) is located in the first mounting groove (29), and a head of the lamp cover (91) is exposed into the purified water tank (20) through the first mounting port (291), the first locating member (93) sleeves an outer peripheral side of the lamp cover (91), the one or more first sealing rings (94) are sealingly disposed between the first locating member (93) and a side groove wall of the first mounting groove (29), and the one or more second sealing rings (95) are sealingly disposed between the first locating member (93) and the outer peripheral side of the lamp cover (91);

the sterilization lamp (96) is provided on the outer wall of the housing (80), and when the purified water tank (20) is supported on the supporting member (81), the sterilization lamp (96) extends into an inner side of the lamp cover (91);

optionally, the lamp cover locating assembly (92) further includes a sealing member (97), the sealing member (97) is connected to an end portion of the first locating member (93) facing the purified water tank (20), and abuts against a side of the one or more second sealing rings (95) facing the purified water tank (20);

optionally, a count of the one or more first sealing rings (94) is at least two, and the at least two first sealing rings (94) are arranged along an axial direction of the first locating member (93); and/or a count of the one or more second sealing rings (95) is at least two, and the at least two second sealing rings (95) are arranged along the axial direction of the first locating member (93);

optionally, the communicating vessel (30) is provided on the housing (80), the communicating vessel (30) is provided with a communicating vessel connection tube (34) in communication with the communicating vessel inner cavity (C), a sealing ring (35) is provided on an inner wall of the communicating vessel connection tube (34), two axial ends of the sealing ring (35) abut an inner wall of the communicating vessel connection tube (34), and a first sealing section (353) between the two axial ends of the sealing ring (35) and the inner wall of the communicating vessel connection tube (34) defines a water storage chamber (F) together;

the purified water tank (20) is provided with a purified water tank connection tube (22), and the purified water tank connection tube (22) is in communication with a purified water tank inner cavity (B) of the purified water tank (20); the purified water tank connection tube (22) is configured to be capable of being inserted into the communicating vessel connection tube (34) when the purified water tank connection tube (22) supported on the supporting member (81) to enable communication between the communicating vessel inner cavity (C) and the purified water tank inner cavity (B); and cause the first sealing section (353) to elastically deform toward an outer side in a radial direction of the first sealing section (353), so as to squeeze water in the water storage chamber (F) into the communicating vessel connection tube (34); and cause the first sealing section (353) to elastically reset toward an inner side in the radial direction of the first sealing section (353) when disengaged from the communicating vessel connection tube (34), so as to adsorb water in the communicating vessel connection tube (34) into the water storage chamber (F);

optionally, an inner peripheral surface of the first sealing section (353) is convexly provided at least two interference fit portions (3531), which are annular in shape, the at least two interference fit portions (3531) are arranged along an axial direction of the sealing ring (35) at intervals, and the at least two interference fit portions (3531) are used for interference fit with the purified water tank connection tube (22);

optionally, a count of the at least two interference fit portions (3531) is two, and a support protrusion (354) is provided on an outer peripheral surface of the sealing ring (35) between regions corresponding to the two interference fit portions (3531).

31. A split-type UV sterilization module, comprising: a lamp cover module (9-1) and a sterilization module (9-2), wherein the lamp cover module (9-1) includes a fixing ring (9-11), a transparent outer cover (9-12), a bottom cover (9-13), a first sealing ring (9-14) and a second sealing ring (9-15), the fixing ring (9-11) sleeves an outer side surface of the transparent outer cover (9-12), the bottom cover (9-13) is disposed on a lower end between the fixing ring (9-11) and the transparent outer cover (9-12), the first sealing ring (9-14) is fixedly disposed between the fixing ring (9-11) and the transparent outer cover (9-12), and the second sealing ring (9-15) is located on an outer side surface of the fixing ring (9-11); and the sterilization module (9-2) includes a UV lamp (9-21) and a fixing base (9-22), the UV lamp (9-21) is fixedly disposed on the fixing base (9-22), and the UV lamp (9-21) extends into an interior of the transparent outer cover (9-12).

32. The split-type UV sterilization module according to claim 31, wherein a material of the transparent outer cover (9-12) is quartz glass.

33. The split-type UV sterilization module according to claim 31, wherein a side surface of the fixing ring (9-11) is provided with a buckle slot (9-112), an outer side of the bottom cover (9-13) is fixedly provided with a clamping block (9-131), and the clamping block (9-131) is clamped in the buckle slot (9-112).

34. The split-type UV sterilization module according to claim 31, wherein an outer side surface of the fixing ring (9-11) is circumferentially provided with a sealing groove (9-111), and the second sealing ring (9-15) is located in the sealing groove (9-111).

35. The split-type UV sterilization module according to claim 31, wherein the sterilization module (9-2) further includes an inner cover (9-23) and an inner silicone base (9-24), wherein the inner cover (9-23) is fixedly disposed on the fixing base (9-22), an end of the inner cover (9-23) close to the fixing base (9-22) is provided with an opening, the UV lamp (9-21) is located inside the inner cover (9-23), and the inner silicone base (9-24) is fixedly disposed at the opening.

36. The split-type UV sterilization module according to claim 35, wherein the sterilization module (9-2) further includes a lead wire (9-25), the lead wire (9-25) penetrates through the fixing base (9-22) and the inner silicone base (9-24) in sequence, and is electrically connected to the UV lamp (9-21).

37. The split-type UV sterilization module according to claim 31, wherein an interior of the fixing base (9-22) is filled with resin.

38. The split-type UV sterilization module according to any one of claims 31-37, wherein the fixing base (9-22) is fixedly provided with a hanging lug (9-221), and the hanging lug (9-221) is provided with a through hole (9-222).

**FIG. 1**

**FIG. 2**

**FIG. 3**

44

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

FIG. 23

EP 4 772 480 A1

**FIG. 24a**

65

**FIG. 24b**

634

66

638

636

632

635

**FIG. 25**

**FIG. 26**

**FIG. 27**

**FIG. 28**

**FIG. 29**

**FIG. 30**

9-12

9-111

9-112

9-112

9-131

9-131

9-13

**FIG. 31**

## INTERNATIONAL SEARCH REPORT

| International application No. |
| --- |
| **PCT/CN2024/119672** |

| A. | CLASSIFICATION OF SUBJECT MATTER |
| --- | --- |

C02F1/00(2023.01)i;  B01D36/00(2006.01)i

According to International Patent Classification (IPC) or to both national classification and IPC

| B. | FIELDS SEARCHED |
| --- | --- |

Minimum documentation searched (classification system followed by classification symbols)

IPC: C02F,B01D

Documentation searched other than minimum documentation to the extent that such documents are included in the fields searched

Electronic data base consulted during the international search (name of data base and, where practicable, search terms used)

CNABS, CNTXT, VEN, ENTXT, CNKI, ELSEVIER: 灯, 密封, 净水机, 饮水机, 连通, 排气, 液位, lamp, light, seal, purif+, drink+, machine, connect+, communic+, exhaust, discharge, liquid, level

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 220845555 U (JIANGSU LEXY INTELLIGENT ELECTRIC APPLIANCE CO., LTD. et al.) 26 April 2024 (2024-04-26) <br> claims 1-22 | 1-10 |
| PX | CN 220845557 U (JIANGSU LEXY INTELLIGENT ELECTRIC APPLIANCE CO., LTD. et al.) 26 April 2024 (2024-04-26) <br> claims 1-29 | 11-20 |
| PX | CN 221275228 U (JIANGSU LEXY INTELLIGENT ELECTRIC APPLIANCE CO., LTD. et al.) 05 July 2024 (2024-07-05) <br> claims 1-31 | 21-30 |
| PX | CN 220317477 U (DONGGUAN EXIN ELECTRONIC TECHNOLOGY CO., LTD.) 09 January 2024 (2024-01-09) <br> claims 1-8 | 31-38 |
| Y | CN 219048097 U (GREE ELECTRIC APPLIANCES, INC. OF ZHUHAI) 23 May 2023 (2023-05-23) <br> description, paragraphs [48]-[73], and figures 1-16 | 1-10, 20, 30 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **23 December 2024** | **02 January 2025** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/119672** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 115886551 A (GREE ELECTRIC APPLIANCES, INC. OF ZHUHAI) 04 April 2023 (2023-04-04) description, paragraphs [48]-[73], and figures 1-16 | 1-10, 20, 30 |
| X | CN 218435076 U (HANGZHOU HUIYI TECHNOLOGY CO., LTD.) 03 February 2023 (2023-02-03) description, paragraphs [34]-[43], and figures 1-3 | 31-38 |
| Y | CN 218435076 U (HANGZHOU HUIYI TECHNOLOGY CO., LTD.) 03 February 2023 (2023-02-03) description, paragraphs [34]-[43], and figures 1-3 | 1-10, 20, 30 |
| X | CN 215161118 U (ZHEJIANG SUPOR KITCHEN & BATH APPLIANCE CO., LTD.) 14 December 2021 (2021-12-14) description, paragraphs [36]-[50], and figures 1-6 | 11-20 |
| Y | CN 215161118 U (ZHEJIANG SUPOR KITCHEN & BATH APPLIANCE CO., LTD.) 14 December 2021 (2021-12-14) description, paragraphs [36]-[50], and figures 1-6 | 10, 20-30 |
| Y | CN 106237856 A (KINGCLEAN ELECTRIC GREEN ENERGY (SUZHOU) CO., LTD.) 21 December 2016 (2016-12-21) description, paragraphs [28]-[40], and figures 1-6 | 10, 20-30 |
| A | CN 216549735 U (MA'ANSHAN JASON SEMICONDUCTOR CO., LTD.) 17 May 2022 (2022-05-17) entire document | 1-10, 20, 30-38 |
| A | CN 208684431 U (NINGBO SURFSUN HOME APPLIANCES MANUFACTURING CO., LTD.) 02 April 2019 (2019-04-02) entire document | 10-30 |
| A | DE 202013010177 U1 (YAO, TIEN-CHI) 21 November 2013 (2013-11-21) entire document | 1-38 |

Form PCT/ISA/210 (second sheet) (July 2022)

## INTERNATIONAL SEARCH REPORT

| International application No. |
|---|
| **PCT/CN2024/119672** |

**Box No. III     Observations where unity of invention is lacking (Continuation of item 3 of first sheet)**

This International Searching Authority found multiple inventions in this international application, as follows:

The International Searching Authority considers that the claims comprise two inventions:

independent claims 1 and 31 belong to invention I; and independent claims 11 and 21 belong to invention II. The same or corresponding technical feature between invention II and independent claim 1 is a water purification tank provided with a communication port; however, the technical feature is a conventional structure of a water purifier, that is, the technical feature cannot form a same or corresponding special technical feature. Invention II and independent claim 31 do not share a same or corresponding technical feature, and obviously do not share a same or corresponding special technical feature. Therefore, inventions I and II are not linked with each other, so that a single general inventive concept cannot be formed, and the inventions do not comply with PCT Rule 13.1.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

                         ☐ The additional search fees were accompanied by the applicant's protest but the applicable protest fee was not paid within the time limit specified in the invitation.

                         ☑ No protest accompanied the payment of additional search fees.

Form PCT/ISA/210 (continuation of first sheet) (July 2022)

INTERNATIONAL SEARCH REPORT
Information on patent family members

International application No.

**PCT/CN2024/119672**

| Patent document cited in search report | | | Publication date (day/month/year) | Patent family member(s) | | | Publication date (day/month/year) |
|---|---|---|---|---|---|---|---|
| CN | 220845555 | U | 26 April 2024 | None | | | |
| CN | 220845557 | U | 26 April 2024 | None | | | |
| CN | 221275228 | U | 05 July 2024 | None | | | |
| CN | 220317477 | U | 09 January 2024 | None | | | |
| CN | 219048097 | U | 23 May 2023 | None | | | |
| CN | 115886551 | A | 04 April 2023 | None | | | |
| CN | 218435076 | U | 03 February 2023 | None | | | |
| CN | 215161118 | U | 14 December 2021 | None | | | |
| CN | 106237856 | A | 21 December 2016 | None | | | |
| CN | 216549735 | U | 17 May 2022 | None | | | |
| CN | 208684431 | U | 02 April 2019 | None | | | |
| DE | 202013010177 | U1 | 21 November 2013 | TWM | 455457 | U | 21 June 2013 |
| | | | | US | 2014197089 | A1 | 17 July 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311216005
- CN 202311216117
- CN 202322356914
- CN 202322556286